# EUROPEAN PATENT APPLICATION

(11) **EP 4 451 153 A1**
(43) Date of publication of application: **23.10.2024**
(21) Application number: 22926882.6
(22) Date of filing: 20.12.2022
(51) Int. Cl.: G06F 21/62

(54) **CROSS-DEVICE APPLICATION MANAGEMENT METHOD, ELECTRONIC DEVICE, AND SYSTEM**

(30) Priority: 17.02.2022 CN 202210146506
(71) Applicant: Huawei Technologies Co., Ltd., Shenzhen, Guangdong 518129 (CN)
(72) Inventor: DING, Ran, Shenzhen, Guangdong 518129 (CN); REN, Bingfei, Shenzhen, Guangdong 518129 (CN); ZHANG, Yi, Shenzhen, Guangdong 518129 (CN)
(74) Representative: Goddar, Heinz J.
(86) International application number: PCT/CN2022/140266
(87) International publication number: WO 2023/155583

(57) **Abstract**

Embodiments of this application provide a cross-device application management method, an electronic device, and a system. The method includes: receiving first indication information sent by another electronic device connected to the electronic device, where the first indication information indicates that an application of a first electronic device is using a first resource or the first electronic device intercepts permission for an application of the first electronic device to use a first resource; outputting second prompt information, where the second prompt information is used to prompt a user whether to terminate or allow the permission for the application of the first electronic device to use the first resource; detecting an input of the user for terminating or allowing use of the first resource by the application of the first electronic device; and sending second indication information to the first electronic device in response to detecting the input, where the second indication information indicates the first electronic device to terminate or allow the permission for the application to use the first resource. In this way, leakage of privacy information of the user can be avoided, and user experience can be improved.

## Description

This application claims priority to Chinese Patent Application No. 202210146506.8, filed with the China National Intellectual Property Administration on February 17, 2022 and entitled "CROSS-DEVICE APPLICATION MANAGEMENT METHOD, ELECTRONIC DEVICE, AND SYSTEM", which is incorporated herein by reference in its entirety.

### TECHNICAL FIELD

Embodiments of this application relate to the terminal field, and more specifically, to a cross-device application management method, an electronic device, and a system.

### BACKGROUND

With development of electronic technologies and improvement of people's living standards, more applications (Applications, Apps) can be installed on electronic devices. In a process of running some apps on an electronic device, a system capability like a camera or a microphone of the electronic device may need to be used to provide a corresponding function for a user. Generally, when the electronic device starts an app for the first time, the app requests the user to agree to a privacy statement of the app, and requests the user to grant, to the app, permission to invoke one or more system capabilities. To quickly access the app, the user usually directly agrees to the privacy statement and grants the corresponding permission to the app without reading the request of the app carefully.

Consequently, some apps of the electronic device may invoke the system capability of the electronic device without the user's knowledge, to obtain privacy information of the user (for example, invoke a positioning apparatus to collect location information of the user). However, in this case, if the user does not view a use status of the electronic device in a timely manner, a security risk of leaking the privacy information of the user may occur.

### SUMMARY

Embodiments of this application provide a cross-device application management method, an electronic device, and a system, to avoid leakage of privacy information of a user, and help improve user experience.

According to a first aspect, a system is provided. The system includes a first electronic device and a second electronic device. The first electronic device is configured to send first indication information to the second electronic device, where the first indication information indicates that an application of the first electronic device is using a first resource; the second electronic device is configured to output second prompt information, where the second prompt information is used to prompt a user whether to terminate permission for the application of the first electronic device to use the first resource; the second electronic device is further configured to detect an input of the user for terminating the permission for the application of the first electronic device to use the first resource; the second electronic device is further configured to send second indication information to the first electronic device in response to detecting the input, where the second indication information indicates the first electronic device to terminate the permission for the application to use the first resource; and the first electronic device is further configured to terminate, in response to the second indication information, the permission for the application to use the first resource.

In this embodiment of this application, if the application of the first electronic device uses the first resource, the first electronic device may send the first indication information to the second electronic device, so that the second electronic device may output the second prompt information to remind the user that the application of the first electronic device uses the first resource. In this way, the user may determine, by using the second electronic device, whether to terminate the permission for the application of the first electronic device to use the first resource, and when the user terminates the permission for the application of the first electronic device to use the first resource, the second electronic device provides an indication to the first electronic device. Further, the first electronic device terminates the permission for the application of the first electronic device to use the first resource. In this way, leakage of privacy information of the user is avoided through cooperative work between the first electronic device and the second electronic device, and this helps improve user experience.

With reference to the first aspect, in some implementations of the first aspect, the second electronic device is further configured to display a second indicator in a status bar of the second electronic device in response to the first indication information, where the second indicator indicates a type of the first resource, or the second indicator indicates a type of the first resource and a type identifier of the first electronic device.

The second electronic device displays the second indicator in the status bar of the second electronic device in response to the first indication information, so that the user can learn of, by using the second indicator, the type of the used first resource, or the device that uses the first resource and the type of the used first resource. This helps further improve user experience.

With reference to the first aspect, in some implementations of the first aspect, the second electronic device is further specifically configured to display a setting bar in response to detecting an operation of the user on the second indicator, where the second prompt information is displayed in the setting bar; the second electronic device is further specifically configured to display a window in response to detecting an operation of the user on the second prompt information, where the window includes a terminate control, and the terminate control is used to trigger termination of the permission for the application of the first electronic device to use the first resource; and the second electronic device is further specifically configured to send the second indication information to the first electronic device in response to an operation of the user on the terminate control.

With reference to the first aspect, in some implementations of the first aspect, the second electronic device is further specifically configured to display a terminate control in a notification bar in response to detecting an operation of the user on the notification bar, where the terminate control is used to trigger termination of the permission for the application of the first electronic device to use the first resource, and the second prompt information is displayed in the notification bar; and the second electronic device is further specifically configured to send the second indication information to the first electronic device in response to detecting an operation of the user on the terminate control.

With reference to the first aspect, in some implementations of the first aspect, the second electronic device is further configured to display a control bar in response to detecting an operation of opening the control bar by the user, where the second prompt information and a second control are displayed in the control bar, and the second control is used to disable or enable use of a first resource of a same type as the first resource; the second electronic device is further configured to display a setting bar in response to detecting an operation of the user on the second control, where detailed information of the second prompt information is displayed in the setting bar; the second electronic device is further configured to display a window in response to detecting an operation of the user on the detailed information displayed in the setting bar, where the window includes a terminate control, and the terminate control is used to trigger termination of the permission for the application to use the first resource; and the second electronic device is further specifically configured to send the second indication information to the first electronic device in response to detecting an operation of the user on the terminate control.

With reference to the first aspect, in some implementations of the first aspect, the second electronic device is further specifically configured to display a window in response to the first indication information, where the second prompt information and a terminate control are displayed in the window, and the terminate control is used to trigger termination of the permission for the application to use the first resource; and the second electronic device is further specifically configured to send the second indication information to the first electronic device in response to detecting an operation of the user on the terminate control.

With reference to the first aspect, in some implementations of the first aspect, the first electronic device is further configured to send third indication information to the second electronic device, where the third indication information indicates that the first electronic device has terminated the permission for the application to use the first resource; and the second electronic device is further configured to: in response to the third indication information, no longer output the second prompt information.

With reference to the first aspect, in some implementations of the first aspect, the first electronic device is further configured to send the first indication information to the second electronic device in response to detecting that a preset condition is met, where the preset condition includes at least one of the following: A distance between the first electronic device and the second electronic device is less than or equal to a preset distance; the first electronic device and the second electronic device are logged in with a same account; the first electronic device and the second electronic device are connected to a same Wi-Fi network; a short-range connection has been established between the first electronic device and the second electronic device; the second electronic device is in a worn state; the first electronic device is in an unlocked state, and the first electronic device is provided with a password lock; the second electronic device is in an unlocked state, and the second electronic device is provided with a password lock; the first electronic device is not being operated; the application runs in a background of the first electronic device; or the application runs in a foreground of the first electronic device, and the first electronic device is not being operated.

In comprehensive consideration of various actual situations, when it is determined that the application of the first electronic device needs to be managed in a cross-device manner, the first electronic device may provide an indication to the second electronic device, so that the user manages the application of the first electronic device by using the second electronic device, to further avoid leakage of the privacy information of the user. This helps further improve user experience. With reference to the first aspect, in some implementations of the first aspect, the first electronic device is further specifically configured to disable a first control in response to the second indication information, to terminate the permission for the application to use the first resource, where the first control is displayed in a control bar of the first electronic device, or the first control is displayed in a setting bar of the first electronic device.

After the first electronic device receives the indication information indicating that the user terminates, in a cross-device manner, the permission for the application of the first electronic device to use the first resource, the first electronic device may automatically disable a corresponding control, to terminate the permission for the application to use the first resource, so as to implement cross-device management of use of the application of the first electronic device. In this way, the user does not need to manually manage the application of the first electronic device. This helps further improve user experience.

With reference to the first aspect, in some implementations of the first aspect, the first electronic device is further configured to display a first indicator in a status bar of the first electronic device, where the first indicator indicates the type of the first resource.

With reference to the first aspect, in some implementations of the first aspect, when the second indicator indicates the type of the first resource, the first indicator and the second indicator have different display effects.

When the second indicator indicates the type of the first resource, the display effects of the first indicator and the second indicator are set to be different. In this way, the user can learn of, by using the indicators, whether the first resource is used by this device or another device. This helps further improve user experience.

With reference to the first aspect, in some implementations of the first aspect, a display location of the first indicator relative to the status bar of the first electronic device is different from a display location of the second indicator relative to the status bar of the second electronic device; or a display color of the first indicator is different from a display color of the second indicator.

With reference to the first aspect, in some implementations of the first aspect, the first electronic device is further specifically configured to: in response to the second indication information, permanently or once terminate the permission for the application to use the first resource.

According to a second aspect, a system is provided. The system includes a first electronic device and a second electronic device. The first electronic device is configured to send first indication information to the second electronic device, where the first indication information indicates that the first electronic device intercepts permission for an application of the first electronic device to use a first resource; the second electronic device is configured to output second prompt information, where the second prompt information is used to prompt a user whether to allow the permission for the application of the first electronic device to use the first resource; the second electronic device is further configured to detect an input of the user for allowing the permission for the application of the first electronic device to use the first resource; the second electronic device is further configured to send second indication information to the first electronic device in response to detecting the input, where the second indication information indicates to allow the permission for the application of the first electronic device to use the first resource; and the first electronic device is further configured to allow, in response to the second indication information, the permission for the application to use the first resource.

In this embodiment of this application, if the first electronic device intercepts the permission for the application of the first electronic device to use the first resource, the first electronic device may send the first indication information to the second electronic device, so that the second electronic device may output the second prompt information to remind the user that the first electronic device intercepts the permission for the application of the first electronic device to use the first resource. In this way, the user may determine, by using the second electronic device, whether to allow the permission for the application of the first electronic device to use the first resource, and when the user allows the permission for the application of the first electronic device to use the first resource, the second electronic device provides an indication to the first electronic device. Further, the first electronic device allows the permission for the application of the first electronic device to use the first resource. In this way, leakage of privacy information of the user is avoided through cooperative work between the first electronic device and the second electronic device, and this helps improve user experience.

With reference to the second aspect, in some implementations of the second aspect, the second electronic device is further specifically configured to display a window in response to the first indication information, where the second prompt information and an allow control are displayed in the window, and the allow control is used to allow the permission for the application of the first electronic device to use the first resource; and the second electronic device is further specifically configured to send the second indication information to the first electronic device in response to detecting an operation of the user on the allow control.

With reference to the second aspect, in some implementations of the second aspect, the second electronic device is further specifically configured to display an allow control in a notification bar in response to detecting an operation of the user on the notification bar, where the allow control is used to allow the permission for the application of the first electronic device to use the first resource, and the second prompt information is displayed in the notification bar; and the second electronic device is further specifically configured to send the second indication information to the first electronic device in response to detecting an operation of the user on the allow control.

With reference to the second aspect, in some implementations of the second aspect, the first electronic device is further configured to send third indication information to the second electronic device, where the third indication information indicates that the first electronic device has allowed the permission for the application to use the first resource; and the second electronic device is further configured to: in response to the third indication information, no longer output the second prompt information.

With reference to the second aspect, in some implementations of the second aspect, the first electronic device is further configured to send the first indication information to the second electronic device in response to detecting that a preset condition is met, where the preset condition includes at least one of the following: A distance between the first electronic device and the second electronic device is less than or equal to a preset distance; the first electronic device and the second electronic device are logged in with a same account; the first electronic device and the second electronic device are connected to a same Wi-Fi network; a short-range connection has been established between the first electronic device and the second electronic device; the second electronic device is in a worn state; the first electronic device is in an unlocked state, and the first electronic device is provided with a password lock; the second electronic device is in an unlocked state, and the second electronic device is provided with a password lock; the first electronic device is not being operated; the application runs in a background of the first electronic device; or the application runs in a foreground of the first electronic device, and the first electronic device is not being operated.

In comprehensive consideration of various actual situations, when it is determined that the application of the first electronic device needs to be managed in a cross-device manner, the first electronic device may provide an indication to the second electronic device, so that the user manages the application of the first electronic device by using the second electronic device, to further avoid leakage of the privacy information of the user. This helps further improve user experience.

With reference to the second aspect, in some implementations of the second aspect, the first electronic device is further specifically configured to enable a first control in response to the second indication information, to allow the permission for the application to use the first resource.

After the first electronic device receives the indication information indicating that the user allows, in a cross-device manner, the permission for the application of the first electronic device to use the first resource, the first electronic device may automatically enable a corresponding control, to allow the permission for the application to use the first resource, so as to implement cross-device management of use of the application of the first electronic device. In this way, the user does not need to manually manage the application of the first electronic device. This helps further improve user experience.

With reference to the second aspect, in some implementations of the second aspect, the first electronic device is further specifically configured to: in response to the second indication information, permanently or once allow the permission for the application to use the first resource.

According to a third aspect, a cross-device application management method is provided. The method is applied to a first electronic device, the first electronic device is connected to a second electronic device, and the method includes: sending first indication information to the second electronic device, where the first indication information indicates that an application of the first electronic device is using a first resource; receiving second indication information sent by the second electronic device, where the second indication information indicates the first electronic device to terminate permission for the application to use the first resource; and terminating, in response to the second indication information, the permission for the application to use the first resource.

In this embodiment of this application, if the application of the first electronic device uses the first resource, the first electronic device may send the first indication information to the second electronic device, so that the user may determine, by using the second electronic device, whether to terminate the permission for the application of the first electronic device to use the first resource, and when the second electronic device provides an indication that the user terminates the permission for the application of the first electronic device to use the first resource, the first electronic device terminates the permission for the application of the first electronic device to use the first resource. In this way, leakage of privacy information of the user is avoided through cooperative work between the first electronic device and the second electronic device, and this helps improve user experience.

With reference to the third aspect, in some implementations of the third aspect, the method further includes: sending third indication information to the second electronic device, where the third indication information indicates that the first electronic device has terminated the permission for the application to use the first resource.

With reference to the third aspect, in some implementations of the third aspect, the method further includes: sending the first indication information to the second electronic device in response to detecting that a preset condition is met, where the preset condition includes at least one of the following: A distance between the first electronic device and the second electronic device is less than or equal to a preset distance; the first electronic device and the second electronic device are logged in with a same account; the first electronic device and the second electronic device are connected to a same Wi-Fi network; a short-range connection has been established between the first electronic device and the second electronic device; the second electronic device is in a worn state; the first electronic device is in an unlocked state, and the first electronic device is provided with a password lock; the second electronic device is in an unlocked state, and the second electronic device is provided with a password lock; the first electronic device is not being operated; the application runs in a background of the first electronic device; or the application runs in a foreground of the first electronic device, and the first electronic device is not being operated.

With reference to the third aspect, in some implementations of the third aspect, the terminating, in response to the second indication information, the permission for the application to use the first resource includes: disabling a first control in response to the second indication information, to terminate the permission for the application to use the first resource, where the first control is displayed in a control bar of the first electronic device, or the first control is displayed in a setting bar of the first electronic device.

With reference to the third aspect, in some implementations of the third aspect, the method further includes: displaying a first indicator in a status bar of the first electronic device, where the first indicator indicates a type of the first resource.

With reference to the third aspect, in some implementations of the third aspect, the terminating, in response to the second indication information, the permission for the application to use the first resource includes: in response to the second indication information, permanently or once terminating the permission for the application to use the first resource.

According to a fourth aspect, a cross-device application management method is provided. The method is applied to a second electronic device, the second electronic device is connected to a first electronic device, and the method includes: receiving first indication information sent by the first electronic device, where the first indication information indicates that an application of the first electronic device is using a first resource; outputting second prompt information, where the second prompt information is used to prompt a user whether to terminate permission for the application of the first electronic device to use the first resource; detecting an input of the user for terminating use of the first resource by the application of the first electronic device; and sending second indication information to the first electronic device in response to detecting the input, where the second indication information indicates the first electronic device to terminate the permission for the application to use the first resource.

In this embodiment of this application, after the second electronic device receives the information that is from the first electronic device and that indicates that the application of the first electronic device uses the first resource, the second electronic device may output the second prompt information to remind the user that the application of the first electronic device uses the first resource. Further, the user may determine, by using the second electronic device, whether to terminate the permission for the application of the first electronic device to use the first resource, and when the user terminates the permission for the application of the first electronic device to use the first resource, the second electronic device provides an indication to the first electronic device, so that the first electronic device terminates the permission for the application of the first electronic device to use the first resource. In this way, leakage of privacy information of the user is avoided through cooperative work between the second electronic device and the second electronic device, and this helps improve user experience.

With reference to the fourth aspect, in some implementations of the fourth aspect, the method further includes: displaying a second indicator in a status bar of the second electronic device in response to the first indication information, where the second indicator indicates a type of the first resource, or the second indicator indicates a type of the first resource and a type identifier of the first electronic device.

With reference to the fourth aspect, in some implementations of the fourth aspect, the outputting second prompt information includes: displaying a setting bar in response to detecting an operation of the user on the second indicator, where the second prompt information is displayed in the setting bar; and the detecting an input of the user for terminating use of the first resource by the application of the first electronic device includes: displaying a window in response to detecting an operation of the user on the second prompt information, where the window includes a terminate control, and the terminate control is used to trigger termination of the permission for the application of the first electronic device to use the first resource; and detecting an operation of the user on the terminate control.

With reference to the fourth aspect, in some implementations of the fourth aspect, the outputting second prompt information includes: displaying the second prompt information in a notification bar; and the detecting an input of the user for terminating use of the first resource by the application of the first electronic device includes: displaying a terminate control in the notification bar in response to detecting an operation of the user on the notification bar, where the terminate control is used to trigger termination of the permission for the application of the first electronic device to use the first resource; and detecting an operation of the user on the terminate control.

With reference to the fourth aspect, in some implementations of the fourth aspect, the outputting second prompt information includes: displaying a control bar in response to detecting an operation of opening the control bar by the user, where the second prompt information and a second control are displayed in the control bar, and the second control is used to disable or enable use of a first resource of a same type as the first resource; and the detecting an input of the user for terminating use of the first resource by the application of the first electronic device includes: displaying a setting bar in response to detecting an operation of the user on the second control, where detailed information of the second prompt information is displayed in the setting bar; displaying a window in response to detecting an operation of the user on the detailed information displayed in the setting bar, where the window includes a terminate control, and the terminate control is used to trigger termination of the permission for the application to use the first resource; and detecting an operation of the user on the terminate control.

With reference to the fourth aspect, in some implementations of the fourth aspect, the outputting second prompt information includes: displaying a window in response to the first indication information, where the second prompt information and a terminate control are displayed in the window, and the terminate control is used to trigger termination of the permission for the application to use the first resource; and the detecting an input of the user for terminating use of the first resource by the application of the first electronic device includes: detecting an operation of the user on the terminate control.

With reference to the fourth aspect, in some implementations of the fourth aspect, the method further includes: receiving third indication information sent by the first electronic device, where the third indication information indicates that the first electronic device has terminated the permission for the application to use the first resource; and in response to the third indication information, no longer outputting the second prompt information.

According to a fifth aspect, a cross-device application management method is provided. The method is applied to a first electronic device, the first electronic device is connected to a second electronic device, and the method includes: sending first indication information to the second electronic device, where the first indication information indicates that the first electronic device intercepts permission for an application of the first electronic device to use a first resource; receiving second indication information sent by the first electronic device, where the second indication information indicates to allow the permission for the application of the first electronic device to use the first resource; and allowing, in response to the second indication information, the permission for the application to use the first resource.

In this embodiment of this application, if the application of the first electronic device uses the first resource, the first electronic device may send the first indication information to the second electronic device, so that the user may determine, by using the second electronic device, whether to allow the permission for the application of the first electronic device to use the first resource, and when the second electronic device provides an indication that the user allows the permission for the application of the first electronic device to use the first resource, the first electronic device allows the permission for the application of the first electronic device to use the first resource. In this way, leakage of privacy information of the user is avoided through cooperative work between the first electronic device and the second electronic device, and this helps improve user experience.

With reference to the fifth aspect, in some implementations of the fifth aspect, the method further includes: sending third indication information to the second electronic device, where the third indication information indicates that the first electronic device has allowed the permission for the application to use the first resource.

With reference to the fifth aspect, in some implementations of the fifth aspect, the method further includes: sending the first indication information to the second electronic device in response to detecting that a preset condition is met, where the preset condition includes at least one of the following: A distance between the first electronic device and the second electronic device is less than or equal to a preset distance; the first electronic device and the second electronic device are logged in with a same account; the first electronic device and the second electronic device are connected to a same Wi-Fi network; a short-range connection has been established between the first electronic device and the second electronic device; the second electronic device is in a worn state; the first electronic device is in an unlocked state, and the first electronic device is provided with a password lock; the second electronic device is in an unlocked state, and the second electronic device is provided with a password lock; the first electronic device is not being operated; the application runs in a background of the first electronic device; or the application runs in a foreground of the first electronic device, and the first electronic device is not being operated.

With reference to the fifth aspect, in some implementations of the fifth aspect, the method further includes: enabling a first control in response to the second indication information, to allow the permission for the application to use the first resource, where the first control is displayed in a control bar of the first electronic device, or the first control is displayed in a setting bar of the first electronic device.

With reference to the fifth aspect, in some implementations of the fifth aspect, the method further includes: in response to the second indication information, permanently or once allowing the permission for the application to use the first resource.

According to a sixth aspect, a cross-device application management method is provided. The method is applied to a second electronic device, the second electronic device is connected to a first electronic device, and the method includes: receiving first indication information sent by the first electronic device, where the first indication information indicates that the first electronic device intercepts permission for an application of the first electronic device to use a first resource; outputting second prompt information, where the second prompt information is used to prompt a user whether to allow the permission for the application of the first electronic device to use the first resource; detecting an input of the user for allowing the permission for the application of the first electronic device to use the first resource; and sending second indication information to the first electronic device in response to detecting the input, where the second indication information indicates to allow the permission for the application of the first electronic device to use the first resource.

In this embodiment of this application, after the second electronic device receives the information that is from the first electronic device and that indicates that the permission for the application of the first electronic device to use the first resource is intercepted, the second electronic device may output the second prompt information to remind the user that the permission for the application of the first electronic device to use the first resource is intercepted. Further, the user may determine, by using the second electronic device, whether to allow the permission for the application of the first electronic device to use the first resource, and when the user allows the permission for the application of the first electronic device to use the first resource, the second electronic device provides an indication to the first electronic device, so that the first electronic device allows the permission for the application of the first electronic device to use the first resource. In this way, leakage of privacy information of the user is avoided through cooperative work between the second electronic device and the second electronic device, and this helps improve user experience.

With reference to the sixth aspect, in some implementations of the sixth aspect, the outputting second prompt information includes: displaying a window in response to the first indication information, where the second prompt information and an allow control are displayed in the window, and the allow control is used to allow the permission for the application of the first electronic device to use the first resource; and the detecting an input of the user for allowing the permission for the application of the first electronic device to use the first resource includes: detecting an operation of the user on the allow control.

With reference to the sixth aspect, in some implementations of the sixth aspect, the outputting second prompt information includes: displaying the second prompt information in a notification bar; and the detecting an input of the user for allowing the permission for the application of the first electronic device to use the first resource includes: displaying an allow control in the notification bar in response to detecting an operation of the user on the notification bar, where the allow control is used to allow the permission for the application of the first electronic device to use the first resource; and detecting an operation of the user on the allow control.

With reference to the sixth aspect, in some implementations of the sixth aspect, the method further includes: receiving third indication information sent by the first electronic device, where the third indication information indicates that the first electronic device has allowed the permission for the application to use the first resource; and in response to the third indication information, no longer outputting the second prompt information.

According to a seventh aspect, an apparatus is provided. The apparatus is connected to a second electronic device, and the apparatus includes: a sending unit, configured to send first indication information to the second electronic device, where the first indication information indicates that an application of a first electronic device is using a first resource; a receiving unit, configured to receive second indication information sent by the second electronic device, where the second indication information indicates the first electronic device to terminate permission for the application to use the first resource; and a termination unit, configured to terminate, in response to the second indication information, the permission for the application to use the first resource.

According to an eighth aspect, an apparatus is provided. The apparatus is connected to a first electronic device, and the apparatus includes: a receiving unit, configured to receive first indication information sent by the first electronic device, where the first indication information indicates that an application of the first electronic device is using a first resource; an output unit, configured to output second prompt information, where the second prompt information is used to prompt a user whether to terminate permission for the application of the first electronic device to use the first resource; a detection unit, configured to detect an input of the user for terminating use of first resource by the application of the first electronic device; and a sending unit, configured to send second indication information to the first electronic device in response to detecting the input, where the second indication information indicates the first electronic device to terminate the permission for the application to use the first resource.

According to a ninth aspect, an apparatus is provided. The apparatus is connected to a second electronic device, and the apparatus includes: a sending unit, configured to send first indication information to the second electronic device, where the first indication information indicates that a first electronic device intercepts permission for an application of the first electronic device to use a first resource; a receiving unit, configured to receive second indication information sent by the first electronic device, where the second indication information indicates to allow the permission for the application of the first electronic device to use the first resource; and an allowing unit, configured to allow, in response to the second indication information, the permission for the application to use the first resource.

According to a tenth aspect, an apparatus is provided. The apparatus is connected to a first electronic device, and the apparatus includes: a receiving unit, configured to receive first indication information sent by the first electronic device, where the first indication information indicates that the first electronic device intercepts permission for an application of the first electronic device to use a first resource; an output unit, configured to output second prompt information, where the second prompt information is used to prompt a user whether to allow the permission for the application of the first electronic device to use the first resource; a detection unit, configured to detect an input of the user for allowing the permission for the application of the first electronic device to use the first resource; and a sending unit, configured to send second indication information to the first electronic device in response to detecting the input, where the second indication information indicates to allow the permission for the application of the first electronic device to use the first resource.

According to an eleventh aspect, an electronic device is provided, including one or more processors, a memory, and one or more computer programs. The one or more computer programs are stored in the memory. The one or more computer programs include instructions. When the instructions are executed by the electronic device, the electronic device is enabled to perform the method in any possible implementation of the third aspect or the fifth aspect.

According to a twelfth aspect, an electronic device is provided, including one or more processors, one or more memories, and one or more computer programs. The one or more computer programs are stored in the one or more memories. The one or more computer programs include instructions. When the instructions are executed by the electronic device, the electronic device is enabled to perform the method in any possible implementation of the fourth aspect or the sixth aspect.

According to a thirteenth aspect, a computer program product including instructions is provided. When the computer program product runs on an electronic device, the electronic device is enabled to perform the method according to the third aspect or the fifth aspect; or when the computer program product runs on an electronic device, the electronic device is enabled to perform the method according to the fourth aspect or the sixth aspect.

According to a fourteenth aspect, a computer-readable storage medium is provided, and the storage medium may be non-volatile. The storage medium includes instructions, and when the instructions are run on an electronic device, the electronic device is enabled to perform the method according to the third aspect or the fifth aspect; or when the instructions are run on an electronic device, the electronic device is enabled to perform the method according to the fourth aspect or the sixth aspect.

According to a fifteenth aspect, a chip is provided, and is configured to execute instructions. When the chip runs, the chip performs the method according to the third aspect or the fifth aspect, or the chip performs the method according to the fourth aspect or the sixth aspect.

### BRIEF DESCRIPTION OF DRAWINGS

FIG. 1 is a diagram of a hardware structure of an electronic device according to an embodiment of this application;
FIG. 2 is a block diagram of a software structure of an electronic device according to an embodiment of this application;
FIG. 3(a) to FIG. 3(c) show a group of GUIs of a mobile phone according to an embodiment of this application;
FIG. 4(a) to FIG. 4(c) show another group of GUIs of a mobile phone according to an embodiment of this application;
FIG. 5(a) to FIG. 5(c) show another group of GUIs of a mobile phone according to an embodiment of this application;
FIG. 6(a) and FIG. 6(b) show another group of GUIs of a mobile phone according to an embodiment of this application;
FIG. 7(a) and FIG. 7(b) show another group of GUIs of a mobile phone according to an embodiment of this application;
FIG. 8 is an example diagram of an application scenario 200A according to an embodiment of this application;
FIG. 9 shows a group of GUIs of a mobile phone according to an embodiment of this application;
FIG. 10(a) to FIG. 10(d) show another group of GUIs of a mobile phone according to an embodiment of this application;
FIG. 11(a) to FIG. 11(d) show another group of GUIs of a mobile phone according to an embodiment of this application;
FIG. 12(a) to FIG. 12(c) show another group of GUIs of a mobile phone according to an embodiment of this application;
FIG. 13(a) to FIG. 13(c) show another group of GUIs of a mobile phone according to an embodiment of this application;
FIG. 14 shows a GUI of a mobile phone according to an embodiment of this application;
FIG. 15 shows another GUI of a mobile phone according to an embodiment of this application;
FIG. 16(a) and FIG. 16(b) show other GUIs of a mobile phone according to an embodiment of this application;
FIG. 17 is an example diagram of an application scenario 200B according to an embodiment of this application;
FIG. 18 is a diagram of interaction between a user and a sound box according to an embodiment of this application;
FIG. 19 is an example diagram of an application scenario 200C according to an embodiment of this application;
FIG. 20 is a diagram of interaction between a user and a headset according to an embodiment of this application;
FIG. 21 is an example diagram of an application scenario 200D according to an embodiment of this application;
FIG. 22 shows a group of GUIs of a smart watch according to an embodiment of this application;
FIG. 23 is a schematic flowchart of a cross-device application management method according to an embodiment of this application;
FIG. 24 is a schematic flowchart of another cross-device application management method according to an embodiment of this application;
FIG. 25 is a block diagram of an apparatus according to an embodiment of this application;
FIG. 26 is a block diagram of another apparatus according to an embodiment of this application; and
FIG. 27 is a diagram of a structure of an electronic device according to an embodiment of this application.

### DESCRIPTION OF EMBODIMENTS

The following describes technical solutions of embodiments in this application with reference to accompanying drawings.

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "multiple" or "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "a plurality of" means two or more.

A method provided in embodiments of this application may be applied to an electronic device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

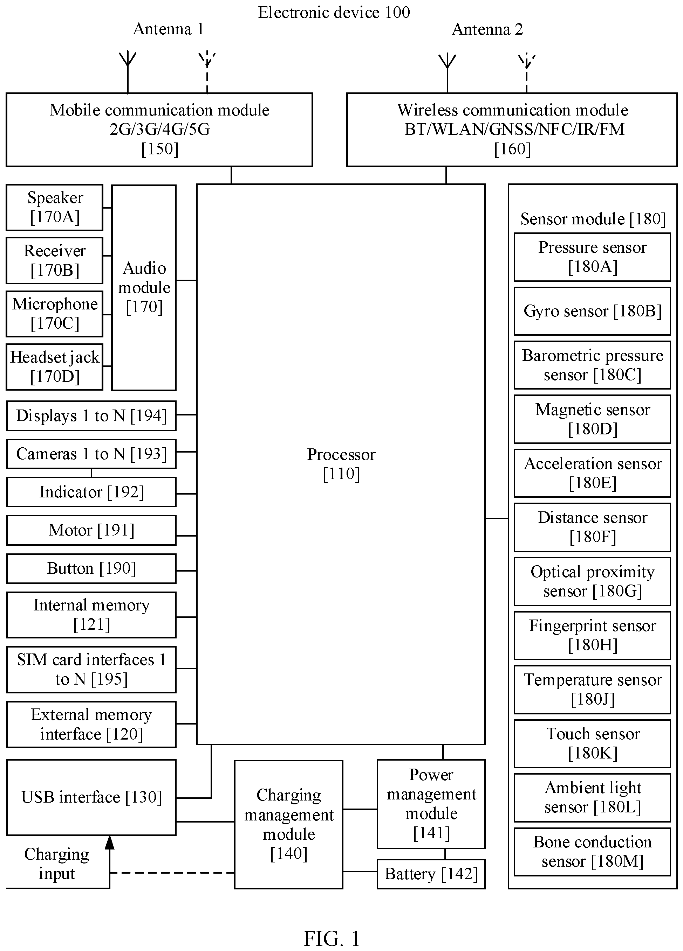

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement the photographing function of the electronic device 100. The processor 110 communicates with the display 194 through the DSI interface, to implement a display function of the electronic device 100.

The GPIO interface may be configured through software. The GPIO interface may be configured for control signals or data signals. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, a MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device, or may be configured to connect to a headset for playing audio through the headset. The interface may be further configured to connect to another electronic device, for example, an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and is then transferred to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and connects the display 194 to the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like an RGB format or a YUV format. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy, or the like.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100 may be implemented through the NPU, for example, image recognition, facial recognition, voice recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code, and the executable program code includes instructions. The processor 110 runs the instructions stored in the internal memory 121, to perform various function applications of the electronic device 100 and data processing. The internal memory 121 may include a program storage area and a data storage area. The program storage area may store an operating system, an app required by at least one function (for example, a sound playing function or an image playing function), and the like. The data storage area may store data (for example, audio data, a phone book, and the like) created in a process of using the electronic device 100, and the like. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode through the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messaging application icon, an instruction for viewing an SMS message is performed. When a touch operation whose touch operation intensity is greater than or equal to the first pressure threshold is performed on the Messaging application icon, an instruction for creating a new SMS message is performed.

The gyro sensor 180B may be configured to determine a moving posture of the electronic device 100. In some embodiments, an angular velocity of the electronic device 100 around three axes (that is, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations of the electronic device 100 in various directions (usually on three axes). When the electronic device 100 is still, a magnitude and a direction of gravity may be detected. The acceleration sensor may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor near the temperature sensor 180J, to reduce power consumption and implement thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a touch panel. The touch sensor 180K may be disposed on the display 194. The touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in the headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or of different types. The SIM card interface 195 may be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an embedded-SIM (embedded-SIM, eSIM) card, namely, an embedded-SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM) card, a universal integrated circuit card (universal integrated circuit card, UICC), and the like.

A software system of the electronic device 100 may use a layered architecture, an event-driven architecture, a microkernel architecture, a microservice architecture, or a cloud architecture. In this embodiment of this application, an Android system with a layered architecture is used as an example to describe a software structure of the electronic device 100.

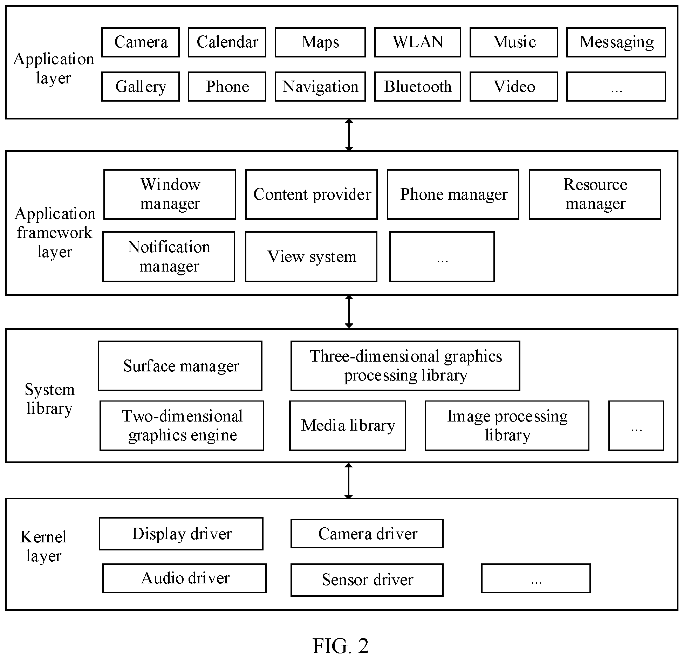

FIG. 2 is a block diagram of the software structure of the electronic device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a notification icon of Messaging may include a text display view and a picture display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application running on a background or a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be invoked by a Java language and a kernel library of Android.

The application layer and the application framework layer run in the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

For ease of understanding, some concepts in this application are first described herein.

### 1. Foreground and background

An app may run in a foreground of the electronic device, or may run in a background of the electronic device. When the app runs in the foreground of the electronic device, the electronic device 100 may display a user interface of the app on the display. A user may interact with the app by using a control on the user interface of the app. A case in which the app runs in the electronic device but does not run in the foreground is a case in which the app runs in the background of the electronic device. The case in which the app runs in the background of the electronic device may include that a process of the app exists in the electronic device, but the user interface of the app is not displayed on the display. Because the user interface of the app running in the background is not displayed on the display, the user usually cannot directly interact with the app running in the background. The background may also be referred to as a "non-foreground".

There may be one or more apps running in the foreground of the electronic device, and there may also be one or more apps running in the background of the electronic device. When one or more apps run in the foreground of the electronic device, one or more apps may run in the background of the electronic device.

### 2. System capability

The system capability may include a function provided by a system application (application, App) in the electronic device and a capability of a hardware apparatus of the electronic device. The system app may be an app provided or developed by a manufacturer of the electronic device. The manufacturer of the electronic device may include a maker, a supplier, a provider, an operator, or the like of the electronic device.

For example, the system app in the electronic device may include a phone app, a messaging app, a contacts app, a calendar app, a camera app, and the like. The phone app may provide a function of making a call, a function of reading a call status and a device identifier, and the like. The identifier may include a SIM card number of the electronic device, an identity (identity, ID) of the electronic device, and the like. The messaging app may provide a function of reading an SMS message, a function of sending an SMS message, and the like. The contacts app may provide a function of reading information about a contact, a function of editing (for example, creating, modifying, or deleting) a contact, and the like. The calendar app may provide a function of reading schedule information, a function of editing (for example, creating, modifying, or deleting) a schedule, and the like. The camera app may be configured to provide functions such as photographing and video recording.

The hardware apparatus of the electronic device may include a memory, a camera, a microphone, a positioning apparatus, and the like. The memory may have a capability of storing data such as a photo, a video, and an audio file in the electronic device. The camera may have an image capturing capability. The microphone may have a sound signal collection capability. The positioning apparatus may have a location information determining capability.

An app may provide a corresponding function for the user by invoking one or more system capabilities in the electronic device.

For example, a chat app may provide functions such as sending an instant message, making a voice call, and making a video call for the user. For example, when the user uses the chat app to make a video call, the chat app needs to invoke the image capturing capability (that is, invoke the camera) of the electronic device to capture a face image of the user.

For example, a map app may provide functions such as positioning or navigation for the user. For example, when the user uses the map app to perform navigation, the map app needs to invoke the location information determining capability (namely, the positioning apparatus) of the electronic device to obtain location information of the user, to provide a navigation route for the user.

Generally, before invoking a system capability, an app needs to first obtain permission to invoke the system capability in the electronic device. The obtaining permission to invoke the system capability in the electronic device may also be referred to as obtaining device permission.

For example, the device permission may include: phone permission, messaging permission, contacts permission, calendar permission, camera permission, microphone permission, storage permission, location information permission, and the like.

For example, the permission to obtain location information may indicate permission to invoke a function provided by the map app. When the user grants the location information permission to the map app, the map app can perform positioning or navigation.

When the system app can provide a plurality of functions, or the hardware apparatus of the electronic device has a plurality of capabilities, the system app or the hardware apparatus of the electronic device may correspond to a plurality of system capabilities.

For example, the phone app may provide the function of making a call and the function of reading a call status and a device identifier. The phone permission may include permission to make a call and permission to read a call status and a device identifier. The electronic device may grant one or more pieces of permission in the phone permission to an app.

### 3. Privacy statement

During app running, user information usually needs to be collected and used. To ensure that users can provide their information to the app, the app provides a privacy statement for the users and asks the users whether to agree to the privacy statement.

The privacy statement of the app may be used to describe content such as what user information is collected by the app, how to collect the user information, how to use the user information, and how to protect the user information. The privacy statement may also be referred to as a privacy policy, a privacy clause, or the like. This is not limited in embodiments of this application.

Generally, the electronic device 100 asks, in the following two cases, whether the user agrees to the privacy statement of the app. In one case, after the app is installed on the electronic device 100, when the user starts the app for the first time, the app asks the user whether to agree to the privacy statement of the app. In the other case, after the privacy statement of the app is updated, when the user starts the app for the first time, the app asks the user again whether to agree to an updated privacy statement of the app.

After the user agrees to the privacy statement and the privacy statement of the app is not updated, when the user starts the app again, the app may not ask the user whether to agree to the privacy statement of the app. In other words, the app considers by default that the user always agrees to the privacy statement of the app.

That the user agrees to the privacy statement of the app described above may be understood as that the user agrees to grant, to the app, one or more system capabilities related to the privacy statement of the app in the electronic device, so that the app collects information mentioned in the privacy statement.

For example, the privacy statement of the app proposes to collect location information of the user, to implement a function of positioning a location of the user or a function of providing navigation for the user. In this case, the electronic device 100 may grant the location information permission (namely, invoking of a location information collection capability) to the app.

For another example, the privacy statement of the app proposes to collect a face image of the user, to implement an identity authentication function through facial recognition. In this case, the electronic device 100 may grant the camera permission (namely, invoking of the image capturing capability) to the app.

In embodiments of this application, for ease of description, one or more system capabilities related to the privacy statement of the app are referred to as one or more sensitive system capabilities related to the app.

In this case, after the user agrees to the privacy statement and the privacy statement of the app is not updated, regardless of whether the app runs in the background or in the foreground, the following case may occur: The app uses a sensitive system capability without the user's knowledge.

For example, if the app runs in the background, even if the electronic device 100 does not detect an operation performed by the user on the app, the sensitive system capability related to the app may be directly used in the process in which the app runs in the background.

For another example, if the app runs in the foreground, even if the electronic device 100 does not detect an operation of using the sensitive system capability related to the app by the user, the app may directly use the sensitive system capability related to the app.

It can be learned that, after the user agrees to the privacy statement and the privacy statement of the app is not updated, the app may violate the user's intention, abuse the sensitive system capability of the device, and collect user information without permission. As a result, privacy information of the user is leaked, bringing risks to the user.

In some embodiments, to avoid leakage of a first resource, when the app of the electronic device uses the sensitive system capability without the user's knowledge, the electronic device may remind the user that the app is using the sensitive system capability. In this way, the user may alternatively determine, based on an actual requirement of the user, whether to terminate use of the sensitive system capability by the app.

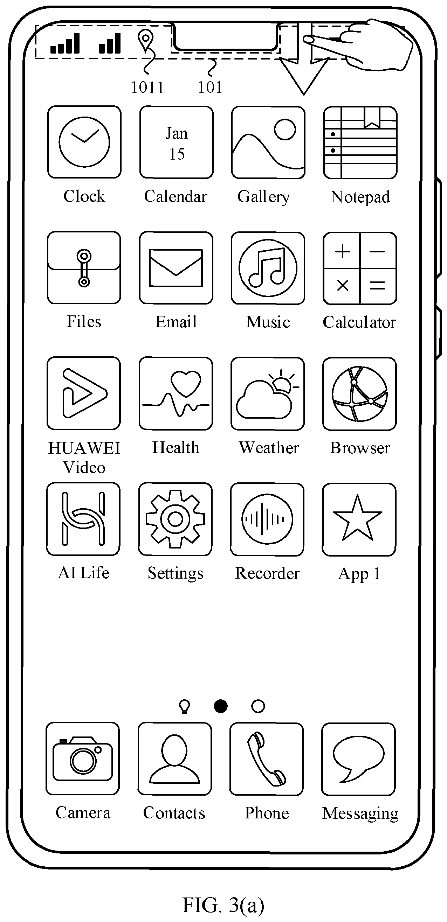

With reference to FIG. 3(a) to FIG. 6(b), the following describes how the electronic device 100 reminds the user that the app is using the sensitive system capability, and how the user terminates use of the sensitive system capability by the app.

It should be noted that, in FIG. 3(a) to FIG. 6(b), an example in which the electronic device 100 is a mobile phone is used for description, and this should not constitute a limitation on this application.

In addition, in FIG. 3(a) to FIG. 6(b), an example in which the electronic device 100 displays prompt information to remind the user that the app is using the sensitive system capability is used for description. A manner in which the electronic device 100 reminds the user that the app is using the sensitive system capability is not limited in embodiments of this application. For example, the electronic device 100 may alternatively remind, through vibration or voice playing, the user that the app is using the sensitive system capability.

Similarly, in FIG. 3(a) to FIG. 6(b), an example in which the user determines, through interaction with the screen of the electronic device 100, whether to terminate use of the sensitive system capability by the app is used for description. A manner in which the user terminates use of the sensitive system capability by the app is not limited in embodiments of this application. For example, the user may alternatively terminate, in a voice input manner, use of the sensitive system capability by the app.

FIG. 3(a) to FIG. 3(c) show a group of graphical user interfaces (graphical user interfaces, GUIs) of the mobile phone according to an embodiment of this application.

As shown in FIG. 3(a), the mobile phone displays a desktop of the mobile phone. The desktop of the mobile phone includes icons of a plurality of apps, and the plurality of applications include Clock, Calendar, Gallery, Notepad, an app 1, and the like. The app 1 runs in a background, and the app 1 is using a positioning apparatus (to be specific, the app 1 is using a positioning function (an example of the sensitive system capability) provided by the positioning apparatus of the mobile phone to obtain location information of the user) without the user's knowledge. In an example, as shown in FIG. 3(a), the mobile phone may display a location indicator 1011 in a status bar 101 of the mobile phone to remind the user that the app 1 is accessing location information of the user (namely, location information of the mobile phone, which is described below as the location information of the user for ease of description) through the positioning apparatus.

In this case, optionally, before the GUI shown in FIG. 3(a) is displayed, if the mobile phone does not use the positioning apparatus, the mobile phone may not display the location indicator 1011 in the status bar 101 of the mobile phone.

It should be noted that a location of the location indicator 1011 in the status bar 101 shown in FIG. 3(a) is merely an example, and should not constitute a limitation on this application. The location of the location indicator 1011 in the status bar 101 is not limited in embodiments of this application.

In this case, the user may learn, by using the location indicator 1011 in the status bar 101, that the app is using the location information of the user.

If the user does not want to terminate use of the location information of the user by the app, the user may not perform any operation.

If the user wants to terminate use of the location information of the user by the app, in some embodiments, the user may terminate, by using a control bar, use of the location information of the user by the app.

The following describes a change process of the GUI of the mobile phone in a process in which the user terminates, by using the control bar, use of the location information of the user by the app.

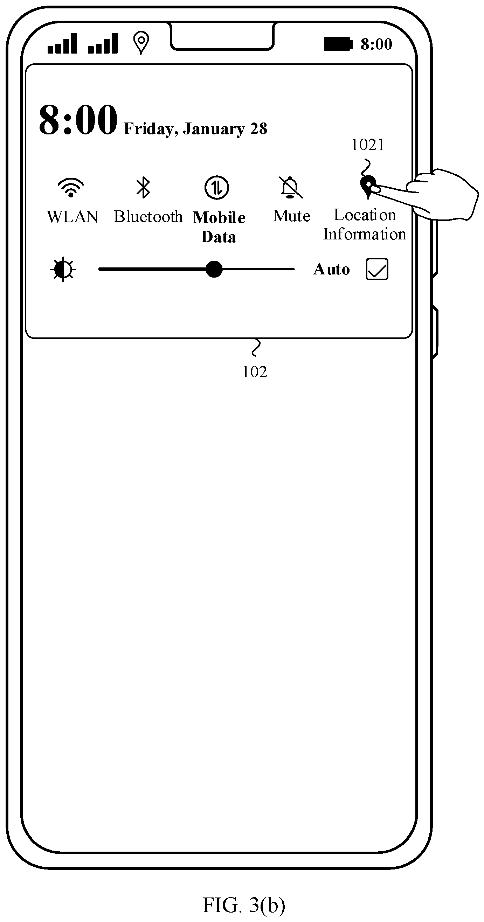

After the mobile phone detects an operation of viewing the control bar by the user, the mobile phone may display a GUI shown in FIG. 3(b).

A specific form of the operation of viewing the control bar by the user is not limited in embodiments of this application. For example, the operation of viewing the control bar by the user may be an operation of sliding down along a right side of the status bar 101 of the mobile phone by the user shown in FIG. 3(a).

It should be noted that, in this embodiment of this application, an operation area of the status bar of the electronic device is divided into a left side and the right side, and positions of the left side of the status bar and the right side of the status bar are relative.

As shown in FIG. 3(b), the GUI is a display interface on which a control bar 102 is displayed. The control bar 102 may include one or more controls used to control the mobile phone. For example, as shown in FIG. 3(b), the control bar 102 includes a Wi-Fi control used to enable or disable a wireless fidelity (wireless fidelity, Wi-Fi) signal connection function, a mobile data control used to enable or disable a mobile data connection function, a Bluetooth control used to enable or disable Bluetooth, a control used to enable mute, a location control 1021 used to enable or disable the positioning function, and the like. In this case, because the app 1 is using the location information of the user, the location control 1021 is in an enabled state. Optionally, the control bar 102 may further include other content. This is not limited in embodiments of this application.

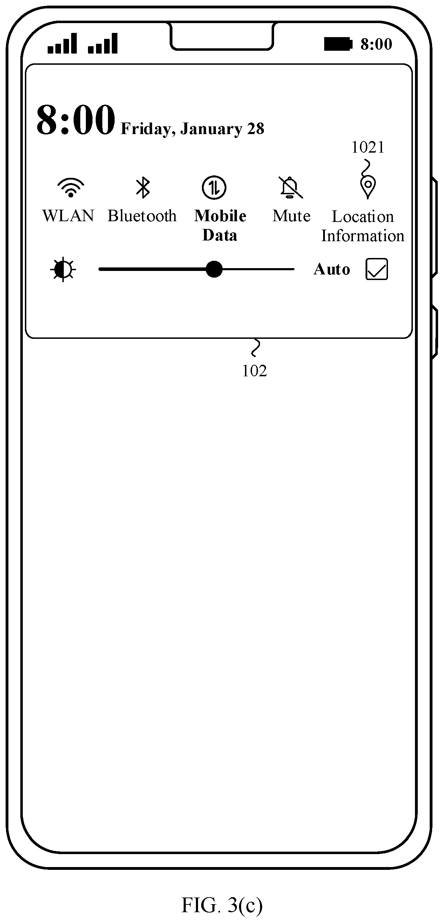

After the mobile phone detects an operation of disabling the positioning function of the mobile phone by the user, the mobile phone may display a GUI shown in FIG. 3(c).

A specific form of the operation of disabling the positioning function of the mobile phone by the user is not limited in embodiments of this application. For example, the operation of disabling the positioning function of the mobile phone by the user may be an operation of tapping the location control 1021 by the user shown in FIG. 3(b).

As shown in FIG. 3(c), the GUI is a display interface of the control bar 102 after the positioning function of the mobile phone is disabled. Because the user disables the positioning function of the mobile phone, the location control 1021 is in a disabled state.

On the group of GUIs shown in FIG. 3(a) to FIG. 3(c) provided in this embodiment of this application, the mobile phone may remind, by using the status bar, the user that the app running in the background of the mobile phone uses the location information of the user through the positioning apparatus without the user's knowledge. In addition, after the mobile phone detects the operation of disabling the positioning function of the mobile phone by the user by using the control bar, the mobile phone may intercept permission for the app to use the positioning apparatus, so that leakage of privacy information (for example, the location information) of the user can be avoided, and user experience can be improved.

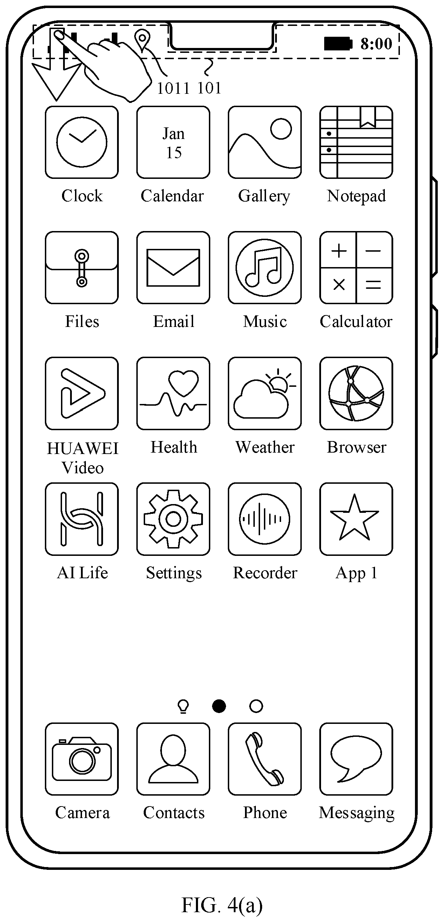

FIG. 4(a) to FIG. 4(c) show another group of GUIs of the mobile phone according to an embodiment of this application.

As shown in FIG. 4(a), the mobile phone displays a desktop of the mobile phone. An app 1 runs in a background, and the app 1 is using location information of the user without the user's knowledge. In an example, as shown in FIG. 4(a), like the GUI shown in FIG. 3(a), the mobile phone may also display a location indicator 1011 in a status bar 101 of the mobile phone to remind the user that the app 1 is using the location information of the user.

For content that is not described in FIG. 4(a), refer to the related descriptions of FIG. 3(a). Details are not described herein again.

In this case, optionally, before the GUI shown in FIG. 4(a) is displayed, if the mobile phone does not use a positioning apparatus, the mobile phone may not display the location indicator 1011 in the status bar 101 of the mobile phone.

In this case, the user may learn, by using the location indicator 1011 in the status bar 101, that the app is using the location information of the user.

If the user does not want to terminate use of the location information of the user by the app, the user may not perform any operation.

If the user wants to terminate use of the location information of the user by the app, in some embodiments, the user may terminate, by using a notification bar, use of the location information of the user by the app.

The following describes a change process of the GUI of the mobile phone in a process in which the user terminates, by using the notification bar, use of the location information of the user by the app.

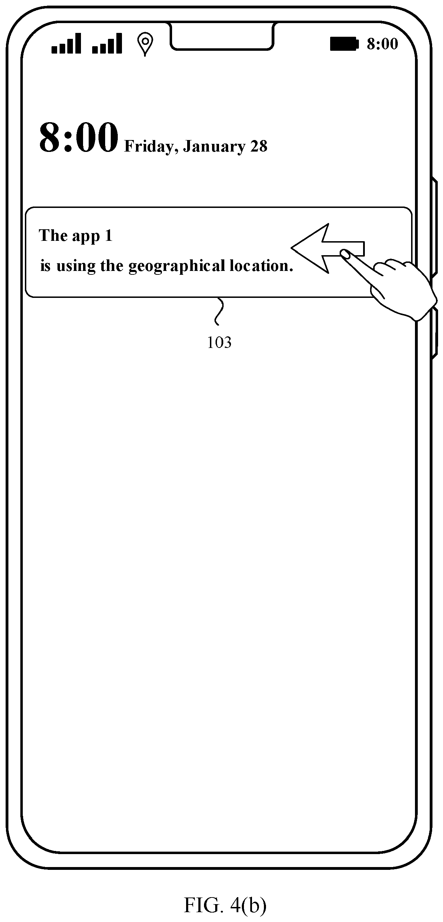

After the mobile phone detects an operation of viewing the notification bar by the user, the mobile phone may display a GUI shown in FIG. 4(b).

A specific form of the operation of viewing the notification bar by the user is not limited in embodiments of this application. For example, the operation of viewing the control bar by the user may be an operation of sliding down along a left side of the status bar 101 of the mobile phone by the user shown in FIG. 4(a).

As shown in FIG. 4(b), the GUI is a display interface on which the notification bar is displayed. The notification bar may include one or more notification messages. For example, as shown in FIG. 4(b), the notification bar includes a notification message 103 and the like, and the notification message 103 includes a message title bar (for example, "The app 1 ") and text information (for example, "is using the geographical location."). Optionally, the notification bar may further include other content. For example, as shown in FIG. 4(b), the notification bar may further include time information (for example, "8:00" and "Friday, January 28"). This is not limited in embodiments of this application.

Optionally, the notification bar may further specifically show that an app of a specific device uses location information of a specific device. For example, the notification bar may include text information "The app 1 (mobile phone) is using the location information of the user (mobile phone). "

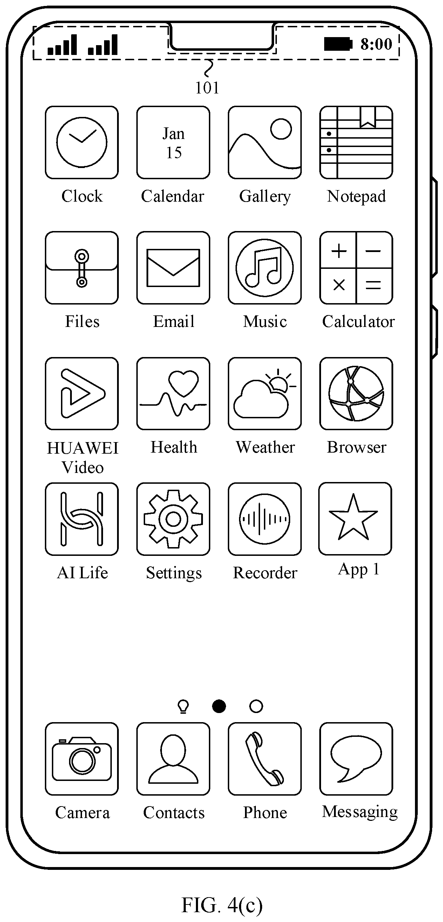

After the mobile phone detects an operation of disabling the positioning function of the mobile phone by the user, the mobile phone may display a GUI shown in FIG. 4(c).

For example, the operation of disabling the positioning function of the mobile phone by the user may be an operation of sliding the notification message 103 from right to left by the user shown in FIG. 4(b).

The GUI shown in FIG. 4(c) is a desktop of the mobile phone after the positioning function is disabled. Because the user disables the positioning function of the mobile phone, the location indicator 1011 is no longer displayed in the status bar 101.

On the group of GUIs shown in FIG. 4(a) to FIG. 4(c) provided in this embodiment of this application, the mobile phone may remind, by using the status bar, the user that the app running in the background of the mobile phone uses the location information of the user through the positioning apparatus without the user's knowledge. In addition, after the mobile phone detects the operation of disabling the positioning function of the mobile phone by the user by using the notification bar, the mobile phone may intercept permission for the app to use the positioning apparatus, so that leakage of privacy information (for example, the location information) of the user can be avoided, and user experience can be improved.

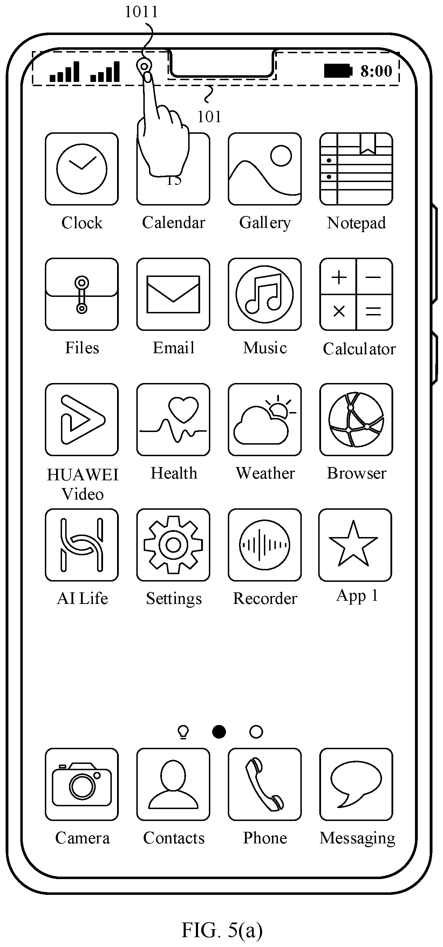

FIG. 5(a) to FIG. 5(c) show another group of GUIs of the mobile phone according to an embodiment of this application.

As shown in FIG. 5(a), the mobile phone displays a desktop of the mobile phone. An app 1 runs in a background, and the app 1 is using location information of the user without the user's knowledge. In an example, as shown in FIG. 5(a), like the GUI shown in FIG. 3(a), the mobile phone may also display a location indicator 1011 in a status bar 101 of the mobile phone to remind the user that the app 1 is using the location information of the user.

For content that is not described in FIG. 5(a), refer to the related descriptions of FIG. 3(a). Details are not described herein again.

In this case, optionally, before the GUI shown in FIG. 5(a) is displayed, if the mobile phone does not use a positioning apparatus, the mobile phone may not display the location indicator 1011 in the status bar 101 of the mobile phone.

In this case, the user may learn, by using the location indicator 1011 in the status bar 101, that the app is using the location information of the user.

If the user does not want to terminate use of the location information of the user by the app, the user may not perform any operation.

If the user wants to terminate use of the location information of the user by the app, in some embodiments, the user may terminate, by using a positioning switch, use of the location information of the user by the app.

The following describes a change process of the GUI of the mobile phone in a process in which the user terminates, by using the positioning switch, use of the location information of the user by the app.

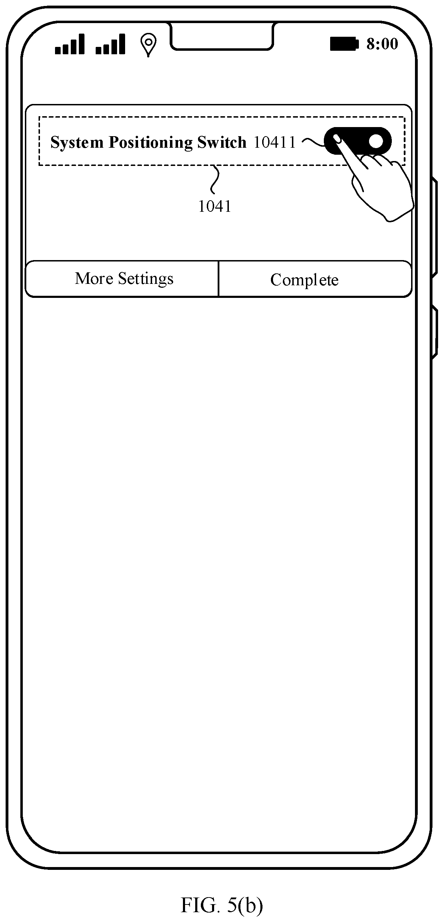

After the mobile phone detects an operation of viewing a positioning function setting bar by the user, the mobile phone may display a GUI shown in FIG. 5(b).

A specific form of the operation of viewing the positioning function setting bar by the user is not limited in embodiments of this application. For example, the operation of viewing the positioning function setting bar by the user may be an operation of tapping the location indicator 1011 by the user shown in FIG. 5(a).

As shown in FIG. 5(b), the GUI is a display interface of the positioning function setting bar. The positioning function setting bar may include a positioning switch option 1041. For example, as shown in FIG. 5(b), the positioning switch option 1041 may include text information of "System Positioning Switch" and a positioning switch control 10411. Optionally, the notification bar may further include other content. This is not limited in embodiments of this application.

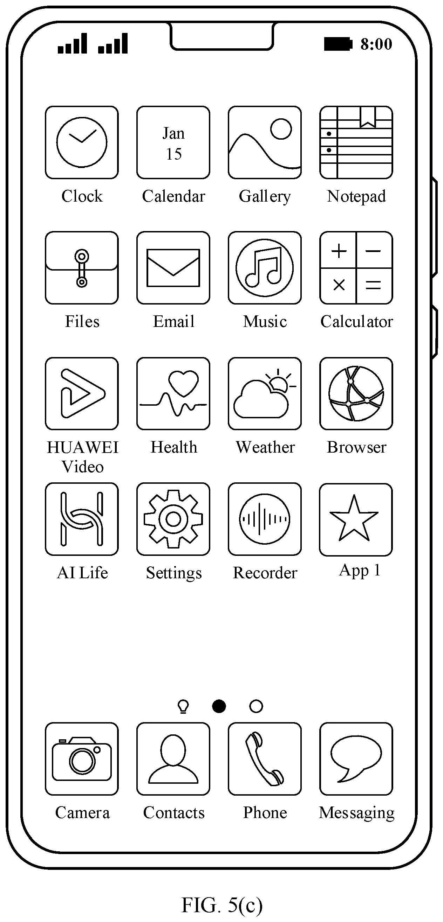

After the mobile phone detects an operation of disabling the positioning function of the mobile phone by the user, the mobile phone may display a GUI shown in FIG. 5(c).

For example, the operation of disabling the positioning function of the mobile phone by the user may be an operation of tapping the positioning switch control 10411 by the user shown in FIG. 5(b).

The GUI shown in FIG. 5(c) is a desktop of the mobile phone after the positioning function of the mobile phone is disabled. Because the user disables the positioning function of the mobile phone, the location indicator 1011 is no longer displayed in the status bar 101.

On the group of GUIs shown in FIG. 5(a) to FIG. 5(c) provided in this embodiment of this application, the mobile phone may remind, by using the status bar, the user that the application running in the background of the mobile phone uses the location information of the user through the positioning apparatus without the user's knowledge. In addition, after the mobile phone detects the operation of disabling the positioning function of the mobile phone by the user by using the positioning switch, the mobile phone may intercept permission for the app 1 to use the positioning apparatus, so that leakage of privacy information (for example, the location information) of the user can be avoided, and user experience can be improved.

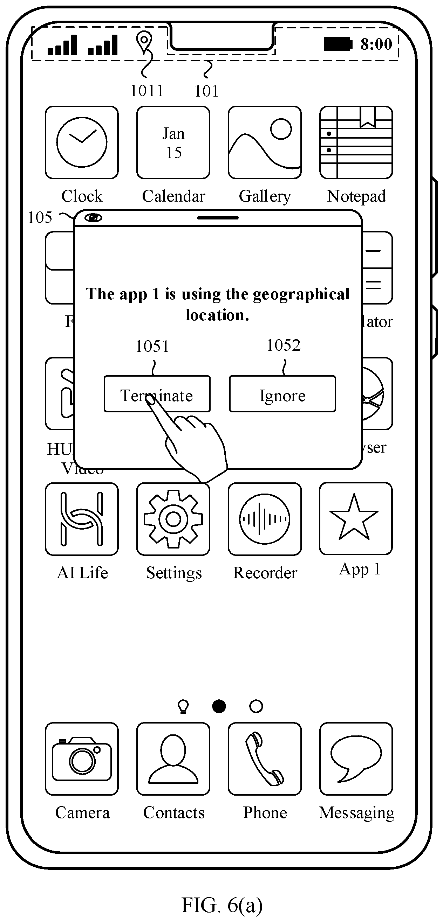

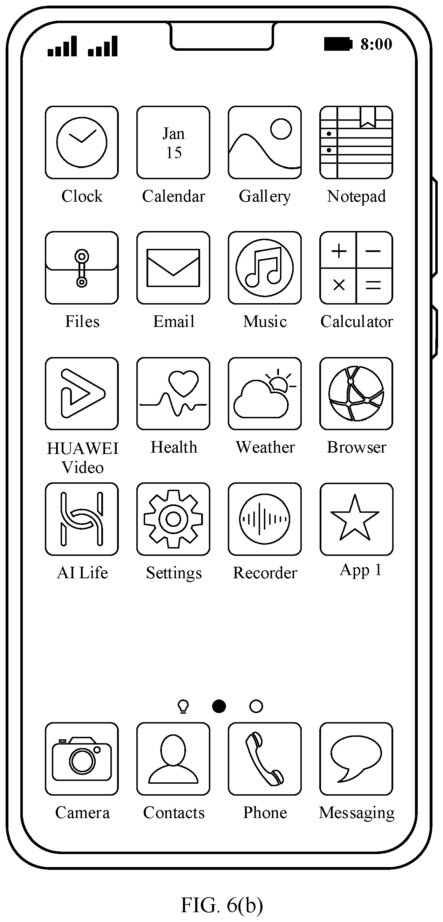

FIG. 6(a) and FIG. 6(b) show another group of GUIs of the mobile phone according to an embodiment of this application.

As shown in FIG. 6(a), the mobile phone displays a desktop of the mobile phone. An app 1 runs in a background, and the app 1 is using location information of the user without the user's knowledge. In an example, as shown in FIG. 6(a), like the GUI shown in FIG. 3(a), the mobile phone may also display a location indicator 1011 in a status bar 101 of the mobile phone to remind the user that the app 1 is using the location information of the user.

In this case, optionally, before the GUI shown in FIG. 6(a) is displayed, if the mobile phone does not use a positioning apparatus, the mobile phone may not display the location indicator 1011 in the status bar 101 of the mobile phone.

In addition, the mobile phone may further display a pop-up window on the mobile phone, and remind, by using the pop-up window, that the app 1 is using the location information of the user.

For example, as shown in FIG. 6(a), a pop-up window 105 may include text information "The app 1 is using a geographical location." and a terminate control 1051 used to terminate use of the location information of the user by the app 1. Optionally, the pop-up window 105 may further include an ignore control 1052 used to ignore that the app 1 uses the location information of the user.

Optionally, the pop-up window may further specifically show that an app of a specific device uses location information of a specific device. For example, the pop-up window 105 may include text information "The app 1 (mobile phone) is using the location information of the user (mobile phone)."

It should be noted that when the mobile phone displays the pop-up window 105, the mobile phone may display the desktop of the mobile phone or may not display the desktop of the mobile phone. This is not limited in embodiments of this application.

In another example, the mobile phone may alternatively display only the pop-up window on the mobile phone, and remind, by using the pop-up window, that the app 1 is using the location information of the user.

For content that is not described in FIG. 5(a), refer to the related descriptions of FIG. 3(a). Details are not described herein again.

In this case, the user may learn, by using the location indicator 1011 and/or the pop-up window 105 in the status bar 101, that the app is using the location information of the user.

If the user does not want to terminate use of the location information of the user by the app, in an example, the user may not perform any operation. In another example, the user may continue, by using the pop-up window, use of the location information of the user by the app.

The following describes a change process of the GUI of the mobile phone in a process in which the user continues, by using the pop-up window, use of the location information of the user by the app.

After detecting an operation of tapping the ignore control 1052 by the user, the mobile phone considers that the user does not want to terminate use of the location information of the user by the app. In this case, the app may continue to use the location information of the user.

If the user wants to terminate use of the location information of the user by the app, in some embodiments, the user may terminate, by using the pop-up window, use of the location information of the user by the app.

The following describes a change process of the GUI of the mobile phone in a process in which the user terminates, by using the pop-up window, use of the location information of the user by the app.

After the mobile phone detects an operation of tapping the terminate control 1051 by the user, the mobile phone may display a GUI shown in FIG. 6(b).

The GUI shown in FIG. 6(b) is a desktop of the mobile phone after the positioning function of the mobile phone is disabled. Because the user disables the positioning function of the mobile phone, the location indicator 1011 is no longer displayed in the status bar 101.

On the group of GUIs shown in FIG. 6(a) and FIG. 6(b) provided in this embodiment of this application, the mobile phone may remind, by using the status bar and the pop-up window, the user that the application running in the background of the mobile phone uses the location information of the user through the positioning apparatus without the user's knowledge. In addition, after the mobile phone detects the operation of disabling the positioning function of the mobile phone by the user by using the pop-up window, the mobile phone may intercept permission for the app to use the positioning apparatus, so that leakage of privacy information (for example, the location information) of the user can be avoided, and user experience can be improved.

In some other embodiments, to avoid leakage of privacy information of the user, when the app of the electronic device needs to use the sensitive system capability without the user's knowledge, the electronic device may alternatively first intercept the app from using the sensitive system capability. In this way, the user may alternatively determine, based on an actual requirement of the user, whether to allow the app to use the sensitive system capability.

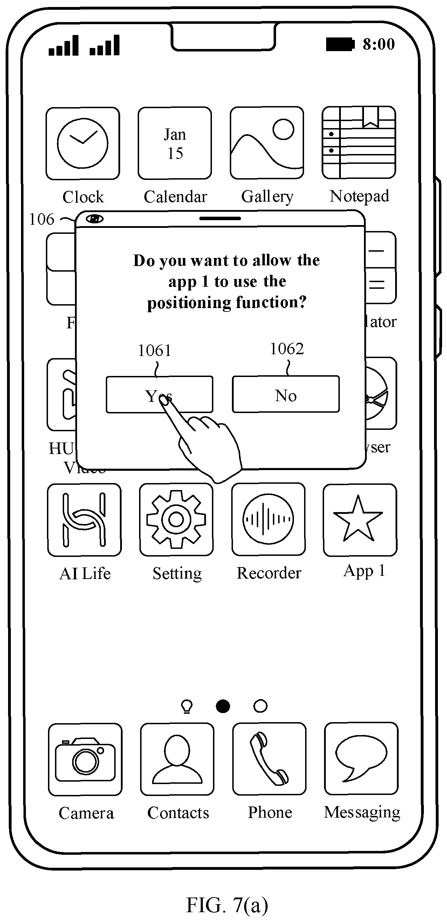

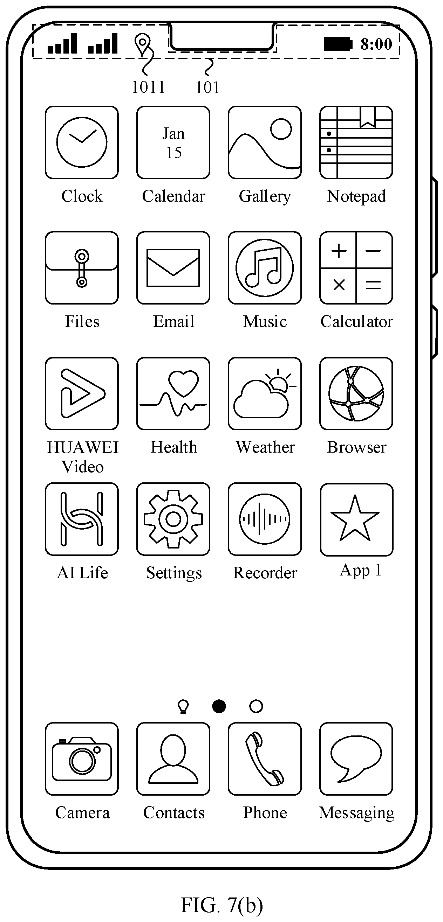

With reference to FIG. 7(a) and FIG. 7(b), the following describes how the electronic device reminds the user that the app is intercepted from using the sensitive system capability and how the user allows the app to use the sensitive system capability.

It should be noted that, in FIG. 7(a) and FIG. 7(b), an example in which the electronic device 100 is a mobile phone is used for description, and this should not constitute a limitation on this application.

In addition, in FIG. 7(a) and FIG. 7(b), an example in which the electronic device 100 displays prompt information to remind the user that the app has been intercepted from using the sensitive system capability is used for description. A manner in which the electronic device 100 reminds the user that the app has been intercepted from using the sensitive system capability is not limited in embodiments of this application. For example, the electronic device 100 may remind, through vibration or voice playing, the user that the app has been intercepted from using the sensitive system capability.

Similarly, in FIG. 7(a) and FIG. 7(b), an example in which the user determines, through interaction with the screen of the electronic device 100, whether to allow the app to use the sensitive system capability is used for description. A manner in which the user allows the app to use the sensitive system capability is not limited in embodiments of this application. For example, the user may alternatively allow, in a voice input manner, the app to use the sensitive system capability.

FIG. 7(a) and FIG. 7(b) show another group of GUIs of the mobile phone according to an embodiment of this application.

As shown in FIG. 7(a), the mobile phone displays a desktop of the mobile phone. The desktop of the mobile phone includes icons of a plurality of apps, and the plurality of applications include Clock, Calendar, Gallery, Notepad, an app 1, and the like. The app 1 runs in a background, the app 1 uses location information of the user without the user's knowledge, and the mobile phone has intercepted permission for the app 1 to use a positioning apparatus, that is, the mobile phone has intercepted permission for the app 1 to access the location information of the user by using a positioning function of the positioning apparatus.

Optionally, further, the mobile phone may further ask the user whether to allow the app 1 to use the location information of the user, that is, whether to allow the permission for the app 1 to use the positioning apparatus.

For example, as shown in FIG. 7(a), the mobile phone may further display a pop-up window 106 on the mobile phone. The pop-up window 106 may include text information "Do you want to allow the app 1 to use the location information of the user?" and a yes control 1061 used to allow the app 1 to use the location information of the user. Optionally, the pop-up window 106 may further include a no control 1062 used to forbid the app 1 to use the location information of the user.

Optionally, the pop-up window may further specifically show whether to allow an app of a specific device to use location information of the device. For example, the pop-up window 106 may include text information "Do you want to allow the app 1 (mobile phone) to use the location information of the user (mobile phone)?"

It should be noted that when the mobile phone displays the pop-up window 106, the mobile phone may display the desktop of the mobile phone or may not display the desktop of the mobile phone. This is not limited in embodiments of this application.

In this case, the user may learn, by using the pop-up window 106, that the app wants to use the location information of the user.

If the user does not want to allow the app to use the location information of the user, in an example, the user may not perform any operation. In another example, the user may forbid, by using the pop-up window 106, the app from using the location information of the user.

The following describes a change process of the GUI of the mobile phone in a process in which the user forbids, by using the pop-up window 106, the app to use the location information of the user.

After detecting an operation of tapping the no control 1062 by the user, the mobile phone considers that the user does not want to allow the app to use the location information of the user. In this case, the app still cannot use the location information of the user.

If the user wants to allow the app to use the location information of the user, in some embodiments, the user may allow, by using the pop-up window 106, the app to use the location information of the user.

The following describes a change process of the GUI of the mobile phone in a process in which the user allows, by using the pop-up window 106, the app to use the location information of the user.

After the mobile phone detects an operation of tapping the yes control 1061 by the user, the mobile phone may enable the positioning function.

In addition, in some embodiments, as shown in FIG. 7(b), after the mobile phone enables the positioning function, the mobile phone may further display a location indicator 1011 in a status bar 101 of the mobile phone, to remind the user that the location information of the user can be used.

On the group of GUIs shown in FIG. 7(a) and FIG. 7(b) provided in this embodiment of this application, when the app running in the background of the mobile phone uses the location information of the user without the user's knowledge, the mobile phone may first intercept the permission for the mobile phone to use the positioning apparatus. Then, the mobile phone asks, by using the pop-up window, the user whether to allow the app to use the location information of the user, and after detecting an operation indicating that the user allows, by using the pop-up window, the app to use the location information of the user, the mobile phone allows the permission for the app to use the positioning apparatus. In this way, the app can use the location information of the user, so that leakage of privacy information (for example, the location information) of the user can be avoided, and user experience can be improved.

With development of electronic technologies and improvement of people's living standards, the user usually has more than one electronic device. For example, in addition to the electronic device 100, the user has another electronic device. When a distance between the electronic device 100 and the user exceeds a specific distance, the user may not see or hear a prompt of the electronic device 100 that the app is using the sensitive system capability. In this case, the user may not be able to terminate, in a timely manner, use of the sensitive system capability by the app, and therefore, leakage of the privacy information of the user cannot be avoided, which brings risks to the user.

In view of this, the electronic device 100 may further synchronize, to the another electronic device in a cross-device manner, information that the app of the electronic device 100 is using the sensitive system capability. In this way, the user may alternatively determine, based on an actual requirement of the user through the another electronic device, whether to terminate use of the sensitive system capability by the app of the electronic device 100.

There is a trust relationship between the electronic device 100 and the another electronic device.

In some embodiments, that there is a trust relationship between the electronic device 100 and the another electronic device may be understood as that the electronic device 100 is a trusted device of the another electronic device or the another electronic device is a trusted device of the electronic device 100.

In some other embodiments, that there is a trust relationship between the electronic device 100 and the another electronic device may be understood as that the electronic device 100 and the another electronic device are mutually trusted devices. In other words, the electronic device 100 is a trusted device of the another electronic device, and the another electronic device is also a trusted device of the electronic device 100.

A manner of establishing the trust relationship between the electronic device 100 and the another electronic device is not limited in embodiments of this application. For example, the electronic device 100 and the another electronic device may establish the trust relationship in a manner of two-dimensional code scanning, an application, a personal identification number (personal identification number, PIN), logging in to a same account (a personal account or a family account), account associating (for example, associating a parent account with a child account), logging in to a same Wi-Fi network, establishing a short-range connection, or the like.

Optionally, in some embodiments, a distance between the electronic device 100 and the another electronic device meets a preset distance. A specific value of the preset distance is not limited in embodiments of this application.

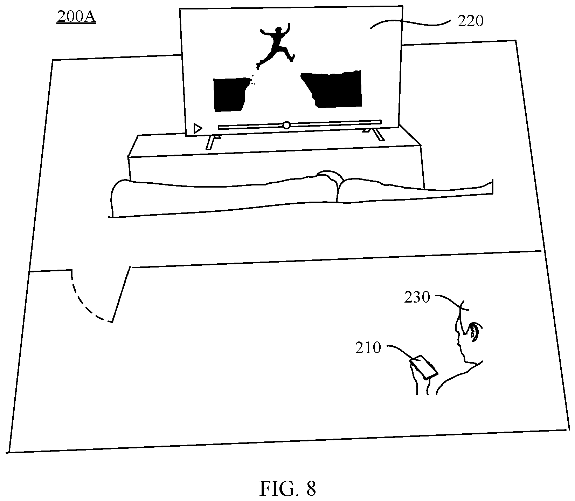

With reference to FIG. 8 to FIG. 16(b), the following describes, in a scenario shown in FIG. 8, how a smart television reminds, in a cross-device manner, a user that an app of the smart television uses a sensitive system capability, and how the user controls, in a cross-device manner, a behavior of using the sensitive system capability by the app of the smart television.

It should be noted that the electronic device in the scenario shown in FIG. 8 is merely an example, and should not constitute a limitation on this application. For example, more electronic devices may be further included in the scenario.

FIG. 8 is an example diagram of an application scenario 200A according to an embodiment of this application. As shown in FIG. 8, the scenario 200A may include a smart television 220 (an example of the electronic device 100), a mobile phone 210 (an example of the another electronic device), and a user 230. Television series played by the smart television 220 in the living room is paused. The user 230 is using the mobile phone 210 in the bedroom.

An app (for example, HUAWEI Video) that plays the television series and that is on the smart television 220 is using location information of the user without the user's knowledge. In other words, the app that plays the television series is obtaining the location information of the user by using a positioning function provided by a positioning apparatus of the smart television 220.

In this case, optionally, in some embodiments, the smart television 220 may first determine whether the user is in a preset range of the smart television 220, and then use a corresponding reminding measure based on a determining result.

It should be noted that the smart television 220 may alternatively skip the step of determining whether the user is within the preset range of the smart television 220, and directly perform a subsequent reminding step. This is not limited in embodiments of this application.

A manner of determining, by the smart television 220, whether the user is in the preset range of the smart television 220 is not limited in embodiments of this application. For example, the smart television 220 may capture an image, and determine, based on the captured image, whether the user is watching the smart television 220, to determine whether the user is in the preset range of the smart television 220. For another example, the smart television 220 may determine, based on whether the user currently operates the smart television 220, whether the user is in the preset range of the smart television 220.

When the user is in the preset range of the smart television 220, the smart television 220 may not intercept permission for HUAWEI Video of the smart television 220 to use the positioning apparatus. In other words, the smart television 220 may not intercept HUAWEI Video of the smart television 220 from accessing the location information of the user.

Optionally, when the user is in the preset range of the smart television 220, the smart television 220 may further determine whether the user is a trusted user of the smart television 220, and when the user is a trusted user of the smart television 220, the smart television 220 does not intercept the permission for HUAWEI Video of the smart television 220 to use the positioning apparatus.

A trusted user of the smart television 220 may be understood as a user who can use the smart television 220.

A manner of determining, by the smart television 220, whether the user is a trusted user of the smart television 220 is not limited in embodiments of this application. For example, the smart television 220 may capture an image, and determine, based on the captured image, whether the user is a trusted user pre-stored in the smart television 220.

Optionally, when the user is in the preset range of the smart television 220, the smart television 220 may also remind, by using the smart television 220, the user that HUAWEI Video is using the location information of the user of the smart television 220.

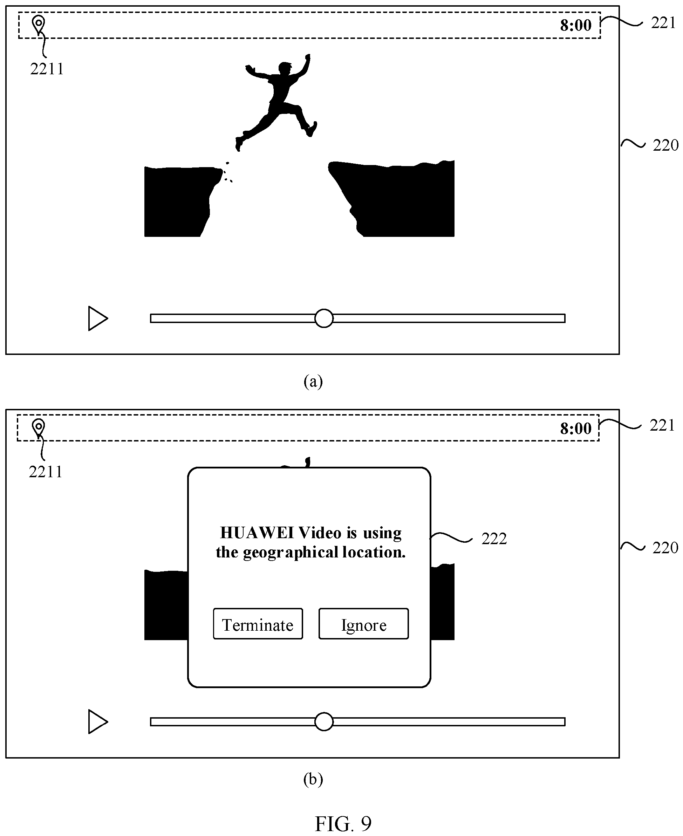

In an example, as shown in (a) in FIG. 9, the smart television 220 may display a location indicator 2211 in a status bar 221 of the smart television 220 to remind the user that HUAWEI Video is using the location information of the user.

It should be noted that a location of the location indicator 2211 in the status bar 221 shown in (a) in FIG. 9 is merely an example, and should not constitute a limitation on this application. The location of the location indicator 2211 in the status bar 221 is not limited in embodiments of this application.

In another example, as shown in (b) in FIG. 9, the smart television 220 may display a pop-up window 222 on a display interface of the smart television 220 to remind the user that HUAWEI Video is using the location information of the user. For example, the pop-up window 222 may include text information "HUAWEI Video is using a geographical location." and a terminate control 2221 used to terminate use of the location information of the user by HUAWEI Video. Optionally, the pop-up window 222 may further include an ignore control 2222 used to ignore use of the location information of the user by HUAWEI Video.

Optionally, the pop-up window 222 may further specifically show that an app of a specific device uses location information of a specific device. For example, the pop-up window 222 may include text information "HUAWEI Video (smart television) is using the location information of the user (smart television)."

In some embodiments, when the user is not in the preset range of the smart television 220, or when the user is in the preset range of the smart television 220 and the user is not a trusted user of the smart television 220, the smart television 220 may send first indication information to the mobile phone 210. The first indication information may indicate that HUAWEI Video of the smart television 220 is using the location information of the user.

Optionally, in this case, the smart television 220 may also remind, by using the smart television 220, the user that HUAWEI Video of the smart television 220 is using the location information of the user. For a manner of reminding, by the smart television 220, the user that HUAWEI Video of the smart television 220 is using the location information of the user, refer to the descriptions of the foregoing example. Details are not described herein again.

After the mobile phone 210 receives the first indication information, the mobile phone 210 may remind the user that HUAWEI Video of the smart television 220 is using the location information of the user.

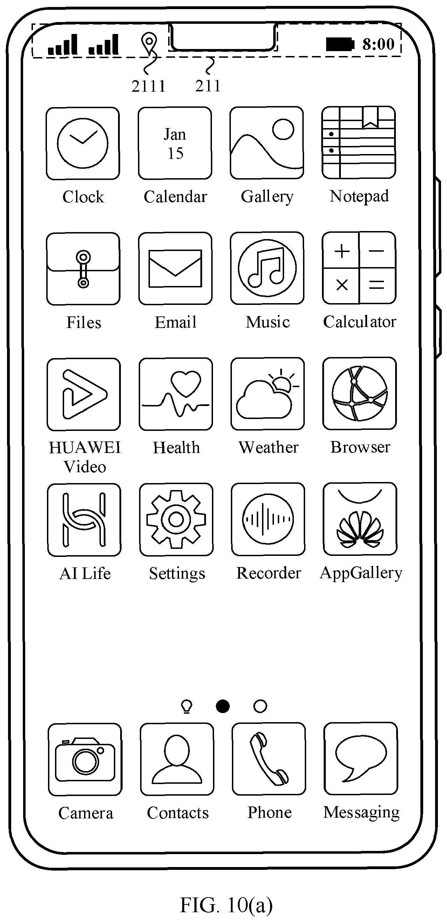

With reference to FIG. 10(a) to FIG. 14, the following describes how the mobile phone 210 reminds the user that HUAWEI Video of the smart television 220 is using the location information of the user, and how the user terminates, by using the mobile phone 210, use of the location information of the user by HUAWEI Video of the smart television 220.

In some embodiments, as shown in FIG. 10(a) to FIG. 10(d), the mobile phone 210 may display a location indicator 2111 in a status bar 211 of the mobile phone 210 to remind the user that HUAWEI Video of the smart television 220 is using the location information of the user.

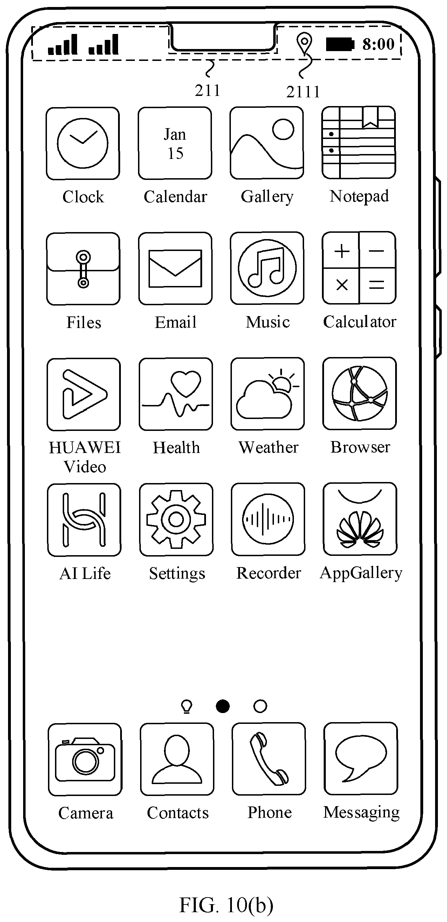

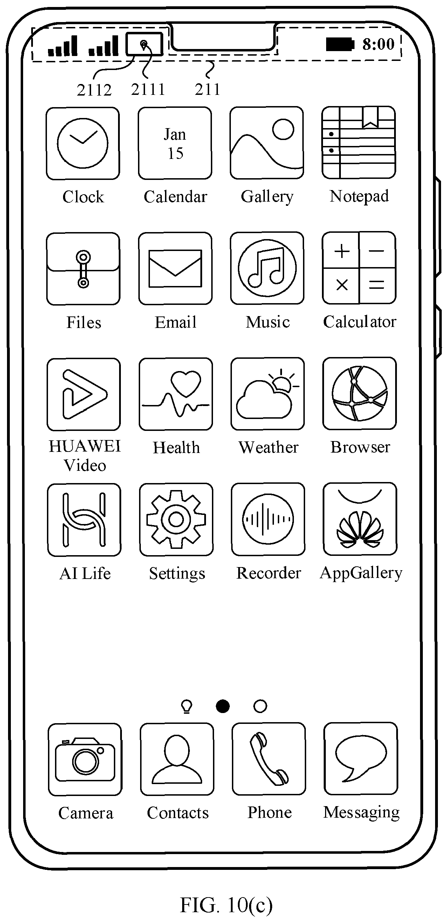

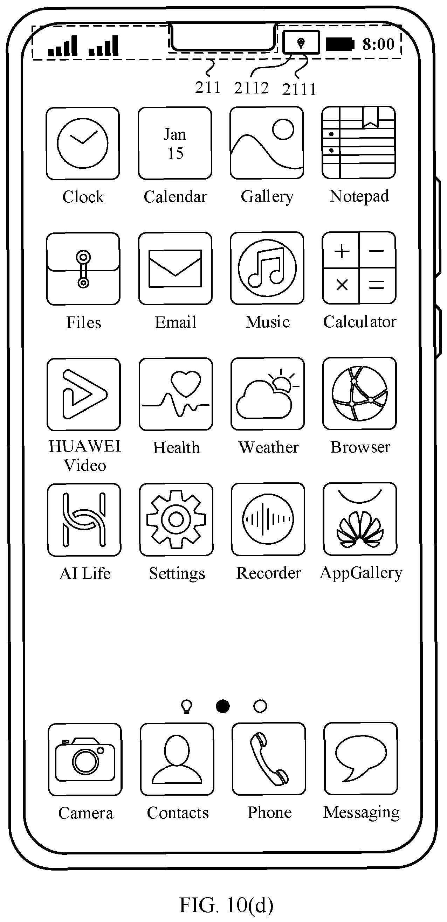

It should be noted that a location of the location indicator 2111 in the status bar 101 is not limited in embodiments of this application. For example, as shown in FIG. 10(a) and FIG. 10(c), the location indicator 2111 is located on a left side of the status bar 101. For another example, as shown in FIG. 10(b) and FIG. 10(d), the location indicator 2111 is located on a right side of the status bar 101.

Optionally, to distinguish whether this device or another device uses the location information of the user, in some embodiments, a manner in which the device reminds that this device uses the location information of the user is different from a manner in which the device reminds that the another device uses the location information of the user.

In an example, a color and/or a location of a location indicator displayed when this device uses the location information of the user is different from a color and/or a location of a location indicator displayed when the another device uses the location information of the user.

In an example in which the color of the location indicator displayed when this device uses the location information of the user is different from the color of the location indicator displayed when the another device uses the location information of the user, for example, the location indicator displayed by this device may be green, and the location indicator displayed by the another device may be red. For another example, the location indicator displayed by this device may be red, and the location indicator displayed by the another device may be green.

In an example in which the location of the location indicator displayed when this device uses the location information of the user is different from the location of the location indicator displayed when the another device uses the location information of the user, this device may display the location indicator on a left side of the status bar, and the another device may display the location indicator on a left side of the status bar. For example, the smart television 220 displays the location indicator 2211 on the left side of the status bar 221, and the mobile phone 210 displays the location indicator 2111 on the right side of the status bar 211. For another example, the smart television 220 displays the location indicator 2211 on the right side of the status bar 221, and the mobile phone 210 displays the location indicator 2111 on the left side of the status bar 211.

In another example, when using the location information of the user, the another device may further display some information of the another device in addition to the displayed location indicator.

For example, in addition to displaying the location indicator 2111 in the status bar 211 of the mobile phone 210, the mobile phone 210 may further display a type identifier of the smart television 220 in the status bar 211 of the mobile phone 210.

It should be noted that a specific form of the type identifier of the smart television 220 is not limited in embodiments of this application. For example, as shown in FIG. 10(c) and FIG. 10(d), a type identifier 2112 of the smart television 220 may be an outline of the smart television 220.

In addition, a location relationship between the type identifier of the smart television 220 and the location indicator 2111 in the status bar 211 is not limited in embodiments of this application. To enable the user to quickly obtain which device is related to the sensitive system capability, the location indicator 2111 and the type identifier of the smart television 220 may be combined for display. For example, as shown in FIG. 10(c) and FIG. 10(d), the location indicator 2111 may be disposed in the middle of the type identifier 2112 of the smart television 220.

In this case, the user may learn, by using the location indicator 2111 in the status bar 211, that an app of another device is using the location information of the user.

If the user does not want to terminate use of the location information of the user by the app of the another device, the user may not perform any operation.

If the user wants to terminate use of the location information of the user by the app of the another device, in some embodiments, the user may terminate, by using the mobile phone 210, use of the location information of the user by the app of the another device.

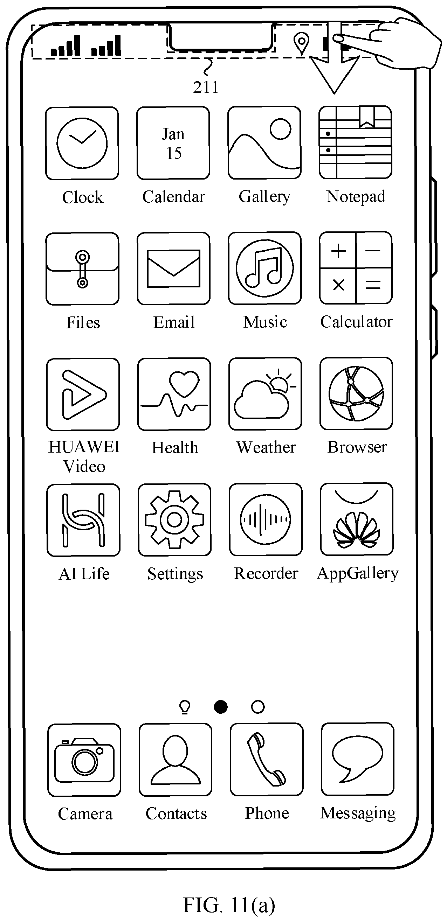

With reference to FIG. 11(a) to FIG. 14, the following describes how the user terminates, by using the mobile phone 210, use of the location information of the user by HUAWEI Video on another device.

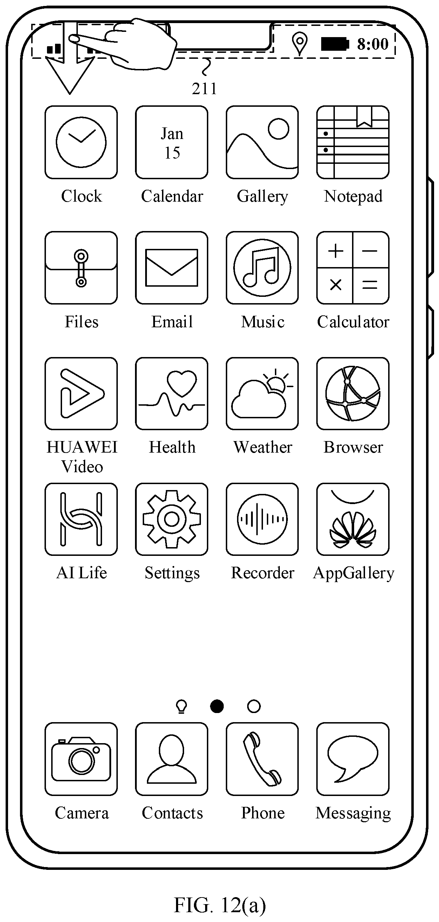

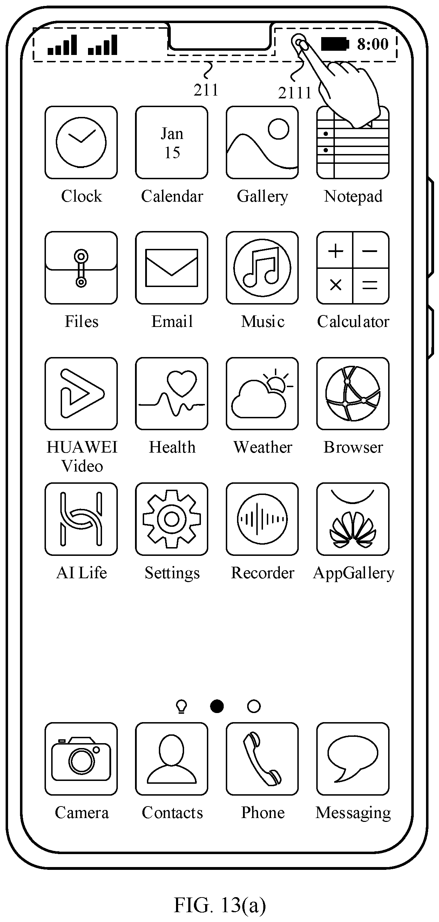

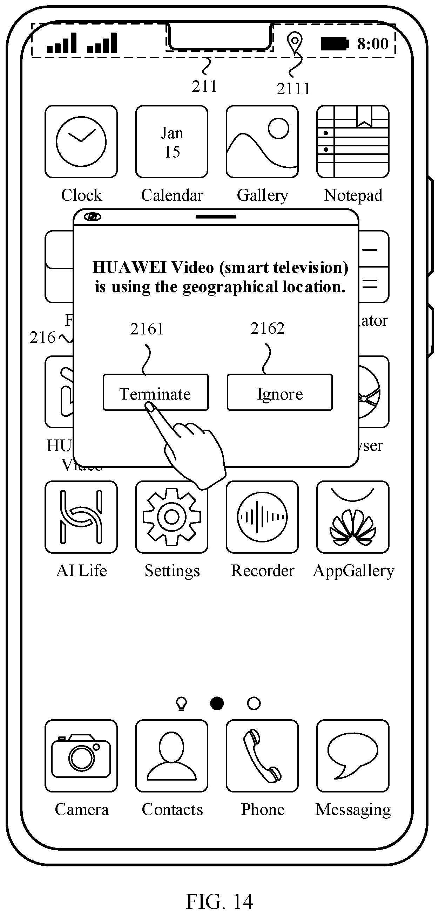

FIG. 11(a) to FIG. 11(d) are a change process of the GUI of the mobile phone 210 in a process in which the user terminates, by using a control bar, use of the location information of the user by HUAWEI Video of the smart television 220. FIG. 12(a) to FIG. 12(c) are a change process of the GUI of the mobile phone 210 in a process in which the user terminates, by using a notification bar, use of the location information of the user by HUAWEI Video of the smart television 220. FIG. 13(a) to FIG. 13(c) are a change process of the GUI of the mobile phone 210 in a process in which the user terminates, by using a positioning function setting bar, use of the location information of the user by HUAWEI Video of the smart television 220. FIG. 14 is a change process of the GUI of the mobile phone 210 in a process in which the user terminates, by using a pop-up window, use of the location information of the user by the app HUAWEI Video of the smart television 220.

It should be noted that, in FIG. 11(a) to FIG. 14, an example in which the mobile phone 210 displays prompt information to remind the user that HUAWEI Video of the smart television 220 is using the location information of the user is used for description. A manner in which the mobile phone 210 reminds the user that HUAWEI Video of the smart television 220 is using the location information of the user is not limited in embodiments of this application. For example, the mobile phone 210 may remind, through vibration or voice playing, the user that HUAWEI Video of the smart television 220 is using the location information of the user.

Similarly, in FIG. 11(a) to FIG. 14, an example in which the user determines, through interaction with a screen of the mobile phone 210, whether to terminate use of the location information of the user by HUAWEI Video of the smart television 220 is used for description. A manner in which the user terminates use of the location information of the user by HUAWEI Video of the smart television 220 is not limited in embodiments of this application. For example, the user may alternatively terminate, in a voice input manner, use of the location information function of the user by HUAWEI Video of the smart television 220.

In addition, in FIG. 11(a) to FIG. 14, an example in which the location indicator 2111 is located on the right side of the status bar 211 is used for description, and this should not constitute a limitation on this application.

It should be noted that, in embodiments shown in FIG. 11(a) to FIG. 14, the mobile phone 210 may display the location indicator 2111 in the status bar of the mobile phone 210 only after the mobile phone 210 uses the positioning apparatus or the mobile phone 210 receives an indication that the smart television 220 uses the positioning apparatus. If the mobile phone 210 does not use the positioning apparatus or the mobile phone 210 does not receive an indication that another electronic device uses the positioning apparatus, the first electronic device does not need to display the location indicator 2111 in the status bar of the mobile phone 210.

FIG. 11(a) to FIG. 11(d) show a group of GUIs of the mobile phone 210 according to an embodiment of this application.

As shown in FIG. 11(a), the mobile phone 210 displays a desktop of the mobile phone. The desktop of the mobile phone includes icons of a plurality of apps, and the plurality of applications include Clock, Calendar, Gallery, Notepad, AppGallery, and the like.

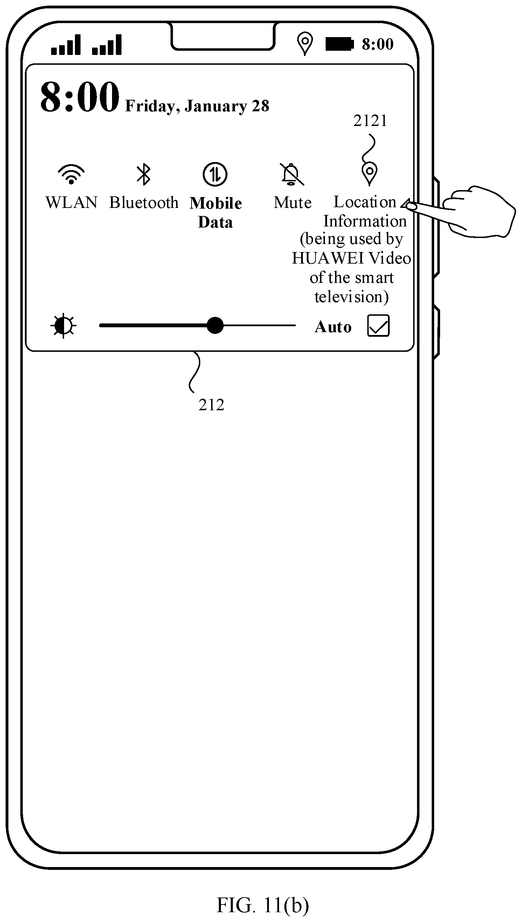

After the mobile phone 210 detects an operation of viewing the control bar by the user, the mobile phone 210 may display a GUI shown in FIG. 11(b).

For example, the operation of viewing the control bar by the user may be an operation of sliding down along a right side of the status bar 211 of the mobile phone 210 by the user shown in FIG. 11(a).

As shown in FIG. 11(b), the GUI is a display interface on which a control bar 212 is displayed. The control bar 212 may include one or more controls used to control the mobile phone 210. For example, as shown in FIG. 11(b), the control bar 212 includes a Wi-Fi control used to enable or disable a Wi-Fi signal connection function, a mobile data control used to enable or disable a mobile data connection function, a Bluetooth control used to enable or disable Bluetooth, a control used to enable mute, a location control 2121 used to enable or disable the positioning function, and the like. Optionally, the control bar 212 may further include other content. This is not limited in embodiments of this application.

In this case, if the positioning function of the mobile phone 210 is currently not enabled, the location control 2121 is in a disabled state. In addition, because the mobile phone 210 receives the first indication information sent by the smart television 220, the mobile phone 210 may remind, at the location control 2121, the user that HUAWEI Video of the smart television 220 uses the location information of the user.

A manner in which the mobile phone 210 reminds, at the location control 2121, the user that HUAWEI Video of the smart television 220 uses the location information of the user is not limited in embodiments of this application. For example, as shown in FIG. 11(b), the mobile phone 210 displays text information "Being used by HUAWEI Video of the smart television." below the location control 2121 to remind the user that HUAWEI Video is using the location information of the user.

Optionally, the mobile phone 210 may further specifically show, at the location control 2121, that an app of a specific device uses location information of a specific device. For example, the mobile phone 210 displays text information "HUAWEI Video (smart television) is using the location information of the user (smart television)." below the location control 2121.

After the mobile phone 210 detects an operation indicating that the user wants to terminate use of the location information of the user by HUAWEI Video of the smart television 220, the mobile phone 210 may send second indication information to the smart television 220. The second indication information indicates the smart television 220 to terminate use of the location information of the user by HUAWEI Video of the smart television 220. In other words, the second indication information indicates the smart television 220 to disable the positioning function of the smart television 220.

A specific form of the operation of terminating, by the user, use of the location information of the user by HUAWEI Video of the smart television 220 is not limited in embodiments of this application.

For example, the operation of terminating, by the user, use of the location information of the user by HUAWEI Video of the smart television 220 may include a series of operations in FIG. 11(b) to FIG. 11(d).

Specifically, first, as shown in FIG. 11(b), the user performs an operation of tapping a button at a lower right corner of the location control 2121.

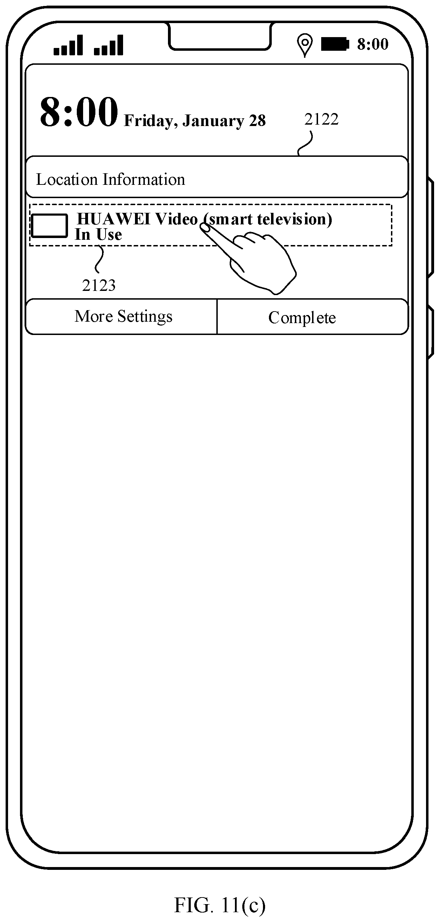

After the mobile phone 210 detects the operation, the mobile phone 210 may display a GUI shown in FIG. 11(c).

As shown in FIG. 11(c), the GUI is a display interface of the positioning function setting bar. The positioning function setting bar may include a title bar 2122 and at least one display bar 2123. For example, the title bar 2122 may display text information "Location Information". The display bar 2123 may display: a type of a device that uses the location information of the user (the outline of the smart television), an identifier of the device that uses the location information of the user (the smart television), and an identifier of HUAWEI Video. Optionally, the positioning function setting bar may further include other content. This is not limited in embodiments of this application.

Second, as shown in FIG. 11(c), the user performs an operation of tapping the display bar 2123.

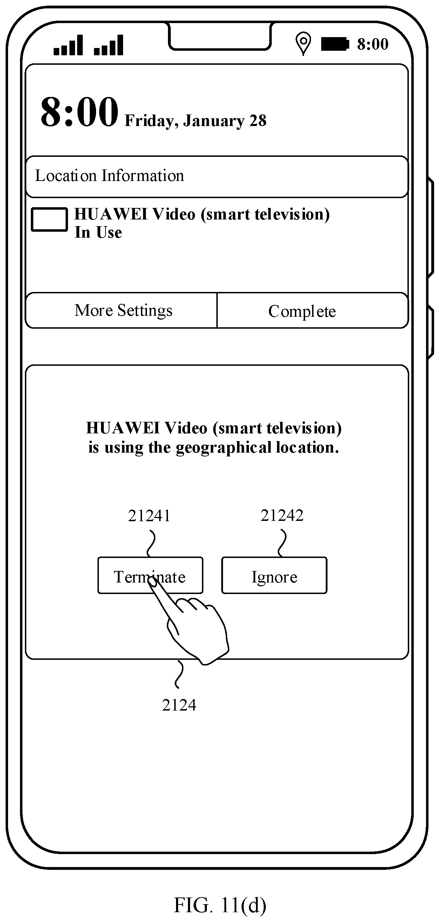

After the mobile phone 210 detects the operation, the mobile phone 210 may display a pop-up window 2124 shown in FIG. 11(d).

As shown in FIG. 11(d), the pop-up window 2124 may include text information "HUAWEI Video (smart television) is using a geographical location." and a terminate control 21241 used to terminate use of the location information of the user by HUAWEI Video (smart television). Optionally, the pop-up window 2124 may further include an ignore control 21242 used to ignore use of the location information of the user by HUAWEI Video (smart television).

Optionally, the pop-up window 2124 may further specifically show that an app of a specific device uses location information of a specific device. For example, the pop-up window 2124 may include text information "HUAWEI Video (smart television) is using the location information of the user (smart television)."

Finally, as shown in FIG. 11(d), the user performs an operation of tapping a terminate control 21241.

When the mobile phone 210 detects the operation of tapping the terminate control 21241 by the user, it is considered that the mobile phone 210 detects that the user wants to terminate use of the location information of the user by HUAWEI Video of the smart television 220.

It should be noted that, in this case, if the user does not want to terminate use of the location information of the user by HUAWEI Video of the smart television 220, the user may tap an ignore control 21242. When the mobile phone 210 detects an operation of tapping the ignore control 21242 by the user, it is considered that the mobile phone 210 detects an operation indicating that the user does not want to terminate use of the location information of the user by HUAWEI Video of the smart television 220. In this case, the mobile phone 210 and the smart television 220 may not need to perform any operation.

On the group of GUIs shown in FIG. 11(a) to FIG. 11(d) provided in this embodiment of this application, the mobile phone 210 may remind, by using the status bar, the user that HUAWEI Video running in a foreground of the smart television 220 uses the location information of the user through the positioning apparatus without the user's knowledge. In addition, the user may terminate, by using the control bar, use of the location information of the user by HUAWEI Video of the smart television 220, so that leakage of privacy information (for example, the location information) of the user can be avoided, and user experience is improved.

FIG. 12(a) to FIG. 12(c) show another group of GUIs of the mobile phone 210 according to an embodiment of this application.

As shown in FIG. 12(a), the mobile phone 210 displays a desktop of the mobile phone. The desktop of the mobile phone includes icons of a plurality of apps, and the plurality of applications include Clock, Calendar, Gallery, Notepad, AppGallery, and the like.

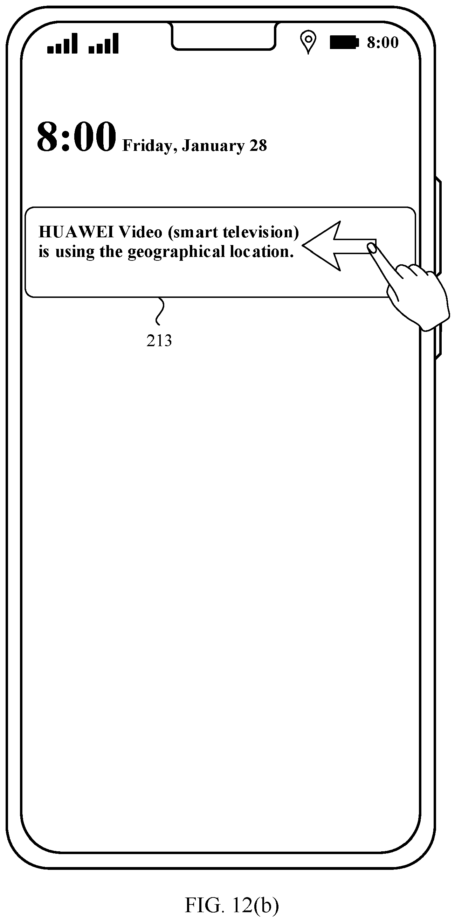

After the mobile phone 210 detects an operation of viewing the notification bar by the user, the mobile phone 210 may display a GUI shown in FIG. 12(b).

For example, the operation of viewing the notification bar by the user may be an operation of sliding down along a left side of a status bar 101 of the mobile phone 210 by the user shown in FIG. 12(a).

As shown in FIG. 12(b), the GUI is a display interface on which the notification bar is displayed. The notification bar may include one or more notification messages. For example, as shown in FIG. 12(b), the notification bar includes a notification message 213 and the like, and the notification message 213 includes text information "HUAWEI Video (smart television) is using a geographical location." Optionally, the notification bar may further include other content. This is not limited in embodiments of this application.

Optionally, the notification message 213 may further specifically show that an app of a specific device uses location information of a specific device. For example, the notification message 213 may include text information "HUAWEI Video (smart television) is using the location information of the user (smart television)."

After the mobile phone 210 detects an operation indicating that the user wants to terminate use of the location information of the user by HUAWEI Video of the smart television 220, the mobile phone 210 may send second indication information to the smart television 220. For related descriptions of the second indication information, refer to the foregoing related descriptions. Details are not described herein again.

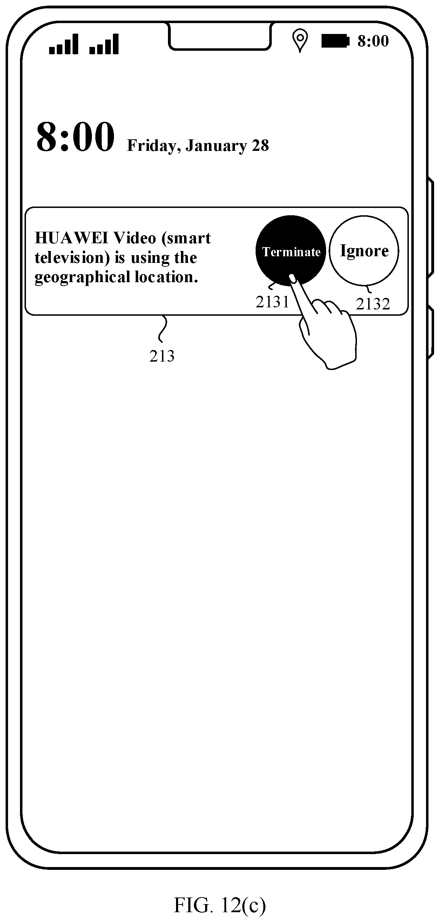

For example, the operation of terminating, by the user, use of the location information of the user by HUAWEI Video of the smart television 220 may include a series of operations in FIG. 12(b) and FIG. 12(c).

Specifically, first, as shown in FIG. 12(b), the user performs a right-to-left slide operation on the notification message 213.

After the mobile phone 210 detects the operation, the mobile phone 210 may display a GUI shown in FIG. 12(c).

As shown in FIG. 12(c), a terminate control 2131 used to terminate use of the location information of the user by HUAWEI Video of the smart television 220 may be further displayed on the notification message 213. Optionally, an ignore control 2132 used to ignore use of the location information of the user by HUAWEI Video of the smart television 220 may be further displayed in the notification message 213. This is not limited in embodiments of this application.

Then, as shown in FIG. 12(c), the user performs an operation of tapping the terminate control 2131.

When the mobile phone 210 detects the operation of tapping the terminate control 2131 by the user, it is considered that the mobile phone 210 detects that the user wants to terminate use of the location information of the user by HUAWEI Video of the smart television 220.

It should be noted that, in this case, if the user does not want to terminate use of the location information of the user by HUAWEI Video of the smart television 220, the user may tap an ignore control 2132. When the mobile phone 210 detects an operation of tapping the ignore control 2132 by the user, it is considered that the mobile phone 210 detects an operation indicating that the user does not want to terminate use of the location information of the user by HUAWEI Video of the smart television 220. In this case, the mobile phone 210 and the smart television 220 may not need to perform any operation.

On the group of GUIs shown in FIG. 12(a) to FIG. 12(c) provided in this embodiment of this application, the mobile phone 210 may remind, by using the status bar, the user that HUAWEI Video running in a foreground of the smart television 220 uses the location information of the user through the positioning apparatus without the user's knowledge. In addition, the user may terminate, by using the notification bar, use of the location information of the user by HUAWEI Video of the smart television 220, so that leakage of privacy information (for example, the location information) of the user can be avoided, and user experience is improved.

FIG. 13(a) to FIG. 13(c) show another group of GUIs of the mobile phone 210 according to an embodiment of this application.

As shown in FIG. 13(a), the mobile phone 210 displays a desktop of the mobile phone. The desktop of the mobile phone includes icons of a plurality of apps, and the plurality of applications include Clock, Calendar, Gallery, Notepad, AppGallery, and the like.

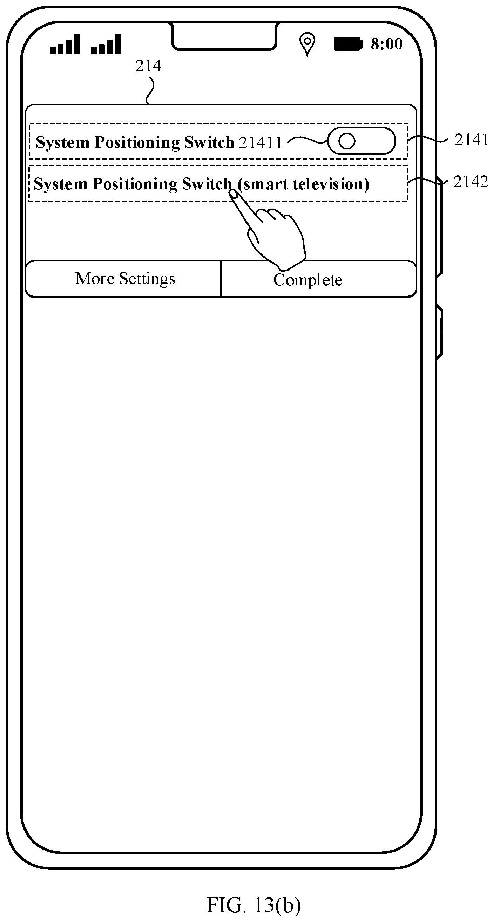

After the mobile phone 210 detects an operation of viewing a positioning function setting bar by the user, the mobile phone 210 may display a GUI shown in FIG. 13(b).

For example, the operation of viewing the positioning function setting bar by the user may be an operation of tapping the location indicator 2111 by the user shown in FIG. 13(a).

As shown in FIG. 13(b), the GUI is a display interface of the positioning function setting bar. The positioning function setting bar may include a positioning switch option title bar 2141 and at least one display bar 2142.

For example, as shown in FIG. 13(b), text information of "System Positioning Switch" and a positioning switch control 21411 may be displayed in the positioning switch option title bar 2141.

In this case, if the positioning function of the mobile phone 210 is currently not enabled, the positioning switch control 21411 is in a disabled state.

In addition, because the mobile phone 210 receives the first indication information sent by the smart television 220, the mobile phone 210 may remind, at the location control 2121, the user that HUAWEI Video of the smart television 220 uses the location information of the user. For example, as shown in FIG. 13(b), text information "System Positioning Switch (smart television)" may be displayed in the display bar 2142. The text information may be understood as that the system positioning switch of the smart television is in an on state.

Optionally, the positioning function setting bar may further include other content. This is not limited in embodiments of this application.

After the mobile phone 210 detects an operation indicating that the user wants to terminate use of the location information of the user by HUAWEI Video of the smart television 220, the mobile phone 210 may send second indication information to the smart television 220. For related descriptions of the second indication information, refer to the foregoing related descriptions. Details are not described herein again.

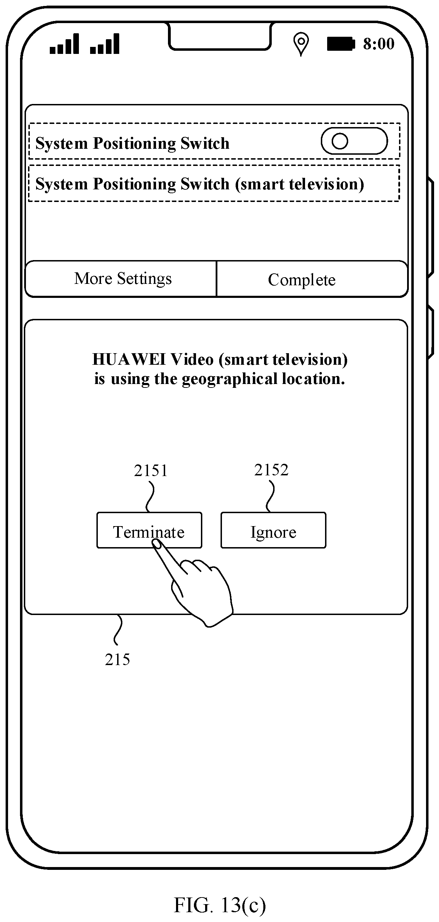

For example, the operation of terminating, by the user, use of the location information of the user by HUAWEI Video of the smart television 220 may include a series of operations in FIG. 13(b) and FIG. 13(c).

Specifically, first, as shown in FIG. 13(b), the user performs an operation of tapping the display bar 2142.

After the mobile phone 210 detects the operation, the mobile phone 210 may display a pop-up window 215 shown in FIG. 13(c).

As shown in FIG. 13(c), the pop-up window 215 may include text information "HUAWEI Video (smart television) is using a geographical location." and a terminate control 2151 used to terminate use of the location information of the user by HUAWEI Video (smart television). Optionally, the pop-up window 215 may further include an ignore control 2152 used to ignore use of the location information of the user by HUAWEI Video (smart television).

Optionally, the pop-up window 215 may further specifically show that an app of a specific device uses location information of a specific device. For example, the pop-up window 215 may include text information "HUAWEI Video (smart television) is using the location information of the user (smart television)."

Then, as shown in FIG. 13(c), the user performs an operation of tapping the terminate control 2151.

When the mobile phone 210 detects the operation of tapping the terminate control 2151 by the user, it is considered that the mobile phone 210 detects that the user wants to terminate use of the location information of the user by HUAWEI Video of the smart television 220.

It should be noted that, in this case, if the user does not want to terminate use of the location information of the user by HUAWEI Video of the smart television 220, the user may tap an ignore control 2152. When the mobile phone 210 detects an operation of tapping the ignore control 2152 by the user, it is considered that the mobile phone 210 detects an operation indicating that the user does not want to terminate use of the location information of the user by HUAWEI Video of the smart television 220. In this case, the mobile phone 210 and the smart television 220 may not need to perform any operation.

On the group of GUIs shown in FIG. 13(a) to FIG. 13(c) provided in this embodiment of this application, the mobile phone 210 may remind, by using the status bar, the user that HUAWEI Video running in a foreground of the smart television 220 uses the location information of the user through the positioning apparatus without the user's knowledge. In addition, the user may terminate, by using the positioning function setting bar, use of the location information of the user by HUAWEI Video of the smart television 220, so that leakage of privacy information (for example, the location information) of the user can be avoided, and user experience is improved.

FIG. 14 shows another GUI of the mobile phone 210 according to an embodiment of this application.

As shown in FIG. 14, the mobile phone 210 displays not only a location indicator 2111 in a status bar 211 of the mobile phone 210 but also prompt information, to remind the user that HUAWEI Video of the smart television 220 uses location information of the user.

As shown in FIG. 14, the mobile phone 210 displays a pop-up window 216. The pop-up window 216 may include text information "HUAWEI Video (smart television) is using a geographical location." and a terminate control 2161 used to terminate use of the location information of the user by HUAWEI Video of the smart television 220. Optionally, the pop-up window 216 may further include an ignore control 2162 used to ignore use of the location information of the user by HUAWEI Video of the smart television 220.

Optionally, the pop-up window 216 may further specifically show that an app of a specific device uses location information of a specific device. For example, the pop-up window 216 may include text information "HUAWEI Video (smart television) is using the location information of the user (smart television)."

When the mobile phone 210 detects the operation of tapping the terminate control 2161 by the user, it is considered that the mobile phone 210 detects that the user wants to terminate use of the location information of the user by HUAWEI Video of the smart television 220. After the mobile phone 210 detects an operation indicating that the user wants to terminate use of the location information of the user by HUAWEI Video of the smart television 220, the mobile phone 210 may send second indication information to the smart television 220. For related descriptions of the second indication information, refer to the foregoing related descriptions. Details are not described herein again.

It should be noted that, in this case, if the user does not want to terminate use of the location information of the user by HUAWEI Video of the smart television 220, the user may tap an ignore control 2162. When the mobile phone 210 detects an operation of tapping the ignore control 2162 by the user, it is considered that the mobile phone 210 detects an operation indicating that the user does not want to terminate use of the location information of the user by HUAWEI Video of the smart television 220. In this case, the mobile phone 210 and the smart television 220 may not need to perform any operation.

On the GUI shown in FIG. 14 provided in this embodiment of this application, the mobile phone 210 may remind, by using the pop-up window, the user that HUAWEI Video running in a foreground of the smart television 220 uses the location information of the user through the positioning apparatus without the user's knowledge. In addition, the user may terminate, by using the pop-up window, use of the location information of the user by HUAWEI Video of the smart television 220, so that leakage of privacy information (for example, the location information) of the user can be avoided, and user experience is improved.

After the smart television 220 receives second indication information sent by the mobile phone 210, the smart television 220 may automatically terminate use of the location information of the user by HUAWEI Video of the smart television 220.

An operation of automatically terminating, by the smart television 220, use of the location information of the user by HUAWEI Video of the smart television 220 is not limited in embodiments of this application.

In an example, the smart television 220 may disable a positioning function to terminate use of the location information of the user by HUAWEI Video of the smart television 220. Optionally, the smart television 220 previously reminds, by using the location indicator 2211, the user that HUAWEI Video is using the location information of the user. In this case, because the positioning function of the smart television 220 is disabled, the location indicator 2211 is no longer displayed in the status bar 221 of the smart television 220.

In another example, the smart television 220 may alternatively directly terminate a process of using the location information of the user by HUAWEI Video of the smart television 220, or directly close HUAWEI Video, or directly close permission to use the positioning apparatus, to terminate use of the location information of the user by HUAWEI Video of the smart television 220.

Optionally, in some embodiments, after terminating use of the location information of the user by HUAWEI Video of the smart television 220, the smart television 220 may further send third indication information to the mobile phone 210, where the third indication information indicates that the smart television 220 has terminated use of the location information of the user by HUAWEI Video.

Optionally, in some embodiments, after the mobile phone 210 receives the third indication information, the mobile phone 210 ends a behavior of reminding, by using the mobile phone 210, the user that HUAWEI Video of the smart television 220 uses the location information of the user. For example, the mobile phone 210 previously reminds, by using the location indicator 2111, the user that HUAWEI Video of the smart television 220 uses the location information of the user. In this case, the location indicator 2111 is no longer displayed in the status bar 221 of the mobile phone 210. For another example, the mobile phone 210 previously reminds, by using the prompt information, the user that HUAWEI Video of the smart television 220 uses the location information of the user. In this case, the mobile phone 210 no longer displays the prompt information.

In some other embodiments, when the user is not in the preset range of the smart television 220, or when the user is in the preset range of the smart television 220 and the user is not a trusted user of the smart television 220, the smart television 220 may alternatively first intercept the permission for the app that plays the television series and that is on the smart television 220 to use the location information of the user. Then, the smart television 220 may send the first indication information to the mobile phone 210. The first indication information may indicate that the smart television 220 has intercepted the permission for the app that plays the television series and that is on the smart television 220 to use the location information of the user.

Optionally, in this case, the smart television 220 may also remind, by using the smart television 220, the user that the smart television 220 has intercepted the permission for HUAWEI Video of the smart television 220 to use the location information of the user. For a manner in which the smart television 220 reminds the user that HUAWEI Video of the smart television 220 is using the permission for the location information of the user, refer to the foregoing example descriptions of how the mobile phone reminds the user that the app 1 of the mobile phone has intercepted the permission for the app 1 to use the location information of the user in FIG. 7(a) and FIG. 7(b). Details are not described herein again.

In some embodiments, after the mobile phone 210 receives the first indication information, the mobile phone 210 may remind the user that the smart television 220 has intercepted the permission for HUAWEI Video of the smart television 220 to use the location information of the user.

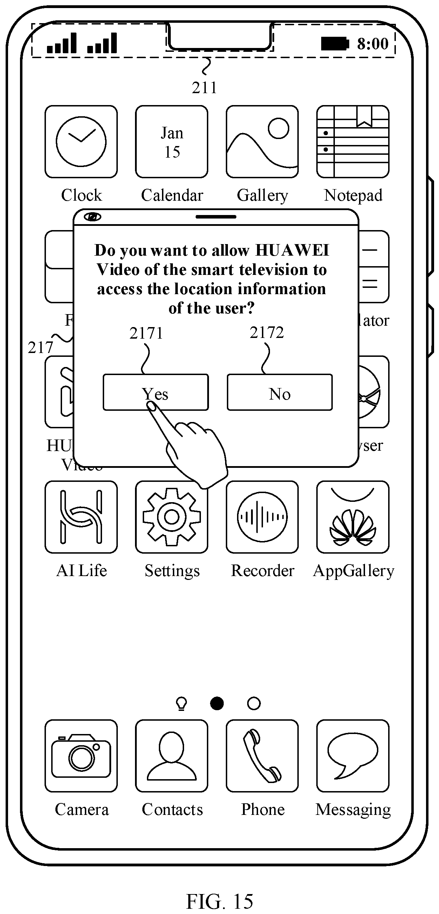

With reference to FIG. 15 to FIG. 16(b), the following describes how the mobile phone 210 reminds the user that the smart television 220 has intercepted the permission for HUAWEI Video of the smart television 220 to use the location information of the user, and how the user allows, by using the mobile phone 210, HUAWEI Video of the smart television 220 to use the location information of the user.

FIG. 15 shows a GUI of the mobile phone 210 according to an embodiment of this application.

For example, as shown in FIG. 15, the mobile phone 210 may display a pop-up window 217 on the mobile phone 210 to remind the user that the smart television 220 has intercepted the permission for HUAWEI Video of the smart television 220 to use the location information of the user.

As shown in FIG. 15, the pop-up window 217 may include text information "Do you want to allow HUAWEI Video of the smart television to use the location information of the user?" and a yes control 2171 used to permit (or allow) HUAWEI Video of the smart television to use the location information of the user. Optionally, the pop-up window 217 may further include a no control 2172 used to forbid (or not allow) HUAWEI Video of the smart television from using the location information of the user.

Optionally, the pop-up window 217 may further specifically show that an app of which specific device is allowed to use location information of which specific device. For example, the pop-up window 217 may include text information "Do you want to allow HUAWEI Video (smart television) to use the location information of the user (smart television)?"

After the mobile phone 210 detects an operation of tapping the yes control 2171 by the user, the mobile phone 210 may send second indication information to the smart television 220. The second indication information indicates to allow HUAWEI Video of the smart television to use the location information of the user.

After the smart television 220 receives the second indication information, the smart television 220 may automatically allow HUAWEI Video of the smart television to use the location information of the user. For example, the smart television 220 may automatically turn on a system positioning switch, so that HUAWEI Video uses a positioning function of the smart television 220.

It should be noted that, when the mobile phone 210 detects that the user taps the ignore control 2172 or the mobile phone 210 does not receive an indication operation within preset time, it is considered that the mobile phone 210 detects an operation indicating that the user does not want to allow HUAWEI Video of the smart television to use the location information of the user. In this case, the mobile phone 210 and the smart television 220 may not need to perform any operation.

Optionally, in some embodiments, after allowing HUAWEI Video of the smart television 220 to use the location information of the user, the smart television 220 may further send third indication information to the mobile phone 210, where the third indication information indicates that the smart television 220 has allowed HUAWEI Video to use the location information of the user.

Optionally, in some embodiments, after the mobile phone 210 receives the third indication information, the mobile phone 210 ends reminding, by using the mobile phone 210, the user that the smart television 220 has intercepted the permission for HUAWEI Video of the smart television 220 to use the location information of the user. For example, the mobile phone 210 previously reminds, by using prompt information, the user that the smart television 220 has intercepted the permission for HUAWEI Video of the smart television 220 to use the location information of the user. In this case, the mobile phone 210 no longer displays the prompt information.

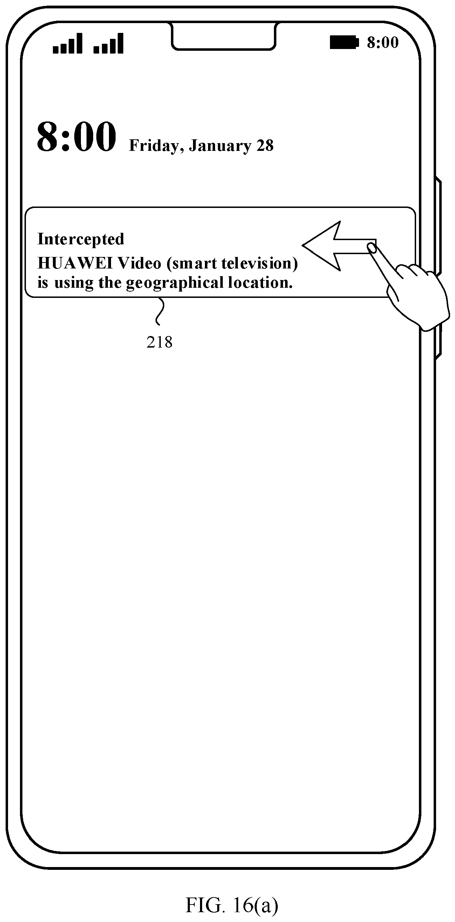

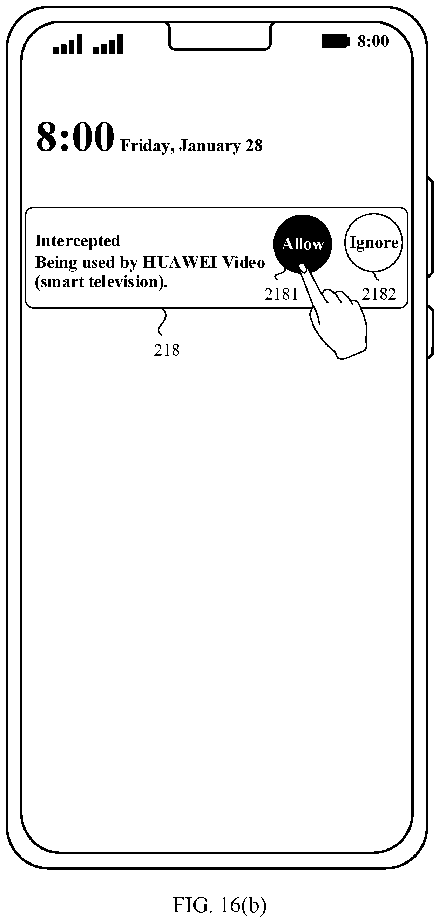

FIG. 16(a) and FIG. 16(b) show GUIs of the mobile phone 210 according to an embodiment of this application.

For example, the mobile phone 210 may display a notification message on the mobile phone 210 to remind the user that the smart television 220 has intercepted the permission for HUAWEI Video of the smart television 220 to use the location information of the user.

As shown in FIG. 16(a), the mobile phone 210 displays a display interface on which a notification bar is displayed. The notification bar may include one or more notification messages. For example, as shown in FIG. 16(a), the notification bar includes a notification message 218 and the like, and the notification message 218 includes a message title bar (for example, "Intercepted") and text information (for example, "HUAWEI Video (smart television) is using the geographical location."). Optionally, the notification bar may further include other content. This is not limited in embodiments of this application.

Optionally, the notification message 218 may further specifically show that an app of a specific device is intercepted from using location information of a specific device. For example, the notification message 218 may include text information "HUAWEI Video (smart television) is using the location information of the user (smart television)."

After the mobile phone 210 detects an operation indicating that the user wants to allow HUAWEI Video of the smart television 220 to use the location information of the user, the mobile phone 210 may send second indication information to the smart television 220. The second indication information indicates to allow HUAWEI Video of the smart television to use the location information of the user.

A specific form of the operation of allowing, by the user, HUAWEI Video of the smart television 220 to use the location information of the user is not limited in embodiments of this application.

For example, the operation of allowing, by the user, HUAWEI Video of the smart television 220 to use the location information of the user may include a series of operations shown in FIG. 16(a) and FIG. 16(b).

Specifically, first, as shown in FIG. 16(a), the user performs a right-to-left slide operation on the notification message 103.

After the mobile phone 210 detects the operation, the mobile phone 210 may display a GUI shown in FIG. 16(b).

As shown in FIG. 16(b), an allow control 2181 used to allow HUAWEI Video of the smart television 220 to use the location information of the user may be further displayed on the notification message 218. Optionally, an ignore control 2182 used to ignore the intercepted permission for HUAWEI Video of the smart television 220 to use the location information of the user may be further displayed in the notification message 218. This is not limited in embodiments of this application.

Then, as shown in FIG. 16(b), the user performs an operation of tapping the allow control 2181.

When the mobile phone 210 detects the operation of tapping the allow control 2181 by the user, it is considered that the mobile phone 210 detects that the user wants to allow HUAWEI Video of the smart television 220 to use the location information of the user.

It should be noted that, in this case, if the user does not want to allow HUAWEI Video of the smart television 220 to use the location information of the user, the user may tap the ignore control 2182. When the mobile phone 210 detects an operation of tapping the ignore control 2182 by the user, it is considered that the mobile phone 210 detects an operation indicating that the user does not want to allow HUAWEI Video of the smart television 220 to use the location information of the user. In this case, the mobile phone 210 and the smart television 220 may not need to perform any operation.

After the smart television 220 receives the second indication information, the smart television 220 may automatically allow HUAWEI Video of the smart television to use the location information of the user. For example, the smart television 220 may automatically turn on a system positioning switch, so that HUAWEI Video uses a positioning function of the smart television 220.

It should be noted that, when the mobile phone 210 detects that the user taps the ignore control 2182 or the mobile phone 210 does not receive an indication operation within preset time, it is considered that the mobile phone 210 detects an operation indicating that the user does not want to allow HUAWEI Video of the smart television to use the location information of the user. In this case, the mobile phone 210 and the smart television 220 may not need to perform any operation.

Optionally, in some embodiments, after allowing HUAWEI Video of the smart television 220 to use the location information of the user, the smart television 220 may further send third indication information to the mobile phone 210, where the third indication information indicates that the smart television 220 has allowed HUAWEI Video to use the location information of the user.

Optionally, in some embodiments, after the mobile phone 210 receives the third indication information, the mobile phone 210 ends a behavior of reminding, by using the mobile phone 210, the user that the smart television 220 has intercepted HUAWEI Video of the smart television 220 from using the location information of the user. For example, the mobile phone 210 previously reminds, by using prompt information, the user that the smart television 220 has intercepted HUAWEI Video of the smart television 220 from using the location information of the user. In this case, the mobile phone 210 no longer displays the prompt information.

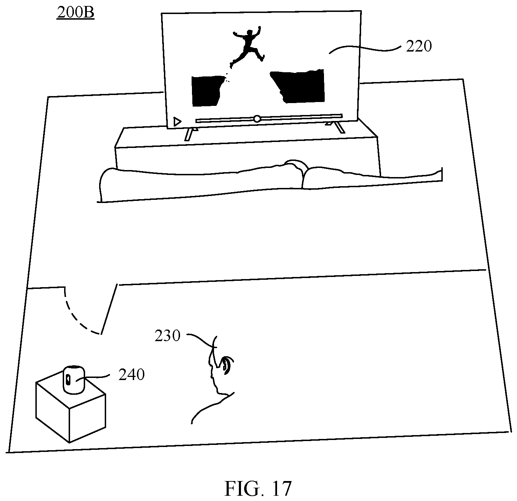

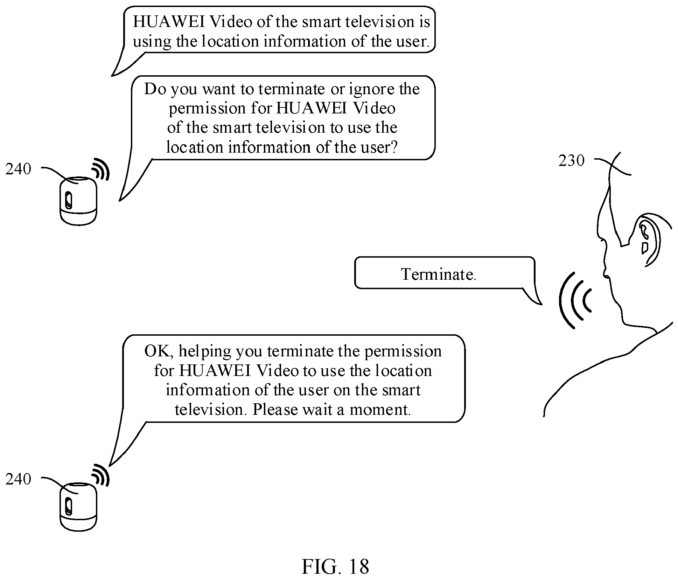

With reference to FIG. 17 and FIG. 18, the following describes, in a scenario shown in FIG. 17, how a smart television reminds a user, in a cross-device manner, that an app of the smart television is using a sensitive system capability, and how the user terminates, in a cross-device manner, use of the sensitive system capability by the app.

It should be noted that the electronic device in the scenario shown in FIG. 17 is merely an example, and should not constitute a limitation on this application. For example, more electronic devices may be further included in the scenario.

FIG. 17 is an example diagram of an application scenario 200B according to an embodiment of this application. As shown in FIG. 17, the scenario 200B may include a smart television 220 (an example of the electronic device 100), a sound box 240 (an example of the another electronic device), and a user 230. Television series played by the smart television 220 in the living room is paused. The user 230 and the sound box 240 are both in the bedroom, and the sound box 240 is in a power-on state.

An app (for example, HUAWEI Video) that plays the television series and that is on the smart television 220 is using location information of the user without the user's knowledge.

In this case, optionally, in some embodiments, the smart television 220 may first determine whether the user is in a preset range of the smart television 220, and then use a corresponding reminding measure based on a determining result.

When the user is in the preset range of the smart television 220, for an operation of the smart television 220, refer to the foregoing related descriptions. Details are not described herein again.

In some embodiments, when the user is not in the preset range of the smart television 220, or when the user is in the preset range of the smart television 220 and the user is not a trusted user of the smart television 220, the smart television 220 may send first indication information to the sound box 240. The first indication information may indicate that HUAWEI Video of the smart television 220 is using the location information of the user.

Optionally, in this case, the smart television 220 may also remind, by using the smart television 220, the user that HUAWEI Video of the smart television 220 is using the location information of the user. For a manner of reminding, by the smart television 220, the user that HUAWEI Video of the smart television 220 is using the location information of the user, refer to the related descriptions of the foregoing example in FIG. 9. Details are not described herein again.

After the sound box 240 receives the first indication information, the sound box 240 may remind the user that HUAWEI Video of the smart television 220 is using the location information of the user.

In some embodiments, the sound box 240 may remind, through voice playing, the user that HUAWEI Video of the smart television 220 is using the location information of the user.

For example, as shown in FIG. 18, the sound box 240 may play a voice message "HUAWEI Video of the smart television is using the location information of the user." For another example, the sound box 240 may play a voice message "HUAWEI Video of the smart television is using the location information of the user of the smart television."

Optionally, further, the sound box 240 may remind, through voice playing, the user whether to terminate or ignore use of the location information of the user by HUAWEI Video of the smart television 220.

It should be noted that, the sound box 240 may periodically remind, through voice playing, the user whether to terminate or ignore the permission for HUAWEI Video of the smart television 220 to use the location information of the user, until the sound box 240 receives a further indication. This is not limited in this application.

For example, as shown in FIG. 18, the sound box 240 plays a voice message "Do you want to terminate or ignore the permission for HUAWEI Video of the smart television to use the location information of the user?" For another example, the sound box 240 may play a voice message "Do you want to terminate or ignore use of the location information of the user of the smart television by HUAWEI Video of the smart television?"

After the sound box 240 detects an operation indicating that the user does not want to terminate the permission for HUAWEI Video of the smart television 220 to use the location information of the user, the sound box 240 may not perform any operation. For example, the user 230 inputs a voice message "Ignore" to the sound box 240 by using a voice. In this case, the voice message is the operation indicating that the user does not want to terminate use of the location information of the user by HUAWEI Video of the smart television 220.

After the sound box 240 detects an operation indicating that the user wants to terminate use of the location information of the user by HUAWEI Video of the smart television 220, the sound box 240 may send second indication information to the smart television 220. The second indication information indicates the smart television 220 to terminate the permission for HUAWEI Video of the smart television 220 to use the location information of the user.

For example, as shown in FIG. 18, the user 230 inputs a voice message "Terminate" to the sound box 240 by using a voice. In this case, the voice message is the operation indicating that the user wants to terminate use of the location information of the user by HUAWEI Video of the smart television 220.

It should be noted that, if the sound box 240 does not receive an indication of the user 230 within preset time, the sound box 240 considers by default that the user does not want to terminate the permission for HUAWEI Video of the smart television 220 to use the location information of the user. In this case, the sound box 240 and the smart television 220 may not perform any operation.

A specific value of the preset time is not limited in embodiments of this application.

Optionally, in some embodiments, after receiving the operation indicating that the user wants to terminate the permission for HUAWEI Video of the smart television 220 to use the location information of the user, the sound box 240 may further remind, through voice playing, the user of an indication that further processing is to be performed based on an indication of the user.

For example, as shown in FIG. 18, the sound box 240 plays a voice message "OK, helping you terminate the permission for HUAWEI Video of the smart television to use the location information of the user on the smart television. Please wait a moment."

After the smart television 220 receives second indication information sent by the sound box 240, the smart television 220 may automatically terminate use of the location information of the user by HUAWEI Video of the smart television 220.

For an operation of automatically terminating, by the smart television 220, use of the location information of the user by HUAWEI Video of the smart television 220, refer to the foregoing descriptions. Details are not described herein again.

Optionally, in some embodiments, after terminating use of the location information of the user by HUAWEI Video of the smart television 220, the smart television 220 may further send third indication information to the sound box 240, where the third indication information indicates that the smart television 220 has terminated use of the location information of the user by HUAWEI Video.

Optionally, in some embodiments, after the sound box 240 receives the third indication information, the sound box 240 ends a behavior of reminding, by using the sound box 240, the user that HUAWEI Video of the smart television 220 uses the location information of the user. For example, the sound box 240 may no longer remind, through voice playing, the user that HUAWEI Video of the smart television 220 uses the location information of the user.

In some other embodiments, when the user is not in the preset range of the smart television 220, or when the user is in the preset range of the smart television 220 and the user is not a trusted user of the smart television 220, the smart television 220 may alternatively first intercept the permission for HUAWEI Video of the smart television 220 to use the location information of the user. Then, the smart television 220 may send first indication information to the sound box 240. The first indication information may indicate that the smart television 220 has intercepted the permission for HUAWEI Video of the smart television 220 to use the location information of the user.

In some embodiments, after the sound box 240 receives the first indication information, the sound box 240 may remind the user that the smart television 220 has intercepted the permission for HUAWEI Video of the smart television 220 to use the location information of the user.

For example, the sound box 240 may play a voice message "The smart television has intercepted the permission for HUAWEI Video of the smart television to use the location information of the user. Do you want to allow HUAWEI Video of the smart television to use the location information of the user (smart television)?"

After the sound box 240 detects that the user forbids HUAWEI Video of the smart television 220 from using the location information of the user, or the sound box 240 does not receive an indication operation within preset time, the sound box 240 may not perform any operation. For example, the user 230 inputs a voice message "No" to the sound box 240 by using a voice. In this case, the voice message is the operation indicating that the user forbids HUAWEI Video of the smart television 220 from using the location information of the user.

After the sound box 240 detects an operation indicating that the user allows HUAWEI Video of the smart television 220 to use the location information of the user, the sound box 240 may send second indication information to the smart television 220. The second indication information indicates to allow HUAWEI Video of the smart television 220 to use the location information of the user.

After the smart television 220 receives the second indication information, the smart television 220 may automatically allow HUAWEI Video of the smart television to use the location information of the user. For example, the smart television 220 may automatically turn on a system positioning switch, so that HUAWEI Video uses a positioning function of the smart television 220.

Optionally, in some embodiments, after allowing HUAWEI Video of the smart television 220 to use the location information of the user, the smart television 220 may further send third indication information to the sound box 240, where the third indication information indicates that the smart television 220 has allowed HUAWEI Video to use the location information of the user.

Optionally, in some embodiments, after the sound box 240 receives the third indication information, the sound box 240 ends a behavior of reminding, by using the sound box 240, the user that the smart television 220 has intercepted HUAWEI Video of the smart television 220 from using the location information of the user. For example, the sound box 240 may no longer remind, through voice playing, the user that the smart television 220 has intercepted the permission for HUAWEI Video of the smart television 220 to use the location information of the user.

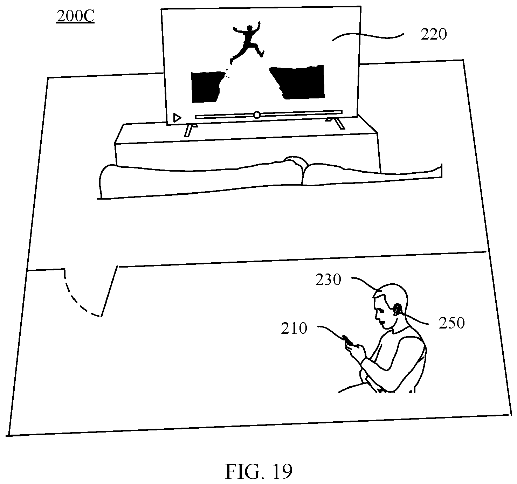

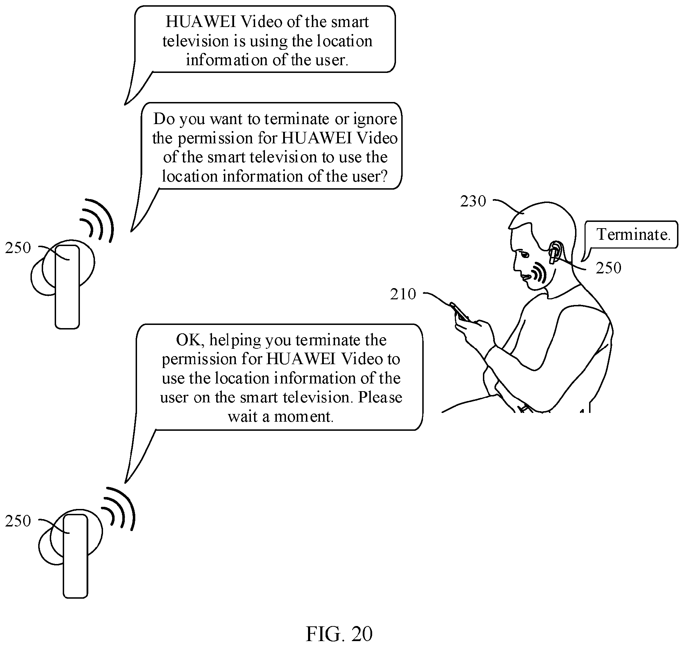

With reference to FIG. 19 and FIG. 20, the following describes, in a scenario shown in FIG. 19, how a smart television reminds a user, in a cross-device manner, that an app of the smart television is using a sensitive system capability, and how the user terminates, in a cross-device manner, use of the sensitive system capability by the app.

It should be noted that the electronic device in the scenario shown in FIG. 19 is merely an example, and should not constitute a limitation on this application. For example, more electronic devices may be further included in the scenario.

FIG. 19 is an example diagram of an application scenario 200C according to an embodiment of this application. As shown in FIG. 19, the scenario 200C may include a smart television 220 (an example of the electronic device 100), a mobile phone 210 (an example of the another electronic device), a headset 250 (another example of the another electronic device), and a user 230. Television series played by the smart television 220 in the living room is paused. The user 230 is wearing the headset 250 and using the mobile phone 210 in the bedroom, and the headset 250 is connected to the mobile phone 210.

An app (for example, HUAWEI Video) that plays the television series and that is on the smart television 220 is using location information of the user without the user's knowledge.

In this case, optionally, in some embodiments, the smart television 220 may first determine whether the user is in a preset range of the smart television 220, and then use a corresponding reminding measure based on a determining result.

When the user is in the preset range of the smart television 220, for an operation of the smart television 220, refer to the foregoing related descriptions. Details are not described herein again.

In some embodiments, when the user is not in the preset range of the smart television 220, or when the user is in the preset range of the smart television 220 and the user is not a trusted user of the smart television 220, the smart television 220 may alternatively send first indication information to the headset 250 or the mobile phone 210 based on a reminding policy. The first indication information may indicate that HUAWEI Video of the smart television 220 is using the location information of the user.

Optionally, in this case, the smart television 220 may also remind, by using the smart television 220, the user that HUAWEI Video of the smart television 220 is using the location information of the user. For a manner of reminding, by the smart television 220, the user that HUAWEI Video of the smart television 220 is using the location information of the user, refer to the related descriptions of the foregoing example in FIG. 9. Details are not described herein again.

For example, the reminding policy may be preset by the user or configured by the system.

For example, the reminding policy includes: reminding a worn electronic device (for example, a headset or a watch) that an app of the smart television is using a sensitive system capability; reminding the mobile phone that an app of the smart television is using a sensitive system capability; reminding an electronic device within a preset distance that an app of the smart television is using a sensitive system capability; reminding an electronic device operated by the user that an app of the smart television is using a sensitive system capability; reminding an electronic device in an unlocked state that an app of the smart television is using a sensitive system capability, where the electronic device is provided with a password lock; and the like.

Optionally, if the reminding policy is preset by the user, the user may further change the reminding policy by using a corresponding setting option. This is not limited in embodiments of this application.

If the reminding policy includes reminding, through a worn electronic device, the user that an app of the smart television is using a sensitive system capability, the smart television 220 sends the first indication information only to the headset 250, and does not send the first indication information to the mobile phone 210.

After the headset 250 receives the first indication information, the headset 250 may remind the user that HUAWEI Video of the smart television 220 is using the location information of the user.

For how the headset 250 reminds the user that HUAWEI Video of the smart television 220 is using the location information of the user and how the user terminates use of the location information of the user by HUAWEI Video of the smart television 220, refer to FIG. 20. These are similar to the manner in which the sound box 240 reminds that HUAWEI Video of the smart television 220 is using the location information of the user and the process in which the user terminates use of the location information of the user by HUAWEI Video of the smart television 220. Details are not described herein again.

After the sound box 240 detects an operation indicating that the user wants to terminate use of the location information of the user by HUAWEI Video of the smart television 220, the sound box 240 may send second indication information to the smart television 220. The second indication information indicates the smart television 220 to terminate use of the location information of the user by HUAWEI Video of the smart television 220.

For a step performed after the smart television 220 receives the second indication information sent by the headset 250, refer to the related descriptions of the step performed after the sound box 240 receives the first indication information. Details are not described herein again.

In some other embodiments, when the user is not in the preset range of the smart television 220, or when the user is in the preset range of the smart television 220 and the user is not a trusted user of the smart television 220, the smart television 220 may alternatively first intercept the permission for HUAWEI Video of the smart television 220 to use the location information of the user. Then, the smart television 220 may send the first indication information to the headset 250 or the mobile phone 210 based on the reminding policy. The first indication information may indicate that the smart television 220 has intercepted the permission for HUAWEI Video of the smart television 220 to use the location information of the user.

If the reminding policy includes preferentially reminding, through a worn electronic device, the user that an app of the smart television is using a sensitive system capability, the smart television 220 sends the first indication information to the headset 250, and does not send the first indication information to the mobile phone 210.

For a step performed after the headset 250 receives the first indication information, refer to the related descriptions of the step performed after the sound box 240 receives the first indication information. Details are not described herein again.

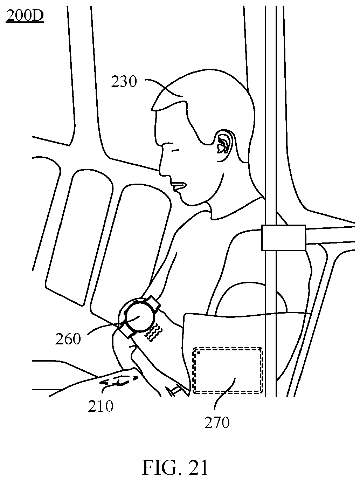

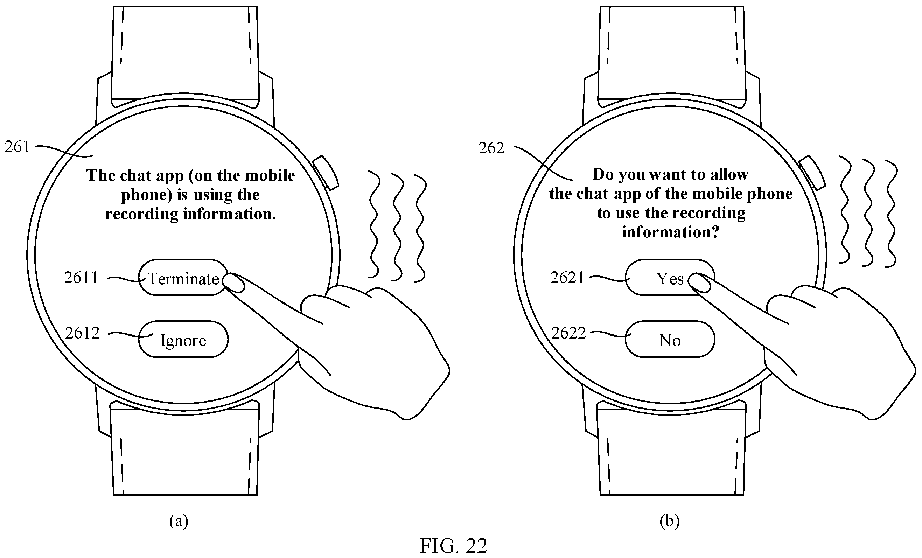

With reference to FIG. 21 and FIG. 22, the following describes, in a scenario shown in FIG. 21, how a smart television reminds a user, in a cross-device manner, that an app of the smart television is using a sensitive system capability, and how the user terminates, in a cross-device manner, use of the sensitive system capability by the app.

It should be noted that the electronic device in the scenario shown in FIG. 21 is merely an example, and should not constitute a limitation on this application. For example, more electronic devices may be further included in the scenario.

FIG. 21 is an example diagram of an application scenario 200D according to an embodiment of this application. As shown in FIG. 21, the scenario 200D may include a mobile phone 210 (an example of the electronic device 100), a smart watch 260 (an example of the another electronic device), a tablet 270 (another example of the another electronic device), and a user 230. The user 230 is sleeping on a bus, the user 230 wears the smart watch 260 on a wrist, the mobile phone 210 is inside a trousers pocket of the user 230, and the tablet 270 is inside a backpack of the user 230.

A chat app of the mobile phone 210 is running in a background and is using an audio module of the mobile phone 210 without the user's knowledge. In other words, the chat app is using a recording function provided by the audio module of the mobile phone 210 to obtain recording information of the user.

In this case, optionally, in some embodiments, the mobile phone 210 may first determine whether the user is in a preset range of the mobile phone 210, and then use a corresponding reminding measure based on a determining result.

When the user is in the preset range of the mobile phone 210, for an operation of the mobile phone 210, refer to the foregoing related descriptions of the operation performed when the user is in the preset range of the smart television 220. Details are not described herein again.

In some embodiments, when the user is not in the preset range of the mobile phone 210, or when the user is in the preset range of the mobile phone 210 and the user is not a trusted user of the mobile phone 210, the mobile phone 210 may send first indication information to the smart watch 260 or the tablet 270 based on a reminding policy. The first indication information may indicate that the chat app is using the recording information of the user.

Optionally, in this case, the mobile phone 210 may also remind, by using the mobile phone 210, the user that the chat app is using the recording information of the user. For a related manner in which the mobile phone 210 reminds the user that the chat app is using the recording information of the user, refer to the foregoing example descriptions of the manner in which the smart television 220 reminds the user that HUAWEI Video is using the location information of the user. Details are not described herein again.

If the reminding policy includes preferentially reminding, through a worn electronic device, the user that the electronic device is using the sensitive system capability, the mobile phone 210 sends the first indication information to the smart watch 260, and does not send the first indication information to the tablet 270.

After the smart watch 260 receives the first indication information, the smart watch 260 may remind the user that the chat app is using the recording information of the user.

In some embodiments, the smart watch 260 may remind, through vibration and information display, the user that the chat app is using the recording information of the user.

For example, as shown in (a) in FIG. 22, the smart watch 260 may vibrate while displaying an interface 261 on the smart watch 260. Text information "The chat app (mobile phone) is using the recording information." and a terminate control 2611 used to terminate use of the recording information of the user by the chat app of the mobile phone may be displayed on the display interface 261. Optionally, an ignore control 2612 used to ignore use of the recording information of the user by the chat app of the mobile phone may be further displayed on the display interface 261.

Optionally, the display interface 261 may further specifically show that an app of a specific device uses location information of a specific device. For example, text information "The chat app (mobile phone) is using the recording information (mobile phone)." may be displayed on the display interface 261.

When the smart watch 260 detects an operation of tapping the terminate control 2611 by the user, it is considered that the user wants to terminate the operation of using the recording information of the user by the chat app. In this case, the smart watch 260 may send second indication information to the mobile phone 210. The second indication information indicates the mobile phone 210 to terminate use of the recording information of the user by the chat app of the mobile phone 210.

After the mobile phone 210 receives the second indication information, the mobile phone 210 may terminate use of the recording information of the user by the chat app of the mobile phone 210. For example, the mobile phone 210 may automatically disable the recording function of the mobile phone 210, to prohibit the chat app from using the recording information of the user.

When the smart watch 260 detects an operation of tapping the ignore control 2612 by the user or the smart watch 260 does not receive an indication operation within preset time, it is considered that the smart watch 260 detects an operation indicating that the user does not want to allow the chat app of the mobile phone 210 to use the recording information of the user. In this case, the smart watch 260 and the mobile phone 210 may not perform any processing.

Optionally, in some embodiments, after terminating the chat app of the mobile phone 210 to use the recording information of the user, the mobile phone 210 may further send third indication information to the smart watch 260, where the third indication information indicates that the mobile phone 210 has terminated use of the recording information of the user by the chat app of the mobile phone 210.

Optionally, in some embodiments, after the smart watch 260 receives the third indication information, the smart watch 260 ends a behavior of reminding, by using the smart watch 260, the user that the chat app of the mobile phone 210 uses the recording information of the user. For example, the mobile phone 210 previously reminds, by using prompt information, the user that the chat app of the mobile phone 210 uses the recording information of the user. In this case, the mobile phone 210 no longer displays the prompt information.

In some embodiments, when the user is not in the preset range of the mobile phone 210, the mobile phone 210 may first intercept permission for the chat app to use the recording information of the user. Then, the mobile phone 210 may send the first indication information to the smart watch 260 or the tablet 270 based on the reminding policy. The first indication information may indicate that the mobile phone 210 has intercepted the chat app from using the recording information of the user.

Optionally, in this case, the mobile phone 210 may also remind, by using the mobile phone 210, the user that the mobile phone 210 has intercepted the permission for the chat app to use the recording information of the user. For a related manner in which the mobile phone 210 reminds the user that the mobile phone 210 has intercepted the permission for the chat app to use the recording information of the user, refer to the foregoing example descriptions of the manner in which the smart television 220 reminds the user that the smart television 220 has intercepted the permission for HUAWEI Video to use the location information of the user. Details are not described herein again.

If the reminding policy includes preferentially reminding, through a worn electronic device, the user that the electronic device is using the sensitive system capability, the mobile phone 210 sends the first indication information to the smart watch 260, and does not send the first indication information to the tablet 270.

After the smart watch 260 receives the first indication information, the smart watch 260 may remind, through vibration and information display, the user that the mobile phone 210 has intercepted the permission for the chat app to use the recording information of the user.

For example, as shown in (b) in FIG. 22, the smart watch 260 may vibrate while displaying an interface 262 on the smart watch 260. Text information "Do you want to allow the chat app of the mobile phone to use the recording information?" and a yes control 2621 used to allow the chat app of the mobile phone 210 to use the recording information of the user may be displayed on the display interface 262. Optionally, a no control 2622 used to forbid the chat app of the mobile phone 210 from using the recording information of the user may be further displayed on the display interface 262.

Optionally, the display interface 262 may further specifically show that an app of which specific device is allowed to use location information of which specific device. For example, text information "Do you want to allow the chat app of the mobile phone to use the recording information (mobile phone)?" may be displayed on the display interface 262.

When the smart watch 260 detects an operation of tapping the yes control 2621 by the user, it is considered that the user allows an operation of using the recording information of the user by the chat app of the mobile phone 210. In this case, the smart watch 260 may send second indication information to the mobile phone 210. The second indication information indicates that the chat app of the mobile phone 210 is allowed to use the recording information of the user.

After the mobile phone 210 receives the second indication information, the mobile phone 210 may allow the chat app of the mobile phone 210 to use the recording information of the user. For example, the mobile phone 210 may automatically turn on a recording switch of the mobile phone 210, so that the chat app uses recording information of the user.

When the smart watch 260 detects an operation of tapping the no control 2622 by the user or the smart watch 260 does not receive an indication within preset time, it is considered that the smart watch 260 detects an operation indicating that the user does not want to allow the chat app of the mobile phone 210 to use the recording information of the user. In this case, the mobile phone 210 and the smart watch 260 may not need to perform any operation.

Optionally, in some embodiments, after allowing the chat app of the mobile phone 210 to use the recording information of the user, the mobile phone 210 may further send third indication information to the smart watch 260, where the third indication information indicates that the mobile phone 210 has allowed the chat app to use the recording information of the user.

Optionally, in some embodiments, after the smart watch 260 receives the third indication information, the smart watch 260 ends a behavior of reminding, by using the smart watch 260, the user that the mobile phone 210 has intercepted the chat app of the mobile phone 210 from using the recording information of the user. For example, the smart watch 260 previously reminds, by using prompt information, the user that the mobile phone 210 has intercepted the permission for the chat app of the mobile phone 210 to use the recording information of the user. In this case, the smart watch 260 no longer displays the prompt information.

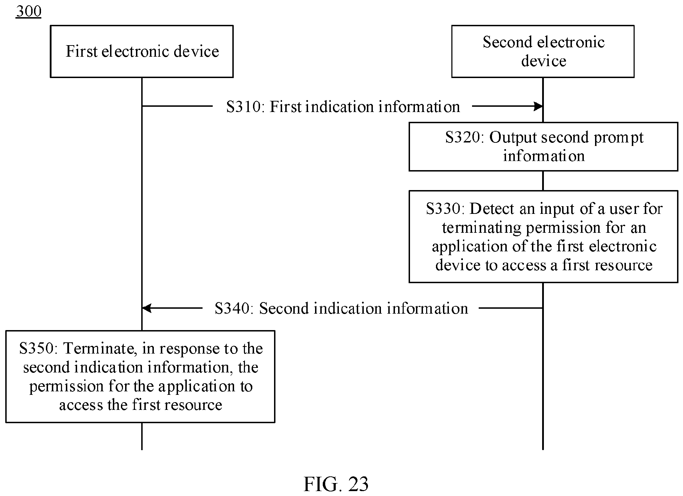

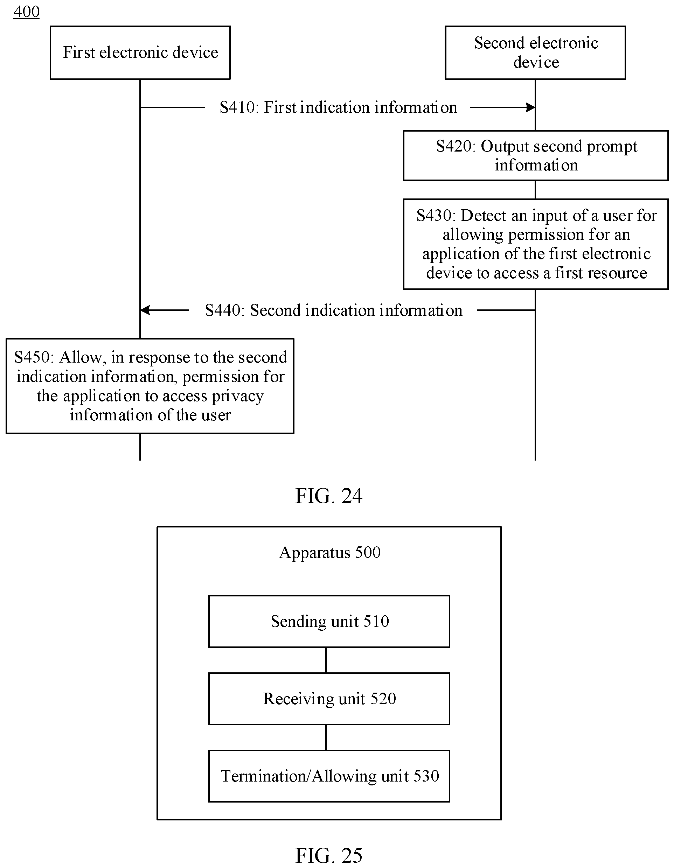

With reference to FIG. 23 and FIG. 24, the following describes a cross-device application management method according to an embodiment of this application. The method may be performed by a first electronic device and a second electronic device, and the first electronic device is connected to the second electronic device. For example, the first electronic device may be the smart television 220 in the scenario in FIG. 8, FIG. 17, FIG. 19, or FIG. 21. The second electronic device may be the mobile phone 210 in the scenario in FIG. 8, the sound box 240 in the scenario in FIG. 17, the headset 250 in the scenario in FIG. 19, or the smart watch 260 in the scenario in FIG. 21.

It should be noted that, that the first electronic device is connected to the second electronic device may be understood as that the first electronic device and the second electronic device have the foregoing trust relationship. For descriptions of the trust relationship, refer to the foregoing related descriptions. Details are not described herein again.

In addition, in FIG. 23 and FIG. 24, an example in which an application of the first electronic device is using a first resouce of the first electronic device is used.

FIG. 23 is a schematic flowchart of a cross-device application management method 300 according to an embodiment of this application. For example, as shown in FIG. 23, the method 300 includes the following steps.

S310: The first electronic device sends first indication information to the second electronic device. Correspondingly, the second electronic device receives the first indication information sent by the first electronic device.

The first indication information indicates that the application of the first electronic device is using a first resource.

A type of the first resource is not limited in embodiments of this application.

In an example, the first resource may be a hardware apparatus. For example, the first resource may include a positioning apparatus, a camera, a microphone, a memory, a flashlight, a wireless communication module, a mobile communication module, and the like.

In another example, the first resource may be information. For example, the first resource may include calls, chat messages, contacts, wireless communication data, mobile communication data, and the like.

That the application of the first electronic device uses the first resource may be understood as that the application of the first electronic device uses the first resource to obtain privacy information of a user. In other words, the application of the first electronic device accesses (or uses) the privacy information of the user. For example, the privacy information of the user may include location information of the user, recording information of the user, contact information of the user, clipboard information of the user, image information of the user, and the like.

It should be noted that the privacy information of the user may include privacy information of the user that already exists on the first electronic device. In other words, the privacy information of the user may include privacy information that has been generated by the user on the first electronic device. In addition/Alternatively, the privacy information of the user may include privacy information of the user that is being obtained by the first electronic device. In other words, the privacy information of the user may be privacy information that is being generated by the user on the first electronic device. This is not limited in embodiments of this application.

In addition, in this embodiment of this application, that the application of the first electronic device uses the first resource may be understood as that the application of the first electronic device uses the first resource to obtain privacy information of a user corresponding to the first electronic device, or the application of the first electronic device uses the first resource to obtain privacy information of a user corresponding to another electronic device (which may be the second electronic device or an electronic device other than the second electronic device).

Optionally, in some embodiments, the first electronic device responds to detecting that a preset condition is met, and the first electronic device sends the first indication information to the second electronic device.

The preset condition includes at least one of the following: A distance between the first electronic device and the second electronic device is less than or equal to a preset distance; the first electronic device and the second electronic device are logged in with a same account; the first electronic device and the second electronic device are connected to a same Wi-Fi network; a short-range connection has been established between the first electronic device and the second electronic device; the second electronic device is in a worn state; the first electronic device is in an unlocked state, and the first electronic device is provided with a password lock; the second electronic device is in an unlocked state, and the second electronic device is provided with a password lock; the first electronic device is not being operated; the application runs in a background of the first electronic device; or the application runs in a foreground of the first electronic device, and the first electronic device is not being operated.

Optionally, in some embodiments, the first electronic device may display a first indicator in a status bar of the first electronic device. The first indicator indicates the type of the first resource.

It should be noted that, optionally, in some embodiments, the first electronic device may display the first indicator in the status bar of the first electronic device only when the first electronic device uses the first resource. If the first electronic device does not use the first resource, the first electronic device does not need to display the first indicator in the status bar of the first electronic device.

A display manner of the first indicator is not limited in embodiments of this application.

For example, the first electronic device may always display the first indicator in the status bar of the first electronic device until the first electronic device receives a next indication.

For another example, the first electronic device may display the first indicator in the status bar of the first electronic device at a specific interval. In other words, the user may view that the first indicator flashes at the specific interval in the status bar of the first electronic device until the first electronic device receives a next indication.

For example, as shown in FIG. 9, the smart television 220 may display the location indicator 2211 in the status bar 221 of the smart television 220, where the location indicator 2211 indicates that the type of the first resource is a location type.

S320: The second electronic device outputs second prompt information.

The second prompt information is used to prompt the user whether to terminate use of the first resource by the application of the first electronic device.

Optionally, in some embodiments, in addition to displaying the second prompt information, the second electronic device may further display a second indicator in a status bar of the second electronic device in response to the first indication information.

It should be noted that, optionally, in some embodiments, the second electronic device may display the second indicator in the status bar of the second electronic device only after the second electronic device uses the first resource or the second electronic device receives an indication that another electronic device uses the first resource. If the second electronic device does not use the first resource or the second electronic device does not receive an indication that another electronic device uses the first resource, the first electronic device does not need to display the second indicator in the status bar of the second electronic device.

In an example, the second indicator indicates the type of the first resource.

For example, as shown in FIG. 10(a) and FIG. 10(b), the second indicator may be the location indicator 2111, and the location indicator 2111 indicates that the type of the first resource is location information.

In another example, the second indicator indicates the type of the first resource and a type identifier of the first electronic device.

For example, as shown in FIG. 10(c) and FIG. 10(d), the second indicator includes the location indicator 2111 and the identifier 2112. The location indicator 2111 indicates that the type of the first resource is location information, and the identifier 2112 indicates a type of the smart television 220.

A display manner of the second indicator is not limited in embodiments of this application.

For example, the second electronic device may always display the second indicator in the status bar of the second electronic device until the second electronic device receives a next indication.

For another example, the second electronic device may display the second indicator in the status bar of the second electronic device at a specific interval. In other words, the user may view that the second indicator flashes at the specific interval in the status bar of the second electronic device until the second electronic device receives a next indication.

Optionally, when the first electronic device displays the first indicator, the second electronic device displays the second indicator, and the second indicator indicates the type of the first resource, display effects of the first indicator and the second indicator are different.

In an example, a display location of the first indicator relative to the status bar of the first electronic device is different from a display location of the second indicator relative to the status bar of the second electronic device.

For example, the first indicator is displayed on a left side of the status bar of the first electronic device, and the second indicator is displayed on a right side of the status bar of the second electronic device.

In another example, a display color of the first indicator is different from a display color of the second indicator.

For example, the display color of the first indicator is green, and the display color of the second indicator is red.

A manner in which the second electronic device outputs the second prompt information is not limited in embodiments of this application.

In some embodiments, the second electronic device may output the second prompt information by displaying text information on the second electronic device.

For example, the text information "being used by HUAWEI Video of the smart television" is displayed on the mobile phone 210 shown in FIG. 11(b).

For another example, the text information "HUAWEI Video (smart television) is using the geographical location." is displayed on the mobile phone 210 shown in FIG. 12(b) or FIG. 14.

For another example, the text information "System Positioning Switch (smart television)" is displayed on the mobile phone 210 shown in FIG. 13(c).

For another example, the text information "The chat (App) on the mobile phone is using the recording information of the user." is displayed on the smart watch 260 shown in (a) in FIG. 22.

In this example, optionally, in some embodiments, the user may directly view the second prompt information on a display interface of the second electronic device without performing an operation on the second electronic device.

For example, the second electronic device displays a window in response to the first indication information, and the second prompt information is displayed in the window.

For example, as shown in FIG. 14, the mobile phone 210 displays the window 216 in response to the first indication information, and the text information "HUAWEI Video (smart television) is using the geographical location." is displayed in the window 216.

For another example, as shown in (a) in FIG. 22, the smart watch 260 displays the window 216 in response to the first indication information, and the text information "The chat (App) on the mobile phone is using the recording information of the user." is displayed in the window 216.

In this example, optionally, in some other embodiments, the user can view the second prompt information on a display interface of the second electronic device only after performing some operations.

In an example, the second prompt information is displayed in a control bar.

If the display interface of the second electronic device in this case is a display interface of the control bar, the second prompt information is displayed on the display interface.

If the display interface of the second electronic device in this case is not a display interface of the control bar, the user needs to open the control bar to view the second prompt information. In this case, S320 specifically includes: The second electronic device displays the control bar in response to detecting an operation of opening the control bar by the user, where the second prompt information is displayed in the control bar.

For example, after the user performs an operation of viewing the control bar, the user may view the text information "being used by HUAWEI Video of the smart television" displayed on the mobile phone 210 shown in FIG. 11(b).

Optionally, the control bar may further include a second control. The second control is configured to disable or enable use of a first resource whose type is the same as that of the first resource.

In another example, the second prompt information is displayed in a notification bar.

If the display interface of the second electronic device in this case is a display interface of the notification bar, the second prompt information is displayed on the display interface.

If the display interface of the second electronic device in this case is not a display interface of the notification bar, the user needs to open the notification bar to view the second prompt information. In this case, S320 specifically includes: The second electronic device displays the notification bar in response to an operation of opening the notification bar by the user, where the second prompt information is displayed in the notification bar.

For example, after the user performs an operation of viewing the notification bar, the user may view the text information "HUAWEI Video (smart television) is using the geographical location." displayed on the mobile phone 210 shown in FIG. 12(b).

Optionally, the notification bar and the control bar may be combined for display. For example, after the user slides down on the top of the screen, content of the control bar may be displayed in an upper part of the interface, and content of the notification bar may be displayed in a lower part of the interface.

In another example, the second prompt information is displayed in a positioning function setting bar. S320 specifically includes: displaying a setting bar in response to a detected operation of the user on the second indicator, where the second prompt information is displayed in the setting bar.

For example, after the user performs an operation of viewing the positioning function setting bar, the user may view the text information "System Positioning Switch (smart television)" displayed on the mobile phone 210 shown in FIG. 13(c).

In some other embodiments, the second electronic device may output the second prompt information by using a voice message.

For example, the sound box 240 shown in FIG. 18 or the headset 250 shown in FIG. 20 outputs the voice message "HUAWEI Video of the smart television is using the location information of the user."

S330: The second electronic device detects an input of the user for terminating permission for the application of the first electronic device to use the first resource.

A specific form of the input of the user for terminating the permission for the application of the first electronic device to use the first resource is not limited in embodiments of this application.

In some embodiments, the user may interact with the display interface of the second electronic device to implement the input of the user for terminating use of the first resource by the application of the first electronic device.

For example, as shown in FIG. 14, the input of the user for terminating the permission for the application of the first electronic device to use the first resource may include the operation of tapping the terminate control 2161 by the user.

Optionally, in some embodiments, the terminate control can be displayed on the display interface of the second electronic device only after the user performs some operations. In this case, the operations of the user and the operation of tapping the terminate control by the user are collectively referred to as the input of the user for terminating the permission for the application of the first electronic device to use the first resource.

In an example, S330 specifically includes: displaying a window in response to detecting an operation of the user on the second prompt information, where the window includes a terminate control, and the terminate control is used to trigger termination of the permission for the application of the first electronic device to use the first resource; and detecting an operation of the user on the terminate control.

For example, as shown in FIG. 11(a) to FIG. 11(d), the input of the user for terminating use of the first resource by the application of the first electronic device may include: an operation of tapping a button at a lower right corner of the location control 2121 by the user, an operation of tapping the display bar 2123 by the user, and an operation of tapping the terminate control 21241 by the user.

In another example, S330 specifically includes: displaying a terminate control in the notification bar in response to detecting an operation of the user on the notification bar, where the terminate control is used to trigger termination of the permission for the application of the first electronic device to use the first resource; and detecting an operation of the user on the terminate control.

For example, as shown in FIG. 12(a) to FIG. 12(c), the input of the user for terminating use of the first resource by the application of the first electronic device may include: a right-to-left slide operation of the user on the notification message 213 and an operation of tapping the terminate control 2131 by the user.

In another example, S330 specifically includes: displaying a setting bar in response to detecting an operation of the user on the second control, where detailed information of the second prompt information is displayed in the setting bar; displaying a window in response to detecting an operation of the user on the detailed information displayed in the setting bar, where the window includes a terminate control, and the terminate control is used to trigger termination of the permission for the application to use the first resource; and detecting an operation of the user on the terminate control.

For example, as shown in FIG. 13(a) to FIG. 13(c), the input of the user for terminating use of the first resource by the application of the first electronic device may include: an operation of tapping the display bar 2142 by the user and an operation of tapping the terminate control 2151 by the user.

In some other embodiments, the user may implement, by using a voice message, the input of the user for terminating the permission for the application of the first electronic device to use the first resource.

For example, as shown in FIG. 18 and FIG. 20, the input of the user for terminating the permission for the application of the first electronic device to use the first resource may be the voice message "Terminate" input by the user 230 to the sound box 240 by using a voice.

S340: The second electronic device sends second indication information to the first electronic device in response to detecting the input in S330. Correspondingly, the first electronic device receives the second indication information sent by the second electronic device.

The second indication information indicates the first electronic device to terminate the permission for the application to use the first resource.

In an example, S340 specifically includes: sending the second indication information to the first electronic device in response to detecting an operation of the user on the terminate control. In this case, it may be considered that the input of the user for terminating the permission for the application of the first electronic device to use the first resource may include the operation of tapping the terminate control by the user.

S350: The first electronic device terminates, in response to the second indication information, the permission for the application to use the first resource.

It should be noted that, if in S310, that the application of the first electronic device uses the first resource is that the application of the first electronic device uses the first resource to obtain privacy information of a user corresponding to the first electronic device, terminating the permission for the application to use the first resource is terminating permission for the application to use the first resource to obtain the privacy information of the user corresponding to the first electronic device.

If in S310, that the application of the first electronic device uses the first resource is that the application of the first electronic device uses the first resource to obtain privacy information of a user corresponding to another electronic device (which may be the second electronic device or an electronic device other than the second electronic device), terminating the permission for the application to use the first resource is terminating permission for the application to use the first resource to obtain the privacy information of the user corresponding to the another electronic device (which may be the second electronic device or an electronic device other than the second electronic device).

A time limit for terminating the permission for the application to use the first resource is not limited in embodiments of this application.

In an example, the permission for the application to use the first resource may be permanently terminated.

A specific form of permanently terminating the permission for the application to use the first resource is not limited in embodiments of this application. For example, the permission to use the first resource may be disabled in a privacy statement of the application, to permanently terminate the permission for the application to use the first resource.

In another example, the permission for the application to use the first resource may be once terminated.

A specific form of once terminating the permission for the application to use the first resource is not limited in embodiments of this application.

In an example, terminating the permission for the application to use the first resource may be directly terminating a process for the application to use the first resource. In another example, terminating the permission for the application to use the first resource may be directly closing the application.

In some embodiments, S350 specifically includes: disabling a first control in response to the second indication information, to terminate the permission for the application to use the first resource.

The first control is displayed in a control bar of the first electronic device, or the first control is displayed in a setting bar of the first electronic device.

For example, if the first resource includes a positioning apparatus, the first control may be a location indicator in the control bar or a system positioning switch in the setting bar.

It should be noted that, disabling the location indicator may be understood as adjusting a state of the location indicator to a disabled state.

Optionally, the method 300 may further include S360 and S370. S360 is performed after S350, and S370 is performed after S360. The following describes S360 and S370 in detail.

S360: The first electronic device sends third indication information to the second electronic device. Correspondingly, the second electronic device receives the third indication information sent by the first electronic device.

The third indication information indicates that the first electronic device has terminated the permission for the application to use the first resource.

S370: In response to the third indication information, the second electronic device no longer outputs the second prompt information.

In the method 300, if the application of the first electronic device uses the first resource, the first electronic device may send the first indication information to the second electronic device, so that the second electronic device may output the second prompt information to remind the user that the application of the first electronic device uses the first resource. In this way, the user may determine, by using the second electronic device, whether to terminate the permission for the application of the first electronic device to use the first resource. This avoids bringing risks to the user due to leakage of the privacy information.

FIG. 24 is a schematic flowchart of a cross-device application management method 400 according to an embodiment of this application. For example, as shown in FIG. 24, the method 400 includes the following steps.

S410: The first electronic device sends first indication information to the second electronic device. Correspondingly, the second electronic device receives the first indication information sent by the first electronic device.

The first indication information indicates that the first electronic device intercepts permission for an application of the first electronic device to use the first resource.

For descriptions of the first resource and use of the first resource by the application of the first electronic device, refer to the related descriptions in S310. Details are not described herein again.

For descriptions of intercepting, by the first electronic device, the permission for the application of the first electronic device to use the first resource, refer to the related descriptions of terminating, by the first electronic device, the permission for the application to use the first resource in S350. Details are not described herein again.

Optionally, in some embodiments, the first electronic device responds to detecting that a preset condition is met, and the first electronic device sends the first indication information to the second electronic device.

The preset condition includes at least one of the following: A distance between the first electronic device and the second electronic device is less than or equal to a preset distance; the first electronic device and the second electronic device are logged in with a same account; the first electronic device and the second electronic device are connected to a same Wi-Fi network; a short-range connection has been established between the first electronic device and the second electronic device; the second electronic device is in a worn state; the first electronic device is in an unlocked state, and the first electronic device is provided with a password lock; the second electronic device is in an unlocked state, and the second electronic device is provided with a password lock; the first electronic device is not being operated; the application runs in a background of the first electronic device; or the application runs in a foreground of the first electronic device, and the first electronic device is not being operated.

S420: The second electronic device outputs second prompt information.

The second prompt information is used to prompt a user whether to allow the permission for the application of the first electronic device to use the first resource.

A manner in which the second electronic device outputs the second prompt information is not limited in embodiments of this application.

In some embodiments, the second electronic device may output the second prompt information by displaying text information on the second electronic device.

For example, the text information "Do you want to allow HUAWEI Video of the smart television to use the location information of the user?" is displayed on the mobile phone 210 shown in FIG. 15.

For another example, the message title bar "Intercepted" and the text information "HUAWEI Video (smart television) is using the geographical location." are displayed on the mobile phone 210 shown in FIG. 16(a).

In this example, optionally, in some embodiments, the user may directly view the second prompt information on a display interface of the second electronic device without performing an operation on the second electronic device.

For example, the second electronic device displays a window in response to the first indication information, and the second prompt information is displayed in the window.

For example, as shown in FIG. 15, the mobile phone 210 displays the window 217 in response to the first indication information, and the text information "Do you want to allow HUAWEI Video of the smart television to use the location information of the user?" is displayed in the window 217.

Optionally, the window may further include an allow control. The allow control is used to allow the application of the first electronic device to use the first resource.

For example, as shown in FIG. 15, the window 217 may further include the yes control 2171.

In this example, optionally, in some other embodiments, the user can view the second prompt information on a display interface of the second electronic device only after performing some operations.

In an example, the second prompt information is displayed in a notification bar.

If the display interface of the second electronic device in this case is a display interface of the notification bar, the second prompt information is displayed on the display interface.

If the display interface of the second electronic device in this case is not a display interface of the notification bar, the user needs to open the notification bar to view the second prompt information. In this case, S420 specifically includes: The second electronic device displays the notification bar in response to detecting an operation of opening the notification bar by the user, where the second prompt information is displayed in the notification bar.

For example, after the user performs an operation of viewing the notification bar, the user may view the message title bar "Intercepted" and the text information "HUAWEI Video (smart television) is using the geographical location." displayed on the mobile phone 210 shown in FIG. 16(a).

In some other embodiments, the second electronic device may output the second prompt information by using a voice message.

S430: The second electronic device detects an input of the user for allowing the permission for the application of the first electronic device to use the first resource.

A specific form of the input of the user for allowing the permission for the application of the first electronic device to use the first resource is not limited in embodiments of this application.

In some embodiments, the user may interact with the display interface of the second electronic device to implement the input of the user for allowing the permission for the application of the first electronic device to use the first resource.

In an example, the input of the user for allowing the permission for the application of the first electronic device to use the first resource to access privacy information of the user includes an operation of the user on the allow control.

For example, as shown in FIG. 15, the input of the user for allowing the permission for the application of the first electronic device to use the first resource may be the operation of tapping the yes control 2171 (namely, an example of the allow control).

For another example, as shown in FIG. 16(b), the input of the user for allowing the permission for the application of the first electronic device to use the first resource may be the operation of tapping the allow control 2181.

Optionally, in some embodiments, the allow control can be displayed on the display interface of the second electronic device only after the user performs some operations. In this case, the operations of the user and the operation of tapping the allow control by the user are collectively referred to as the input of the user for allowing the permission for the application of the first electronic device to use the first resource.

In an example, S430 specifically includes: displaying the allow control in the notification bar in response to detecting an operation of the user on the notification bar, where the allow control is used to allow the application of the first electronic device to use the first resource; and detecting the operation of the user on the allow control.

For example, as shown in FIG. 16(a) and FIG. 16(b), the input of the user for allowing the application of the first electronic device to use the first resource may include a right-to-left slide operation of the user on the notification message 103 and an operation of tapping the allow control 2181 by the user.

In some other embodiments, the user may implement, by using a voice message, the input of the user for allowing the permission for the application of the first electronic device to use the first resource.

S440: The second electronic device sends second indication information to the first electronic device in response to detecting the input in S430. Correspondingly, the first electronic device receives the second indication information sent by the second electronic device.

The second indication information indicates to allow the permission for the application of the first electronic device to use the first resource.

In an example, S440 specifically includes: sending the second indication information to the first electronic device in response to detecting the operation of the user on the allow control. In this case, it may be considered that the input of the user for allowing the permission for the application of the first electronic device to use the first resource may include the operation of tapping the allow control by the user.

S450: The first electronic device allows, in response to the second indication information, the permission for the application to use the first resource.

It should be noted that, if in S410, the intercepted permission for the application of the first electronic device to use the first resource is permission for the application of the first electronic device to use the first resource to obtain privacy information of a user corresponding to the first electronic device, allowing the permission for the application to use the first resource is allowing the permission for the application to use the first resource to obtain the privacy information of the user corresponding to the first electronic device.

If in S410, the intercepted permission for the application of the first electronic device to use the first resource is permission for the application of the first electronic device to use the first resource to obtain privacy information of a user corresponding to another electronic device (which may be the second electronic device or an electronic device other than the second electronic device), allowing the permission for the application to use the first resource is allowing the permission for the application to use the first resource to obtain the privacy information of the user corresponding to the another electronic device (which may be the second electronic device or the electronic device other than the second electronic device).

A specific form of allowing the permission for the application to use the first resource is not limited in embodiments of this application.

A time limit for allowing the permission for the application to use the first resource is not limited in embodiments of this application.

In an example, the permission for the application to use the first resource may be permanently allowed.

A specific form of permanently allowing the permission for the application to use the first resource is not limited in embodiments of this application. For example, the permission to use the first resource may be enabled in a privacy statement of the application, to permanently allow the permission for the application to use the first resource.

In another example, the permission for the application to use the first resource may be once allowed.

A specific form of allowing termination of the permission for the application to use the first resource is not limited in embodiments of this application.

In some embodiments, S450 specifically includes: enabling a first control in response to the second indication information, to allow the permission for the application to use the first resource.

The first control is displayed in a control bar of the first electronic device, or the first control is displayed on a setting bar of the first electronic device.

For example, if the first resource includes a positioning apparatus, the first control may be a location indicator in the control bar or a system positioning switch in the setting bar.

It should be noted that enabling the location indicator may be understood as adjusting a state of the location indicator to an enabled state.

Optionally, the method 400 may further include S460 and S470. S460 is performed after S450, and S470 is performed after S460. The following describes S460 and S470 in detail.

S460: The first electronic device sends third indication information to the second electronic device. Correspondingly, the second electronic device receives the third indication information sent by the first electronic device.

The third indication information indicates that the first electronic device has allowed the permission for the application to use the first resource.

S470: In response to the third indication information, the second electronic device no longer outputs the second prompt information.

In the method 400, if the application of the first electronic device uses the first resource, the first electronic device may first intercept the permission for the application to use the first resource, and then send the first indication information to the second electronic device, so that the second electronic device may output the second prompt information to remind the user that the first electronic device has intercepted the permission for the application of the first electronic device to use the first resource. In this way, the user may determine, by using the second electronic device, whether to allow the permission for the application of the first electronic device to use the first resource. This avoids bringing risks to the user due to leakage of the privacy information of the user.

With reference to FIG. 25 to FIG. 27, the following describes a cross-device application management apparatus according to an embodiment of this application.

FIG. 25 is a block diagram of an apparatus according to an embodiment of this application.

As shown in FIG. 25, an apparatus 500 is the first electronic device in the method 300 or the method 400. The apparatus 500 is connected to a second electronic device, and the apparatus 500 includes a sending unit 510, a receiving unit 520, and a termination unit 530.

In an implementation, the sending unit 510 is configured to send first indication information to the second electronic device, where the first indication information indicates that an application of a first electronic device is using a first resource; the receiving unit 520 is configured to receive second indication information sent by the second electronic device, where the second indication information indicates the first electronic device to terminate permission for the application to use the first resource; and the termination unit 530 is configured to terminate, in response to the second indication information, the permission for the application to use the first resource.

In another implementation, the sending unit 510 is configured to send first indication information to the second electronic device, where the first indication information indicates that the first electronic device intercepts permission for an application of the first electronic device to use a first resource; the receiving unit 520 is configured to receive second indication information sent by the first electronic device, where the second indication information indicates to allow the permission for the application of the first electronic device to use the first resource; and an allowing unit 530 is configured to allow, in response to the second indication information, the permission for the application to use the first resource.

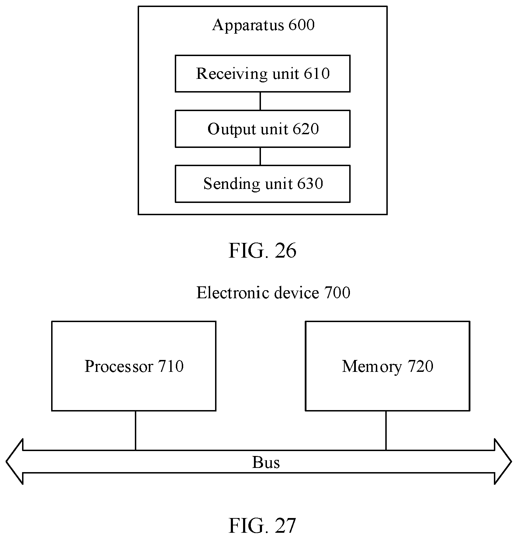

FIG. 26 is a block diagram of another apparatus according to an embodiment of this application.

As shown in FIG. 26, an apparatus 600 is the second electronic device in the method 300 or the method 400. The apparatus 600 is connected to a first electronic device, and the apparatus 600 includes a receiving unit 610, an output unit 620, a detection unit 630, and a sending unit 640.

In an implementation, the receiving unit 610 is configured to receive first indication information sent by the first electronic device, where the first indication information indicates that an application of the first electronic device is using a first resource; the output unit 620 is configured to output second prompt information, where the second prompt information is used to prompt a user whether to terminate permission for the application of the first electronic device to use the first resource; the detection unit 630 is configured to detect an input of the user for terminating use of first resource by the application of the first electronic device; and the sending unit 640 is configured to send second indication information to the first electronic device in response to detecting the input, where the second indication information indicates the first electronic device to terminate the permission for the application to use the first resource.

In another implementation, the receiving unit 610 is configured to receive first indication information sent by the first electronic device, where the first indication information indicates that the first electronic device intercepts permission for an application of the first electronic device to use a first resource; the output unit 620 is configured to output second prompt information, where the second prompt information is used to prompt a user whether to allow the permission for the application of the first electronic device to use the first resource; the detection unit 630 is configured to detect an input of the user for allowing the permission for the application of the first electronic device to use the first resource; and the sending unit 640 is configured to send second indication information to the first electronic device in response to detecting the input, where the second indication information indicates to allow the permission for the application of the first electronic device to use the first resource.

FIG. 27 is a diagram of a structure of an electronic device 700 according to an embodiment of this application.

As shown in FIG. 27, the electronic device includes one or more processors 710 and one or more memories 720. The one or more memories 720 store one or more computer programs, and the one or more computer programs include instructions. When the instructions are run by the one or more processors 710, the first electronic device or the second electronic device is enabled to perform the technical solutions in the foregoing embodiments.

An embodiment of this application provides a system, including a first electronic device and a second electronic device. The system is configured to perform the technical solutions in the foregoing embodiments. An implementation principle and technical effect thereof are similar to those of the foregoing method-related embodiments. Details are not described herein again.

An embodiment of this application provides a computer program product. When the computer program product runs on a first electronic device, the first electronic device is enabled to perform the technical solutions in the foregoing embodiments. An implementation principle and technical effect thereof are similar to those of the foregoing method-related embodiments. Details are not described herein again.

An embodiment of this application provides a computer program product. When the computer program product runs on a second electronic device, the second electronic device is enabled to perform the technical solutions in the foregoing embodiments. An implementation principle and technical effect thereof are similar to those of the foregoing method-related embodiments. Details are not described herein again.

An embodiment of this application provides a readable storage medium. The readable storage medium includes instructions. When the instructions are run on a first electronic device, the first electronic device is enabled to perform the technical solutions in the foregoing embodiments. An implementation principle and technical effect thereof are similar. Details are not described herein again.

An embodiment of this application provides a readable storage medium. The readable storage medium includes instructions. When the instructions are run on a second electronic device, the second electronic device is enabled to perform the technical solutions in the foregoing embodiments. An implementation principle and technical effect thereof are similar. Details are not described herein again.

An embodiment of this application provides a chip. The chip is configured to execute instructions. When the chip runs, the technical solutions in the foregoing embodiments are performed. An implementation principle and technical effect thereof are similar. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve an objective of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system, wherein the system comprises a first electronic device and a second electronic device;
the first electronic device is configured to send first indication information to the second electronic device, wherein the first indication information indicates that an application of the first electronic device is using a first resource;
the second electronic device is configured to output second prompt information, wherein the second prompt information is used to prompt a user whether to terminate permission for the application of the first electronic device to use the first resource;
the second electronic device is further configured to detect an input of the user for terminating the permission for the application of the first electronic device to use the first resource;
the second electronic device is further configured to send second indication information to the first electronic device in response to detecting the input, wherein the second indication information indicates the first electronic device to terminate the permission for the application to use the first resource; and
the first electronic device is further configured to terminate, in response to the second indication information, the permission for the application to use the first resource.

2. The system according to claim 1, wherein
the second electronic device is further configured to display a second indicator in a status bar of the second electronic device in response to the first indication information, wherein the second indicator indicates a type of the first resource, or the second indicator indicates a type of the first resource and a type identifier of the first electronic device.

3. The system according to claim 2, wherein
the second electronic device is further specifically configured to display a setting bar in response to detecting an operation of the user on the second indicator, wherein the second prompt information is displayed in the setting bar;
the second electronic device is further specifically configured to display a window in response to detecting an operation of the user on the second prompt information, wherein the window comprises a terminate control, and the terminate control is used to trigger termination of the permission for the application of the first electronic device to use the first resource; and
the second electronic device is further specifically configured to send the second indication information to the first electronic device in response to an operation of the user on the terminate control.

4. The system according to claim 1 or 2, wherein
the second electronic device is further specifically configured to display a terminate control in a notification bar in response to detecting an operation of the user on the notification bar, wherein the terminate control is used to trigger termination of the permission for the application of the first electronic device to use the first resource, and the second prompt information is displayed in the notification bar, and
the second electronic device is further specifically configured to send the second indication information to the first electronic device in response to detecting an operation of the user on the terminate control; or
the second electronic device is further configured to display a control bar in response to detecting an operation of opening the control bar by the user, wherein the second prompt information and a second control are displayed in the control bar, and the second control is used to disable or enable use of a first resource of a same type as the first resource,
the second electronic device is further configured to display a setting bar in response to detecting an operation of the user on the second control, wherein detailed information of the second prompt information is displayed in the setting bar,
the second electronic device is further configured to display a window in response to detecting an operation of the user on the detailed information displayed in the setting bar, wherein the window comprises a terminate control, and the terminate control is used to trigger termination of the permission for the application to use the first resource, and
the second electronic device is further specifically configured to send the second indication information to the first electronic device in response to detecting an operation of the user on the terminate control; or
the second electronic device is further specifically configured to display a window in response to the first indication information, wherein the second prompt information and a terminate control are displayed in the window, and the terminate control is used to trigger termination of the permission for the application to use the first resource, and
the second electronic device is further specifically configured to send the second indication information to the first electronic device in response to detecting an operation of the user on the terminate control.

5. The system according to any one of claims 1 to 4, wherein
the first electronic device is further configured to send third indication information to the second electronic device, wherein the third indication information indicates that the first electronic device has terminated the permission for the application to use the first resource; and
the second electronic device is further configured to: in response to the third indication information, no longer output the second prompt information.

6. The system according to any one of claims 1 to 5, wherein
the first electronic device is further configured to send the first indication information to the second electronic device in response to detecting that a preset condition is met, wherein
the preset condition comprises at least one of the following:
a distance between the first electronic device and the second electronic device is less than or equal to a preset distance;
the first electronic device and the second electronic device are logged in with a same account;
the first electronic device and the second electronic device are connected to a same Wi-Fi network;
a short-range connection has been established between the first electronic device and the second electronic device;
the second electronic device is in a worn state;
the first electronic device is in an unlocked state, and the first electronic device is provided with a password lock;
the second electronic device is in an unlocked state, and the second electronic device is provided with a password lock;
the first electronic device is not being operated;
the application runs in a background of the first electronic device; or
the application runs in a foreground of the first electronic device, and the first electronic device is not being operated.

7. The system according to any one of claims 1 to 6, wherein
the first electronic device is further specifically configured to disable a first control in response to the second indication information, to terminate the permission for the application to use the first resource, wherein the first control is displayed in a control bar of the first electronic device, or the first control is displayed in a setting bar of the first electronic device.

8. The system according to any one of claims 1 to 7, wherein
the first electronic device is further configured to display a first indicator in a status bar of the first electronic device, wherein the first indicator indicates the type of the first resource.

9. The system according to claim 8, wherein when the second indicator indicates the type of the first resource, the first indicator and the second indicator have different display effects.

10. The system according to claim 9, wherein
a display location of the first indicator relative to the status bar of the first electronic device is different from a display location of the second indicator relative to the status bar of the second electronic device; or
a display color of the first indicator is different from a display color of the second indicator.

11. The system according to any one of claims 1 to 10, wherein
the first electronic device is further specifically configured to: in response to the second indication information, permanently or once terminate the permission for the application to use the first resource.

12. A system, wherein the system comprises a first electronic device and a second electronic device;
the first electronic device is configured to send first indication information to the second electronic device, wherein the first indication information indicates that the first electronic device intercepts permission for an application of the first electronic device to use a first resource;
the second electronic device is configured to output second prompt information, wherein the second prompt information is used to prompt a user whether to allow the permission for the application of the first electronic device to use the first resource;
the second electronic device is further configured to detect an input of the user for allowing the permission for the application of the first electronic device to use the first resource;
the second electronic device is further configured to send second indication information to the first electronic device in response to detecting the input, wherein the second indication information indicates to allow the permission for the application of the first electronic device to use the first resource; and
the first electronic device is further configured to allow, in response to the second indication information, the permission for the application to use the first resource.

13. The system according to claim 12, wherein
the second electronic device is further specifically configured to display a window in response to the first indication information, wherein the second prompt information and an allow control are displayed in the window, and the allow control is used to allow the permission for the application of the first electronic device to use the first resource, and
the second electronic device is further specifically configured to send the second indication information to the first electronic device in response to detecting an operation of the user on the allow control; or
the second electronic device is further specifically configured to display an allow control in a notification bar in response to detecting an operation of the user on the notification bar, wherein the allow control is used to allow the permission for the application of the first electronic device to use the first resource, and the second prompt information is displayed in the notification bar, and
the second electronic device is further specifically configured to send the second indication information to the first electronic device in response to detecting an operation of the user on the allow control.

14. The system according to claim 12 or 13, wherein
the first electronic device is further configured to send third indication information to the second electronic device, wherein the third indication information indicates that the first electronic device has allowed the permission for the application to use the first resource; and
the second electronic device is further configured to: in response to the third indication information, no longer output the second prompt information.

15. The system according to any one of claims 12 to 14, wherein
the first electronic device is further configured to send the first indication information to the second electronic device in response to detecting that a preset condition is met, wherein
the preset condition comprises at least one of the following:
a distance between the first electronic device and the second electronic device is less than or equal to a preset distance;
the first electronic device and the second electronic device are logged in with a same account;
the first electronic device and the second electronic device are connected to a same Wi-Fi network;
a short-range connection has been established between the first electronic device and the second electronic device;
the second electronic device is in a worn state;
the first electronic device is in an unlocked state, and the first electronic device is provided with a password lock;
the second electronic device is in an unlocked state, and the second electronic device is provided with a password lock;
the first electronic device is not being operated;
the application runs in a background of the first electronic device; or
the application runs in a foreground of the first electronic device, and the first electronic device is not being operated.

16. The system according to any one of claims 12 to 15, wherein
the first electronic device is further specifically configured to enable a first control in response to the second indication information, to allow the permission for the application to use the first resource.

17. The system according to any one of claims 12 to 16, wherein
the first electronic device is further specifically configured to: in response to the second indication information, permanently or once allow the permission for the application to use the first resource.

18. A cross-device application management method, wherein the method is applied to a second electronic device, the second electronic device is connected to a first electronic device, and the method comprises:
receiving first indication information sent by the first electronic device, wherein the first indication information indicates that an application of the first electronic device is using a first resource;
outputting second prompt information, wherein the second prompt information is used to prompt a user whether to terminate permission for the application of the first electronic device to use the first resource;
detecting an input of the user for terminating use of the first resource by the application of the first electronic device; and
sending second indication information to the first electronic device in response to detecting the input, wherein the second indication information indicates the first electronic device to terminate the permission for the application to use the first resource.

19. The method according to claim 18, wherein the method further comprises:
displaying a second indicator in a status bar of the second electronic device in response to the first indication information, wherein the second indicator indicates a type of the first resource, or the second indicator indicates a type of the first resource and a type identifier of the first electronic device.

20. The method according to claim 19, wherein
the outputting second prompt information comprises:
displaying a setting bar in response to detecting an operation of the user on the second indicator, wherein the second prompt information is displayed in the setting bar; and
the detecting an input of the user for terminating use of the first resource by the application of the first electronic device comprises:
displaying a window in response to detecting an operation of the user on the second prompt information, wherein the window comprises a terminate control, and the terminate control is used to trigger termination of the permission for the application of the first electronic device to use the first resource; and
detecting an operation of the user on the terminate control.

21. The method according to claim 18 or 19, wherein
the outputting second prompt information comprises: displaying the second prompt information in a notification bar, and
the detecting an input of the user for terminating use of the first resource by the application of the first electronic device comprises:
displaying a terminate control in the notification bar in response to detecting an operation of the user on the notification bar, wherein the terminate control is used to trigger termination of the permission for the application of the first electronic device to use the first resource, and
detecting an operation of the user on the terminate control; or
the outputting second prompt information comprises:
displaying a control bar in response to detecting an operation of opening the control bar by the user, wherein the second prompt information and a second control are displayed in the control bar, and the second control is used to disable or enable use of a first resource of a same type as the first resource, and
the detecting an input of the user for terminating use of the first resource by the application of the first electronic device comprises:
displaying a setting bar in response to detecting an operation of the user on the second control, wherein detailed information of the second prompt information is displayed in the setting bar,
displaying a window in response to detecting an operation of the user on the detailed information displayed in the setting bar, wherein the window comprises a terminate control, and the terminate control is used to trigger termination of the permission for the application to use the first resource, and
detecting an operation of the user on the terminate control; or
the outputting second prompt information comprises:
displaying a window in response to the first indication information, wherein the second prompt information and a terminate control are displayed in the window, and the terminate control is used to trigger termination of the permission for the application to use the first resource, and
the detecting an input of the user for terminating use of the first resource by the application of the first electronic device comprises:
detecting an operation of the user on the terminate control.

22. The method according to any one of claims 18 to 21, wherein the method further comprises:
receiving third indication information sent by the first electronic device, wherein the third indication information indicates that the first electronic device has terminated the permission for the application to use the first resource; and
in response to the third indication information, no longer outputting the second prompt information.

23. A cross-device application management method, wherein the method is applied to a second electronic device, the second electronic device is connected to a first electronic device, and the method comprises:
receiving first indication information sent by the first electronic device, wherein the first indication information indicates that the first electronic device intercepts permission for an application of the first electronic device to use a first resource;
outputting second prompt information, wherein the second prompt information is used to prompt a user whether to allow the permission for the application of the first electronic device to use the first resource;
detecting an input of the user for allowing the permission for the application of the first electronic device to use the first resource; and
sending second indication information to the first electronic device in response to detecting the input, wherein the second indication information indicates to allow the permission for the application of the first electronic device to use the first resource.

24. The method according to claim 23, wherein
the outputting second prompt information comprises:
displaying a window in response to the first indication information, wherein the second prompt information and an allow control are displayed in the window, and the allow control is used to allow the permission for the application of the first electronic device to use the first resource, and
the detecting an input of the user for allowing the permission for the application of the first electronic device to use the first resource comprises:
detecting an operation of the user on the allow control; or
the outputting second prompt information comprises:
displaying the second prompt information in a notification bar, and
the detecting an input of the user for allowing the permission for the application of the first electronic device to use the first resource comprises:
displaying an allow control in the notification bar in response to detecting an operation of the user on the notification bar, wherein the allow control is used to allow the permission for the application of the first electronic device to use the first resource, and
detecting an operation of the user on the allow control.

25. The method according to claim 23 or 24, wherein the method further comprises:
receiving third indication information sent by the first electronic device, wherein the third indication information indicates that the first electronic device has allowed the permission for the application to use the first resource; and
in response to the third indication information, no longer outputting the second prompt information.

26. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the method according to any one of claims 18 to 25.

27. A computer storage medium, comprising computer instructions, wherein when the computer instructions are run on an electronic device, the electronic device is enabled to perform the method according to any one of claims 18 to 25.
